(19) Europäisches Patentamt
European Patent Office
Office européen des brevets

(11) **EP 2 738 634 A1**

(12) **EUROPEAN PATENT APPLICATION**
published in accordance with Art. 153(4) EPC

(43) Date of publication:
**04.06.2014 Bulletin 2014/23**

(51) Int Cl.:
***G05B 19/4103*** *(2006.01)*

(21) Application number: **12819308.3**

(22) Date of filing: **27.07.2012**

(86) International application number:
**PCT/JP2012/004802**

(87) International publication number:
**WO 2013/018340 (07.02.2013 Gazette 2013/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2011 JP 2011167230**

(71) Applicant: **Shin Nippon Koki Co., Ltd.**
**Osaka-shi**
**Osaka 541-0057 (JP)**

(72) Inventor: **Nishibashi, Nobutaka**
**Osaki-shi**
**Osaka 541-0057 (JP)**

(74) Representative: **Müller-Boré & Partner**
**Patentanwälte PartG mbB**
**Friedenheimer Brücke 21**
**80639 München (DE)**

(54) **NUMERICAL CONTROL DEVICE**

(57)    In a numerical control device, a transfer command derivation unit obtains an intervening variable corresponding to each time point at every unit time of a reference time based on an intervening variable time function, and with respect to an intervening variable within a posture adjustment interval among the obtained intervening variables of the respective time points, the transfer command derivation unit obtains a position coordinate of a tip point on a tip path corresponding to the intervening variable and a position coordinate of a midair point on a midair path corresponding to the intervening variable, adjusts the obtained position coordinate of the midair point based on posture adjustment information so that a variation in a direction of a projection tool axis vector becomes more gradual, and obtains a tool axis vector extending from the obtained tip point to the adjusted midair point, while with respect to an intervening variable outside of the posture adjustment interval among the obtained intervening variables of the respective time points, the transfer command derivation unit obtains a position coordinate of the tip point on the tip path corresponding to the intervening variable and a tool axis vector extending from the tip point toward the midair point on the midair path corresponding to the intervening variable, and sets the obtained position coordinate of the tip point and the obtained tool axis vector as the position coordinate of the tip point and the tool axis vector at each time point.

FIG.2

**Description**

Technical Field

The present invention relates to a numerical control device.

Background Art

Conventionally, various machine tools are used to machine a workpiece by numerically controlling, according to a machining program (NC program), a transfer device that moves a workpiece and a tool for machining the workpiece. As a conventional machine tool, a five-axis machine tool is known which includes a swinging device that swings a tool with respect to a central axis parallel to a specific plane on a table supporting a workpiece, a rotating device that relatively rotates the tool and the swinging device with respect to the table around an axis that is perpendicular to the specific plane, a transfer device that transfers the tool in an X axis direction on the specific plane, a transfer device that transfers the tool on the specific plane in a Y axis direction which is perpendicular to the X axis direction, and a transfer device that transfers the tool in a Z axis direction that is perpendicular to both the X axis and the Y axis. Patent Document 1 described below presents a numerical control device that numerically controls such a five-axis machine tool.

With the numerical control device disclosed in Patent Document 1, smooth machining of a workpiece is performed by obtaining a machining point curve that smoothly interpolates a locus of a machining point of a tip of the tool and a reference tool length position curve that smoothly interpolates a locus of a reference tool length position which is separated from the machining point toward a base end side of the tool by a certain distance and controlling rotation of the tool by the rotating device, swinging of the tool by the swinging device, and transfer of the tool in the X axis, Y axis, and Z axis directions by corresponding transfer devices so that the machining point of the tip of the tool travels along the machining point curve and the reference tool length position travels along the reference tool length position curve.

However, the control described above does not assume the possibility that, even when a tool axis vector extending from the machining point of the tip of the tool toward the reference tool length position varies only slightly, a direction of a projection tool axis vector that is projection of the tool axis vector on the specific plane varies significantly and, as a result, a sudden rotation of the tool and the swinging device with respect to the table may occur.

Specifically, for example, even when a tool axis vector (x, y, z) specified by a machining program varies slightly from (0.0001, 0, 1) to (0, 0.0001, 1), a direction of a projection tool axis vector varies by 90 degrees. In this case, a sudden rotation of the tool and the swinging device occurs as the rotating device rotates the tool and the swinging device by 90 degrees. Due to such a sudden rotation, a position of an actual machining point of the tool deviates from a position of the machining point that is specified by the machining program and machining accuracy of a workpiece may decline or a mechanical shock caused by the sudden rotation may be applied to the machine tool.

Patent Document 1: Japanese Patent Application Laid-open No. 2010-146176

Summary of the Invention

An object of the present invention is to prevent a relative sudden rotation of a tool and a table and suppressing a decline in machining accuracy of a workpiece and an occurrence of a mechanical shock even when a machining program includes a portion instructing a movement of a transfer object that causes a direction of a projection tool axis vector to suddenly vary.

A numerical control device according to an aspect of the present invention is a numerical control device provided in a machine tool including a plurality of transfer devices which move a transfer object which is a workpiece or a tool for machining the workpiece along a plurality of transfer axes in order to machine the workpiece and a table which supports the workpiece, the plurality of transfer devices including a swinging device which swings the tool in a direction of a swinging transfer axis which is centered on a first axis extending in a specific direction and a rotating device which relatively rotates the swinging device and the tool with respect to the table in a direction of a rotational transfer axis centered on a second axis extending in a direction which is perpendicular to the first axis, the numerical control device comprising: a storage unit which stores a machining program which instructs machining of the workpiece; a path derivation unit which reads the machining program stored in the storage unit and obtains a tip path and a midair path based on the machining program which has been read, the tip path representing a movement of a tip point of the tool during machining of the workpiece by a position coordinate of the tip point in a reference coordinate system and an intervening variable, the reference coordinate system being fixed on the table and including a specific plane perpendicular to the second axis, the intervening variable being an integrated length of a locus of a movement of the tool, the midair path representing a movement of a midair point by a position coordinate of the midair point in the reference coordinate system and the intervening variable, the midair point being a point which is separated from the tip point by a certain distance toward a base end side of the tool along an axis of the tool; a posture adjustment information derivation unit which performs obtaining, across all intervals of the tip path and the midair path, a projection tool axis vector that is a projection on the specific plane of a tool axis vector extending from the tip point on the tip path obtained by the path derivation unit toward the midair point on the midair path which corresponds to the tip point, specifying a posture adjustment location which is a location where a variation rate of a direction of the projection tool axis vector with respect to an increase of the intervening variable exceeds a certain variation rate among the tip path and the midair path, setting specific intervals before and after the specified posture adjustment location as a posture adjustment interval, and obtaining posture adjustment information for adjusting a posture of the tool in the posture adjustment interval so that a variation of the direction of the projection tool axis vector in the set posture adjustment interval becomes more gradual; an intervening variable time function derivation unit which obtains an intervening variable time function based on acceleration/deceleration conditions including an allowable acceleration of transfer of the transfer object for each transfer axis when moving the transfer object, the tip path and the midair path derived by the path derivation unit, and the posture adjustment information obtained by the posture adjustment information derivation unit, the intervening variable time function representing a variation in the intervening variable with respect to a lapse of a reference time; a transfer command derivation unit which performs obtaining a position coordinate of the tip point and the tool axis vector at each time point at every unit time of the reference time based on the tip path and the midair path derived by the path derivation unit, the intervening variable time function obtained by the intervening variable time function derivation unit, and the posture adjustment information obtained by the posture adjustment information derivation unit, obtaining a transfer amount per unit time of the transfer object in each transfer axis direction for moving the transfer object so that the tip point of the tool passes the obtained position coordinate of the tip point at each time point and that the tool axis vector of the tool matches the obtained tool axis vector at each time point, and setting the obtained transfer amount per unit time in each transfer axis direction as a transfer command in each transfer axis direction; and a control unit which outputs, to each transfer device, the transfer command in each transfer axis direction which corresponds to each transfer device among the transfer commands in the respective transfer axis directions obtained by the transfer command derivation unit to cause each transfer device to transfer the transfer object in accordance with the transfer command outputted to the transfer device, wherein: the transfer command derivation unit obtains the intervening variable corresponding to each time point based on the intervening variable time function obtained by the intervening variable time function derivation unit; with respect to an intervening variable within the posture adjustment interval among the obtained intervening variables of the respective time points, the transfer command derivation unit obtains a position coordinate of the tip point on the tip path corresponding to the intervening variable and a position coordinate of the midair point on the midair path corresponding to the intervening variable, adjusts the obtained position coordinate of the midair point based on the posture adjustment information so that a variation in the direction of the projection tool axis vector becomes more gradual, and obtains a tool axis vector extending from the obtained tip point to the adjusted midair point; while with respect to an intervening variable outside of the posture adjustment interval among the obtained intervening variables of the respective time points, the transfer command derivation unit obtains a position coordinate of the tip point on the tip path corresponding to the intervening variable and a tool axis vector extending from the tip point toward the midair point on the midair path corresponding to the intervening variable, and sets the obtained position coordinate of the tip point and the obtained tool axis vector as the position coordinate of the tip point and the tool axis vector at each time point.

Brief Description of the Drawings

[Fig. 1] Fig. 1 is a schematic perspective view of a machine tool to which a numerical control device according to an embodiment of the present invention is applied.
[Fig. 2] Fig. 2 is a functional block diagram of a numerical control device according to an embodiment of the present invention.
[Fig. 3] Fig. 3 is a flow chart showing a numerical control process by a numerical control device according to an embodiment of the present invention.
[Fig. 4] Fig. 4 is a flow chart showing a detailed process of local interpolation among the numerical control process shown in Fig. 3.
[Fig. 5] Fig. 5 is a flow chart showing a detailed process of derivation of posture adjustment information among the numerical control process shown in Fig. 3.
[Fig. 6] Fig. 6 is a flow chart showing a detailed process representing reference time derivation, pulse interpolation, and pulse output to a transfer device among the numerical control process shown in Fig. 3.
[Fig. 7] Fig. 7 is a flow chart showing a detailed process of derivation of a tool position on a path and a position coordinate newp[] on each transfer axis shown in Fig. 6.
[Fig. 8] Fig. 8 is a diagram for explaining a method of calculating a distributed interval width according to an embodiment of the present invention.

[Fig. 9] Fig. 9 is a schematic view showing a corner section that is an object of local interpolation among a tip path.

[Fig. 10] Fig. 10 is a schematic view showing an abnormal data portion that is an object of local interpolation among a tip path.

[Fig. 11] Fig. 11 is a diagram showing a case where an interval width of an interpolation block is greater than an interpolation interval width.

[Fig. 12] Fig. 12 is a diagram showing another example of a case where an interval width of an interpolation interval width is greater than an interpolation interval width.

[Fig. 13] Fig. 13 is a diagram showing a case where an interval width of an interpolation block is smaller than an interpolation interval width.

[Fig. 14] Fig. 14 is a diagram for explaining a method of deriving a tip-midair correspondence adjustment function.

[Fig. 15] Fig. 15 is a diagram showing an example in which locations where an angle formed by a tool axis vector with respect to an advancing direction of a post-local interpolation tip path increases and decreases within a short travel distance exist on the post-local interpolation tip path and a post-local interpolation midair path.

[Fig. 16] Fig. 16 is a diagram showing an example in which intervals where a locus traced by a projection tip path and a locus traced by a projection midair path are separated from one another and a variation rate of a direction of a projection tool axis vector is equal to or greater than a constant variation rate set as a parameter exist on the projection tip path and the projection midair path.

[Fig. 17] Fig. 17 is a diagram showing an example in which a projection tip path and a projection midair path intersect each other and control lines at a start point and an end point of a posture adjustment interval are not close to parallel with respect to a tangential direction of the projection tip path.

[Fig. 18] Fig. 18 is a diagram showing an example in which a projection tip path and a projection midair path intersect each other, a control line at a start point of a posture adjustment interval is not close to parallel with respect to a tangential direction of the projection tip path, and a control line at an end point of the posture adjustment interval is close to parallel with respect to the tangential direction of the projection tip path.

[Fig. 19] Fig. 19 is a diagram showing an example in which a projection tip path and a projection midair path intersect each other and control lines at a start point and an end point of a posture adjustment interval are close to parallel with respect to a tangential direction of the projection tip path.

[Fig. 20] Fig. 20 is a diagram showing an example in which a projection tip path and a projection midair path are tangential at one point and control lines at a start point and an end point of a posture adjustment interval are close to parallel with respect to a tangential direction of the projection tip path.

[Fig. 21] Fig. 21 is a diagram showing an example in which a singular point continuous interval exists within a posture adjustment interval and control lines at a start point and an end point of the posture adjustment interval are not close to parallel with respect to an advancing direction of the projection tip path.

[Fig. 22] Fig. 22 is a diagram showing an example in which a singular point continuous interval exists within a posture adjustment interval, a control line at a start point of the posture adjustment interval is not close to parallel with respect to an advancing direction of the projection tip path, and a control line at an end point of the posture adjustment interval is close to parallel with respect to the advancing direction of the projection tip path.

[Fig. 23] Fig. 23 is a diagram showing an example in which a singular point continuous interval exists within a posture adjustment interval and control lines at a start point and an end point of the posture adjustment interval are close to parallel with respect to an advancing direction of the projection tip path.

[Fig. 24] Fig. 24 is a diagram showing a stepped velocity curve and an acceleration/deceleration curve for deriving an intervening variable time function.

[Fig. 25] Fig. 25 is a diagram showing an example of a velocity curve in a case where velocity reaches a velocity upper limit value before a target point is reached.

[Fig. 26] Fig. 26 is a diagram showing another example of a velocity curve in a case where velocity reaches a velocity upper limit value before a target point is reached.

[Fig. 27] Fig. 27 is a diagram showing an example of a velocity curve in a case where a target point is reached and velocity reaches a velocity upper limit value when acceleration is being decreased according to an allowable jerk.

[Fig. 28] Fig. 28 is a diagram showing another example of a velocity curve in a case where a target point is reached and velocity reaches a velocity upper limit value when acceleration is being decreased according to an allowable jerk.

[Fig. 29] Fig. 29 is a diagram showing yet another example of a velocity curve in a case where a target point is reached and velocity reaches a velocity upper limit value when acceleration is being decreased according to an allowable jerk.

[Fig. 30] Fig. 30 is a diagram showing an example of a velocity curve in a case where velocity does not increase to a velocity upper limit value even when an intervening variable corresponding to a target point is reached.

[Fig. 31] Fig. 31 is a diagram showing an example of a velocity curve in a case where velocity exceeds a velocity upper limit value before a target point is reached.

Embodiments of the Invention

Hereinafter, an embodiment of the present invention will be described with reference to the drawings.

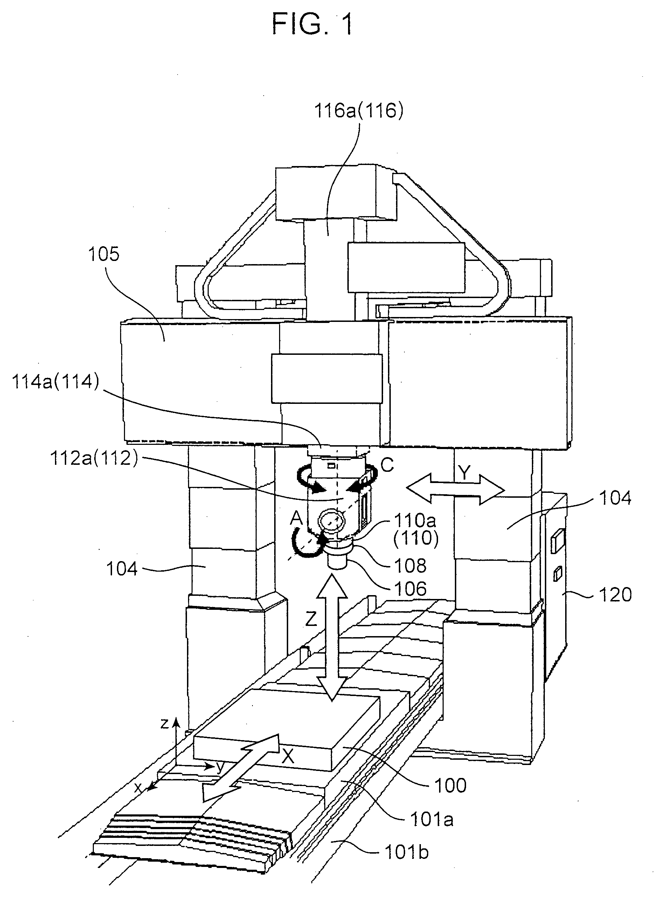

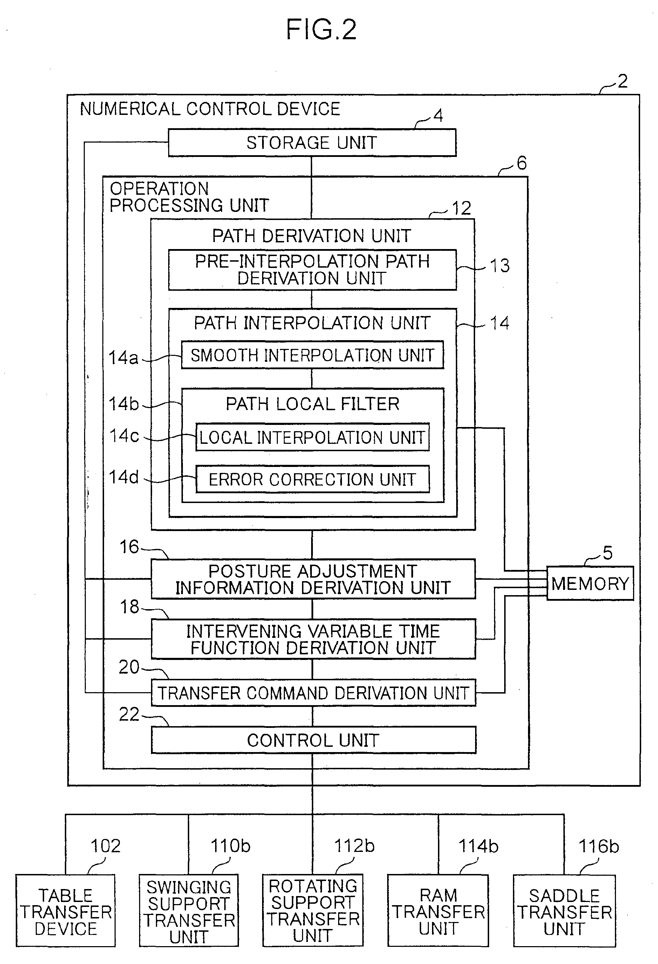

First, with reference to Figs. 1 and 2, a configuration of a machine tool to which a numerical control device 2 according to an embodiment of the present invention is applied will be described.

The machine tool is a gate-shaped machine tool for machining a workpiece 100 as a machining object that is set on a table 101a with a tool 106 by moving the tool 106 on the workpiece 100. As shown in Fig. 1, the machine tool includes a table 101a, a bed 101b, a table transfer device 102 (refer to Fig. 2), two columns 104, a cross rail 105, the tool 106, a main shaft head 108, a swinging device 110, a rotating device 112, a vertical transfer device 114, a horizontal transfer device 116, and a control box 120. Moreover, the table transfer device 102, the swinging device 110, the rotating device 112, the vertical transfer device 114, and the horizontal transfer device 116 move a transfer object that is the workpiece 100 or the tool 106 along a plurality of transfer axes in order to machine the workpiece 100 and are respectively included in a concept of a transfer device according to the present invention.

The table 101a supports the workpiece 100 set on the table 101a from below. The bed 101b is installed at a prescribed installation location and supports the table 101a from below so that the table 101 a is movable in an X axis direction that extends in a specific direction in a horizontal plane.

The table transfer device 102 is provided in the bed 101b and transfers the table 101a along the X axis in order to transfer the workpiece 100 set on the table 101a along the X axis. Moreover, the X axis is included in a concept of a transfer axis according to the present invention. The table transfer device 102 has a servomotor (not shown) as a drive source and transfers the table 101a using power generated by the motor.

The two columns 104 are erected separated from each other on both sides of the table 101a and the bed 101b in a direction perpendicular to a travel direction (X axis direction) of the table 101a (a width direction of the table 101a).

The cross rail 105 is arranged above the table 101a and is laid between the two columns 104 so as to extend in a width direction (a direction perpendicular to the X axis in a horizontal direction) of the table 101a.

The tool 106 is for cutting the workpiece 100 and is held by the main shaft head 108. The main shaft head 108 rotates the held tool 106 around the axis of the tool 106. Machining of the workpiece 100 is performed as the tool 106 being rotated by the main shaft head 108 is brought into contact with the workpiece 100.

In the present embodiment, the swinging device 110 swings the tool 106 in an A axis direction centered on an axis extending in a horizontal direction that is parallel to an upper surface of the table 101a. Moreover, the axis extending in a horizontal direction is included in a concept of a first axis according to the present invention, and the A axis is included in concepts of a transfer axis and a swinging transfer axis according to the present invention. The swinging device 110 includes a swinging support 110a and a swinging support transfer unit 110b (refer to Fig. 2). The swinging support 110a is supported by the rotating device 112 to be swingable around an axis that extends in a horizontal direction. In addition, the swinging support 110a supports the main shaft head 108 so that the main shaft head 108 assumes a posture causing a rotational axis of the tool 106 held by the main shaft head 108 to be perpendicular to an axis that is a center of swinging of the swinging support 110a. The swinging support transfer unit 110b swings the swinging support 110a in the A axis direction in order to swing, together with the swinging support 110a, the main shaft head 108 and the tool 106 in the A axis direction. The swinging support transfer unit 110b has a servomotor (not shown) as a drive source and swings the swinging support 110a using power generated by the motor.

The rotating device 112 rotates the tool 106 and the swinging device 110 relative to the table 101a in a C axis direction centered on an axis extending in a direction perpendicular to an axis that is a center of swinging of the tool 106 by the swinging device 110. Moreover, the axis that extends in a direction perpendicular to an axis that is a center of swinging of the tool 106 is included in a concept of a second axis according to the present invention, and the C axis is included in concepts of a transfer axis and a rotational transfer axis according to the present invention. The rotating device 112 includes a rotating support 112a and a rotating support transfer unit 112b (refer to Fig. 2). The rotating support 112a is supported by the vertical transfer device 114 to be rotatable around an axis perpendicular to the axis that is a center of swinging of the tool 106. In addition, the rotating support 112a supports the swinging device 110 at a lower part of the rotating support 112a. The rotating support transfer unit 112b rotates the rotating support 112a in the C axis direction in order to rotate, together with the rotating support 112a, the swinging device 110, the main shaft head 108 and the tool 106 which are supported by the rotating support 112a in the C axis direction. The rotating support transfer unit 112b has a servomotor (not shown) as a drive source and rotates the rotating support 112a using power generated by the motor.

The vertical transfer device 114 transfers the tool 106 along the Z axis that is perpendicular to the X axis and extends in a vertical direction. Moreover, the Z axis is included in a concept of a transfer axis according to the present invention. The vertical transfer device 114 includes a ram 114a and a ram transfer unit 114b (refer to Fig. 2). The ram 114a is arranged above the table 101a and is supported by the horizontal transfer device 116 to be movable in a vertical direction (upward-downward direction) along the Z axis. In addition, the ram 114a supports the rotating device 112 at a position that is above the table 101a and lower than a cross rail 105 at a lower part of the ram 114a. The ram transfer unit 114b transfers the ram 114a in the Z axis direction in order to transfer, together with the ram 114a, the rotating device 112, the swinging device 110, the main shaft head 108, and the tool 106 which are supported by the ram 114a in the Z axis direction. The ram transfer unit 114b has a servomotor (not shown) as a drive source and transfers the ram 114a using power generated by the motor.

The horizontal transfer device 116 transfers the tool 106 along the Y axis that is perpendicular to both the X axis and the Z axis. Moreover, the Y axis is included in a concept of a transfer axis according to the present invention. The horizontal transfer device 116 includes a saddle 116a and a saddle transfer unit 116b (refer to Fig. 2). The saddle 116a is supported above the table 101a by the cross rail 105 to be movable along the Y axis. In other words, the saddle 116a is movable so as to traverse the table 101a in a width direction above the table 101a. In addition, the saddle 116a supports the vertical transfer device 114 at a lower part of the saddle 116a. The saddle transfer unit 116b transfers the saddle 116a in the Y axis direction in order to transfer, together with the saddle 116a, the vertical transfer device 114, the rotating device 112, the swinging device 110, the main shaft head 108, and the tool 106 which are supported by the saddle 116a in the Y axis direction. The saddle transfer unit 116b has a servomotor (not shown) as a drive source and transfers the saddle 116b using power generated by the motor.

The control box 120 has functions for controlling operations of the table transfer device 102, the swinging device 110, the rotating device 112, the vertical transfer device 114, and the horizontal transfer device 116, controlling operations of the main shaft head 108, and controlling various other parts of the machine tool. The numerical control device 2 according to the present embodiment is built into the control box 120.

Next, a configuration of the numerical control device 2 according to the present embodiment will be described.

The numerical control device 2 according to the present embodiment numerically controls the respective transfer devices 102, 110, 112, 114, and 116 by outputting a command pulse (transfer command) for each specific period to the table transfer device 102 and the respective transfer units 110b, 112b, 114b, and 116b. As shown in Fig. 2, the numerical control device 2 includes a storage unit 4, a memory 5, and an operation processing unit 6.

The storage unit 4 stores workpiece placement information, information on a specific plane (to be described later), a machining program (an NC program), a distance parameter that is a constant value, and a transfer axis coordinate calculation function.

Workpiece placement information is information describing a position and a posture of the workpiece 100 on the table 101a. Specifically, workpiece placement information describes a relative position and inclination of a workpiece coordinate system with respect to a reference coordinate system, the workpiece coordinate system being a program coordinate system fixed on the workpiece 100 placed on the table 101a. Moreover, a reference coordinate system refers to a coordinate system which is fixed (set) on the table 101a and which acts as a reference of transfer of a transfer object. The reference coordinate system is constituted by an x axis that is parallel to a transfer direction (the X axis direction) of the table 101a in a horizontal plane, a y axis which is perpendicular to the x axis in the horizontal plane and which is parallel to the Y axis, and a z axis which is perpendicular to both the x axis and the y axis and which is parallel to the Z axis. In addition, the reference coordinate system includes a specific plane (an xy plane) that is perpendicular to an axis (an axis that is a center of the C axis direction that is a rotating direction of the tool 106) extending in a direction perpendicular to the axis that is a center of swinging of the tool 106. Furthermore, the workpiece coordinate system is constituted by an x' axis, a y' axis, and a z' axis which are perpendicular to one another.

Workpiece placement information is constituted by information on a relative position (a parallel shift amount of the workpiece coordinate system with respect to the reference coordinate system) of a workpiece coordinate system in a reference coordinate system (xyz coordinate system) and information on an inclination of the workpiece coordinate system with respect to the reference coordinate system. Specifically, workpiece placement information is expressed by a relative relationship between the workpiece coordinate system (x'y'z' coordinate system) and the reference coordinate system (xyz coordinate system) and is constituted by $(x0, y0, z0, \alpha, \beta, \gamma)$, where $(x0, y0, z0)$ denotes a coordinate value of an origin of the workpiece coordinate system in the reference coordinate system and $(\alpha, \beta, \gamma)$ denotes an Euler angle representing a posture of rotation of the workpiece coordinate system with respect to the reference coordinate system. The workpiece placement information is inputted using an input device (not shown) when placing the workpiece 100 on the table 101a and is stored in the storage unit 4.

The machining program is a machining command for instructing machining of the workpiece 100. The machining program includes a tool path in the workpiece coordinate system. A tool path represents a locus of a movement of the tool 106 in accordance with a lapse of reference time during machining of the workpiece 100. The tool path includes position coordinates of a large number of command points which a tip of the tool 106 passes during machining of the workpiece 100, information on a tool axis vector that defines a posture (an inclination) of the tool 106 at each command point, and a feed speed command indicating a speed along a movement locus of the tool 106, the position coordinates being coordinates in the workpiece coordinate system. In addition, the movement locus of the tool represented by the tool path constitutes a ruled surface which connects adjacent command points among the large number of command points included in the tool path and which satisfies an inclination of the tool axis vector at each command point.

The distance parameter is a control parameter representing a distance of separation between a tip point of the tool 106 and a midair point (to be described later) corresponding to the tip point.

The transfer axis coordinate calculation function is a function that defines a relationship between a position coordinate of a tip point in the reference coordinate system corresponding to an arbitrary intervening variable, a tool axis vector which corresponds to the arbitrary intervening variable and which originates at the tip point, and each transfer axis coordinate. The transfer axis coordinate calculation function is a function for calculating a position coordinate at which each of the transfer devices 102, 110, 112, 114, and 116 arranges the transfer object in a corresponding transfer axis direction to have the tool 106 assume a position and a posture which cause the tip point of the tool 106 to be positioned at a prescribed position coordinate and the tool axis vector of the tool 106 to assume a prescribed tool axis vector.

In addition, the storage unit 4 stores acceleration/deceleration conditions when moving the transfer object during machining of the workpiece 100 and other setting values (parameters). Examples of acceleration/deceleration conditions include an allowable velocity, an allowable acceleration, and an allowable jerk which are set for each transfer axis direction when each of the transfer devices 102, 110, 112, 114, and 116 transfers the transfer object, an allowable velocity, an allowable acceleration, and an allowable jerk of travel including a posture variation of the tool 106 with respect to the workpiece 100, and an upper limit value of velocity of an intervening variable that is an integrated value of travel amounts including a posture variation of the tool 106, an upper limit value of acceleration of the intervening variable, and an upper limit value of jerk of the intervening variable. Moreover, the intervening variable is an integrated value of travel amounts including a posture variation of the tool 106. Specifically, the intervening variable is an integrated value of a value obtained by adding a variation of a posture (an incline) of the tool 106 to a travel amount of a tip point of the tool 106. In the present embodiment, the intervening variable is constituted by an average value of a travel amount of the tip point of the tool 106 and a travel amount of a midair point that is separated from the tip point along an axis of the tool 106 by the distance parameter toward a base end side of the tool 106.

The memory 5 temporarily stores various types of information and stores, for example, a post-local interpolation tip path (to be described later), posture adjustment information, and other types of information.

The operation processing unit 6 performs various operation processing and includes, as functional blocks, a path derivation unit 12, a posture adjustment information derivation unit 16, an intervening variable time function derivation unit 18, a transfer command derivation unit 20, and a control unit 22.

The path derivation unit 12 reads the machining program stored in the storage unit 4 and obtains a tip path and a midair path of the tool 106 based on the read machining program. A tip path represents a movement of a tip point of the tool 106 during machining of the workpiece 100 by a function of a position coordinate of the tip point in the reference coordinate system and the intervening variable, and a midair path represents a movement of a midair point of the tool 106 during machining of the workpiece 100 by a function of a position coordinate of the midair point in the reference coordinate system and the intervening variable. The path derivation unit 12 includes a pre-interpolation path derivation unit 13 and a path interpolation unit 14 as functional blocks.

The pre-interpolation path derivation unit 13 calculates a pre-interpolation tip path and a pre-interpolation midair path from a tool path included in the machining program. Specifically, from the machining program read from the storage unit 4, the pre-interpolation path derivation unit 13 reads a tool path in the workpiece coordinate system (a workpiece coordinate system tool path) included in the machining program. In addition, based on the workpiece placement information stored in the storage unit 4, the pre-interpolation path derivation unit 13 transforms the read workpiece coordinate system tool path into a tool path in the reference coordinate system (a reference coordinate system tool path), and calculates a pre-interpolation tip path and a pre-interpolation midair path from the transformed reference coordinate system tool path. The pre-interpolation path derivation unit 13 causes the storage unit 4 to store the calculated pre-interpolation tip path and pre-interpolation midair path.

The path interpolation unit 14 respectively interpolates the pre-interpolation tip path and the pre-interpolation midair path calculated by the pre-interpolation path derivation unit 13. In this case, interpolation refers to correcting the pre-interpolation tip path and the pre-interpolation midair path so that loci traced by the respective paths become smooth curves. The path interpolation unit 14 includes a smooth interpolation unit 14a and a path local filter 14b as functional blocks.

The smooth interpolation unit 14a performs smooth interpolation in which the pre-interpolation tip path calculated by the pre-interpolation path derivation unit 13 is interpolated so that a movement of a tip point represented by the path becomes smooth and the pre-interpolation midair path calculated by the pre-interpolation path derivation unit 13 is interpolated so that a movement of a midair point represented by the path becomes smooth. Specifically, the smooth interpolation unit 14a performs so-called block smooth interpolation on a portion with an analytical possibility of being interpolated into a smooth curve passing through a command point among both paths calculated by the pre-interpolation path derivation unit 13. Specifically, the smooth interpolation unit 14a assumes an interval between adjacent command points among the pre-interpolation tip path to be a command block and interpolates the pre-interpolation tip path so that the command block and an adjacent command block are smoothly connected at a command point on a boundary between the command blocks. More specifically, the smooth interpolation unit 14a interpolates a tip path so that a primary differential value and a secondary differential value of the pre-interpolation tip path with respect to an intervening variable continuously vary before and after a command point on a boundary between adjacent command blocks and that the tip path passes through the command point. However, there are cases where a pre-interpolation tip path includes a section in which a variation of a locus of the tip path with respect to a variation of the intervening variable is sudden and in which the tip path cannot be interpolated by such a block smooth interpolation into a smooth curve that passes through a command point of the locus. Examples of such a section include an abnormal data portion in which increase/decrease is repeated in minute units and a corner portion that is intentionally specified by the machining program. In addition, a pre-interpolation tip path also includes a section that is left as-is without being interpolated by the smooth interpolation unit 14a even if a secondary differential is discontinuous such as a tangent point portion between a straight line and an arc and a tangent point portion between circles. The smooth interpolation unit 14a does not interpolate such sections among the pre-interpolation tip path and retains the original path, and smoothly interpolates a portion that can be interpolated into a curve which passes through the command point and in which a primary differential value and a secondary differential value with respect to the intervening variable respectively continuously vary before and after the command point. Furthermore, the smooth interpolation unit 14a subjects the pre-interpolation midair path to smooth interpolation similar to that performed on the pre-interpolation tip path.

The path local filter 14b performs the local interpolation on a section among the pre-interpolation tip path and the pre-interpolation midair path, the section being a section which had not been interpolated by the path smooth interpolation unit 14a, in which a primary differential or a secondary differential varies discontinuously, and in which a velocity indicated by the section is not zero.

Specifically, the path local filter 14b sets, as interpolation object points, a command point at which a primary differential value with respect to the intervening variable is continuous and a secondary differential value with respect to the intervening variable is discontinuous and a command point at which a primary differential value with respect to the intervening variable is discontinuous among the pre-interpolation tip path with the exception of a location at which the velocity is 0 (a location at which a temporary stop is made during machining). In addition, the path local filter 14b locally interpolates an interpolation interval which has an interpolation interval width (to be described later) before and after an interpolation object point among the pre-interpolation tip path and in which an interpolation object point is positioned at a center of the interpolation interval width so that a differential value that is discontinuous at the interpolation object point becomes continuous.

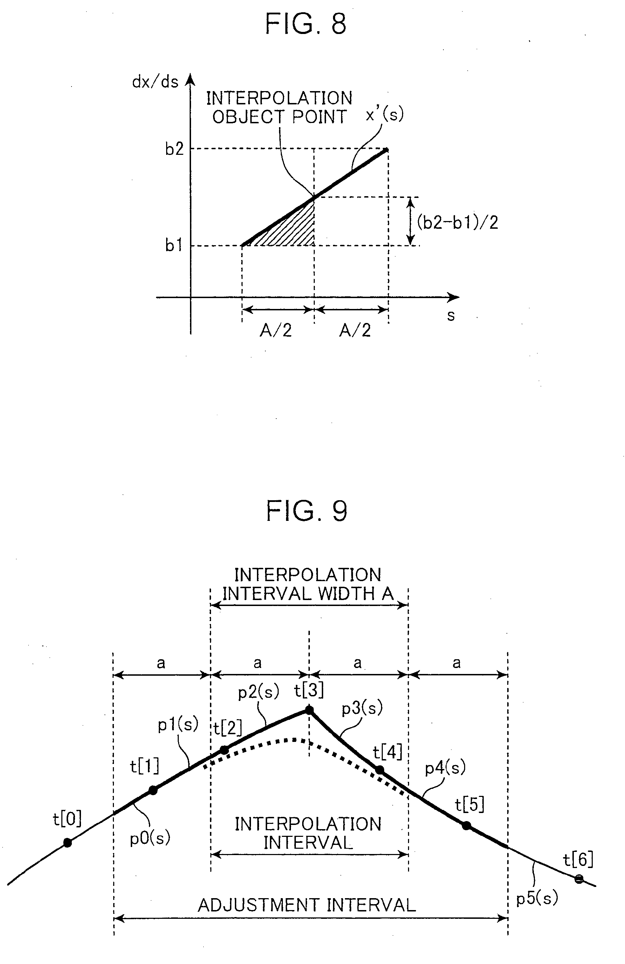

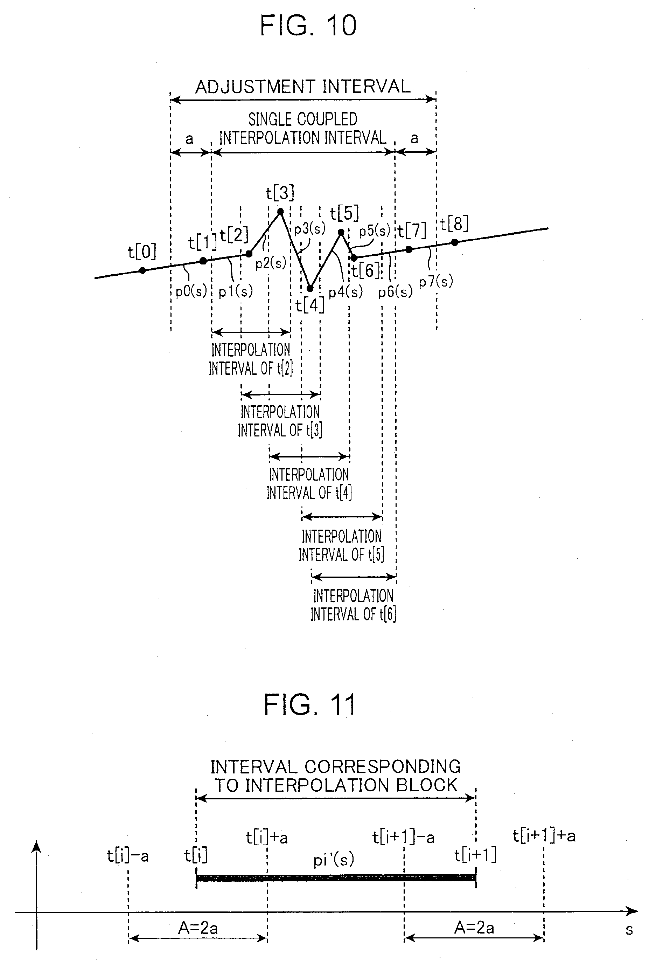

More specifically, the path local filter 14b performs the following local interpolation processing on the pre-interpolation tip path. Locations that are locally interpolated by the path local filter 14b include a corner portion such as that shown in Fig. 9 and an abnormal data portion such as that shown in Fig. 10 among the pre-interpolation tip path. Since the primary differential value and the secondary differential value with respect to the intervening variable are discontinuous at a command point positioned at an apex of the corner position (t[3] in Fig. 9) and each command point positioned at each apex of the abnormal data portion (t[2] to t[6] in Fig. 10), these command points become interpolation object points. In addition, when a plurality of interpolation object points exist on the pre-interpolation tip path and interpolation intervals of adjacent interpolation object points overlap each other (a case such as that shown in Fig. 10), the path local filter 14b assumes an interval between a start point of an interpolation interval that is closest to a start point of the pre-interpolation tip path among the overlapping interpolation intervals and an end point of an interpolation interval that is closest to an end point of the pre-interpolation tip path among the overlapping interpolation intervals to be a single interpolation interval and locally interpolates the tip path in the interpolation interval. Hereinafter, a tip path after all interpolation intervals have been locally interpolated by the path local filter 14b will be referred to as a post-local interpolation tip path. Furthermore, the path local filter 14b locally interpolates the interpolation interval so that the post-local interpolation tip path is respectively continuously connected before and after a start point and before and after an end point of each interpolation interval (when adjacent interpolation intervals overlap each other, an interpolation interval that couples the adjacent interpolation intervals with each other). Moreover, the path local filter 14b subjects the pre-interpolation midair path to local interpolation processing similar to that performed on the pre-interpolation tip path. Hereinafter, a midair path after all interpolation intervals have been locally interpolated by the path local filter 14b will be referred to as a post-local interpolation midair path. A post-interpolation tip path corresponds to a tip path obtained by the path derivation unit 12 based on the machining program and a post-local interpolation midair path corresponds to a midair path obtained by the path derivation unit 12 based on the machining program.

As a specific configuration of the path local filter 14b, the path local filter 14b includes a local interpolation unit 14c and an error correction unit 14d as functional blocks (refer to Fig. 2).

The local interpolation unit 14c obtains an error-having tip interpolation path that is interpolated so that a variation in a differential value which is discontinuous at an interpolation object point within an interpolation interval becomes a continuous variation by performing interpolation processing on each of a plurality of interpolation blocks having a portion included in an adjustment interval that is a tip path interpolation interval extended in both longitudinal directions to obtain a post-interpolation function of each interpolation block and integrating the post-interpolation functions to obtain a post-interpolation integrated function, and extracting an interval corresponding to an interpolation interval from the obtained post-interpolation integrated function. In addition, the local interpolation unit 14c performs similar processing to obtain an error-having midair interpolation path of the midair path which is interpolated so that a variation of a differential that is discontinuous at an interpolation object point within an interpolation interval becomes continuous.

The error correction unit 14d corrects the error-having tip interpolation path obtained by the local interpolation unit 14c so that a value corresponding to a start point of the interpolation interval of the error-having tip interpolation path equals a value of a start point of an interpolation interval of a tip path which has not been subjected to local interpolation and that a value corresponding to an end point of the interpolation interval of the error-having tip interpolation path equals a value of an end point of an interpolation interval of a tip path which has not been subjected to local interpolation, and replaces the interpolation interval of the tip path with the corrected tip interpolation path to derive a post-local interpolation tip path. In addition, the error correction unit 14d performs similar processing to derive a post-local interpolation midair path by correcting the error-having midair interpolation path and replacing the interpolation interval of the midair path with the corrected midair interpolation path.

The posture adjustment information derivation unit 16 specifies a posture adjustment location where a direction of a tool axis vector extending from a tip point toward a midair point corresponding to the tip point varies suddenly among the post-local interpolation tip path and the post-local interpolation midair path, extracts a posture adjustment interval that is an interval of an intervening variable before and after the specified posture adjustment location, and obtains posture adjustment information for adjusting a posture of the tool 106 in the posture adjustment interval so that a variation of the direction of the tool axis vector in the posture adjustment interval becomes gradual. Moreover, as the posture adjustment location where the posture of the tool 106 is to be adjusted, the posture adjustment information derivation unit 16 specifies a location where an angle formed by a tool axis vector with respect to an advancing direction of the post-local interpolation tip path increases and decreases within a short travel distance of the tool 106 among the post-local interpolation tip path and the post-local interpolation midair path, and a location where a variation rate of a direction of a projection tool axis vector with respect to an increase in the intervening variable exceeds a constant variation rate set as a parameter among the post-local interpolation tip path and the post-local interpolation midair path, the projection tool axis vector being a projection of the tool axis vector on the specific plane. In addition, examples of a location where a variation rate of a direction of a projection tool axis vector with respect to an increase in the intervening variable exceeds a constant variation rate include: an interval where a locus traced by a projection tip path that is a projection of the post-local interpolation tip path on the specific plane and a locus traced by a projection midair path that is a projection of the post-local interpolation midair path on the specific plane are separated from one another and a variation rate of an angle formed between the projection tool axis vector and a reference direction (in the present embodiment, a y axis direction) on the specific plane with respect to an increase in the intervening variable exceeds a constant variation rate; an interval including points where a locus traced by the post-local interpolation tip path and a locus traced by the post-local interpolation midair path overlap one another as seen from a direction perpendicular to the specific plane (intersections and tangent points of both loci); and an interval including a location having successive points at which both loci overlap each other. Furthermore, with respect to a posture adjustment location including an intersection at which a locus traced by the post-local interpolation tip path and a locus traced by the post-local interpolation midair path intersect one another as seen from a direction perpendicular to the specific plane, the posture adjustment information derivation unit 16 obtains posture adjustment information satisfying a condition that a midair point of the tool 106 is positioned at a point of the post-local interpolation midair path corresponding to the intersection with respect to an intervening variable for which a tip point of the tool 106 is positioned at a point of the post-local interpolation tip path corresponding to the intersection.

Specifically, the posture adjustment information derivation unit 16 tracks variations in the posture of the tool 106 as represented by the post-local interpolation tip path and the post-local interpolation midair path, finds a location where a correspondence relationship of a midair point on the post-local interpolation midair path associated with a tip point on the post-local interpolation tip path is to be adjusted and/or a location where a direction of the projection tool axis vector (at a singular point where a length of the projection tool axis vector becomes 0, a reference for calculating an angle of a C axis coordinate) is to be adjusted, obtains posture adjustment information including information on the posture adjustment interval and a tip-midair correspondence adjustment function $S(c)$ and/or a direction specification function $C(s)$, and registers the posture adjustment information in the memory 5. The tip-midair correspondence adjustment function $S(s)$ is a function used to adjust a midair point on the post-local interpolation midair path to be associated with a tip point on the post-local interpolation tip path. The tip-midair correspondence adjustment function $S(s)$ is included in a concept of a tip-midair correspondence relationship according to the present invention. The tip-midair correspondence adjustment function $S(s)$ defines a correlation between an arbitrary intervening variable and a midair point specifying intervening variable that is an intervening variable for specifying a prescribed point on the post-local interpolation midair path so that a travel distance along the post-local interpolation tip path from a point corresponding to a start point of a posture adjustment interval among the post-local interpolation tip path to an arbitrary point corresponding to the arbitrary intervening variable in the posture adjustment interval and a travel distance along the post-local interpolation midair path from a point corresponding to a start point of a posture adjustment interval among the post-local interpolation midair path to the prescribed point on the post-local interpolation midair path to be associated with the arbitrary point on the post-local interpolation tip path are maintained at a constant ratio. In addition, the direction specification function C(s) is a function used to adjust a direction of the projection tool axis vector (at a singular point where the length of the projection tool axis vector becomes 0, a reference for calculating an angle of a C axis coordinate). The direction specification function C(s) defines a relationship between a direction specifying angle and an intervening variable in a posture adjustment interval so that the direction specifying angle varies at an equal rate from a start point to an end point of the posture adjustment interval, the direction specifying angle being an angle formed between a control line and the reference direction on the specific plane, the control line being a straight line passing through a point on a projection tip path and a point on a projection midair path corresponding to the point on the projection tip path.

The intervening variable time function derivation unit 18 obtains an intervening variable time function (a velocity curve of the intervening variable) representing a variation in the intervening variable with respect to a lapse of a reference time based on the acceleration/deceleration conditions stored in the storage unit 4, the post-local interpolation tip path and the post-local interpolation midair path, and posture adjustment information derived by the posture adjustment information derivation unit 16 and registered in the memory 5. Specifically, using the transfer axis coordinate calculation function stored in the storage unit 4, the intervening variable time function derivation unit 18 calculates respective transfer axis paths (an X axis path, a Y axis path, a Z axis path, an A axis path, and a C axis path) based on the post-local interpolation tip path, the post-local interpolation midair path, and the posture adjustment information. In addition, the intervening variable time function derivation unit 18 obtains an approximate value of a primary differential value of each calculated transfer axis path with respect to the intervening variable and an approximate value of a secondary differential value of each calculated transfer axis path with respect to the intervening variable, sets an upper limit value of velocity of an intervening variable s of each block from a primary differential approximate value and a secondary differential approximate value in each block between respective command points so as to satisfy a condition that an acceleration of the transfer object in each transfer axis direction does not exceed an allowable acceleration in the transfer axis direction included in the acceleration/deceleration conditions, and derives an intervening variable time function representing a maximum acceleration which prevents a velocity of the transfer object in each transfer axis direction from exceeding the upper limit value of velocity in each block and which enables transfer of the transfer object along the post-local interpolation tip path and the post-local interpolation midair path within a range of allowable acceleration.

The transfer command derivation unit 20 obtains a transfer amount of the transfer object per reference unit time (per specific period) in each transfer axis direction based on the intervening variable time function derived by the intervening variable time function derivation unit 18, the post-local interpolation tip path, the post-local interpolation midair path, the posture adjustment information, and the transfer axis coordinate calculation function, and sets, as a command pulse, the obtained transfer amount of the transfer object per reference unit time in each transfer axis direction. Moreover, a reference unit time refers to a unit time of the reference time. In addition, a command pulse is included in a concept of a transfer command according to the present invention.

Specifically, the transfer command derivation unit 20 obtains an intervening variable corresponding to each time point per reference unit time of the reference time based on the intervening variable time function derived by the intervening variable time function derivation unit 18. In addition, with respect to an intervening variable within a posture adjustment interval among the derived intervening variables of the respective time points, the transfer command derivation unit 20 obtains a position coordinate of a tip point on the post-local interpolation tip path corresponding to the intervening variable and a tool axis vector extending from the tip point toward a midair point on a post-local interpolation midair path for which a relative positional relationship with respect to the tip point has been adjusted based on the posture adjustment information so that a variation of a direction of the projection tool axis vector becomes gradual. Furthermore, with respect to an intervening variable outside of a posture adjustment interval among the derived intervening variables of the respective time points, the transfer command derivation unit 20 obtains a position coordinate of a tip point on the post-local interpolation tip path corresponding to the intervening variable and a tool axis vector extending from the tip point toward a midair point on a post-local interpolation midair path corresponding to the intervening variable. In addition, the transfer command derivation unit 20 obtains a transfer amount of the transfer object per reference unit time in each transfer axis direction for moving the transfer object so that the tip point of the tool 106 passes the position coordinate of the tip point obtained for the intervening variable at each time point and that the tool axis vector of the tool 106 matches the tool axis vector obtained for the intervening variable at each time point. Specifically, the transfer command derivation unit 20 obtains a position coordinate on each transfer axis corresponding to the intervening variable at each time point using the transfer axis coordinate calculation function from the position coordinate of the tip point and the tool axis vector obtained for the intervening variable at each time point as described above, obtains a variation per reference unit time of the position coordinate on each transfer axis from the obtained position coordinate on each transfer axis at each time point, and sets the variation as a transfer amount per reference unit time of the transfer object in a direction of a corresponding transfer axis. The transfer command derivation unit 20 sets the transfer amount per reference unit time of the transfer object in each transfer axis direction obtained in this manner as a command pulse per reference unit time (per specific period).

The control unit 22 controls operations of the respective transfer devices 102, 110, 112, 114, and 116. The control unit 22 causes the respective transfer devices 102, 110, 112, 114, and 116 to transfer the transfer object in accordance with a command pulse per specific period obtained by the transfer command derivation unit 20. Specifically, the control unit 22 outputs, to the respective servomotors, command pulses representing a transfer amount in transfer axis directions respectively corresponding to the servomotor of the table transfer device 102 and servomotors of the transfer units 110b, 112b, 114b, and 116b among the command pulses per specific period for respective transfer axis directions obtained by the transfer command derivation unit 20. Accordingly, the control unit 22 causes the respective transfer devices 102, 110, 112, 114, and 116 to transfer the transfer object in accordance with the outputted command pulse.

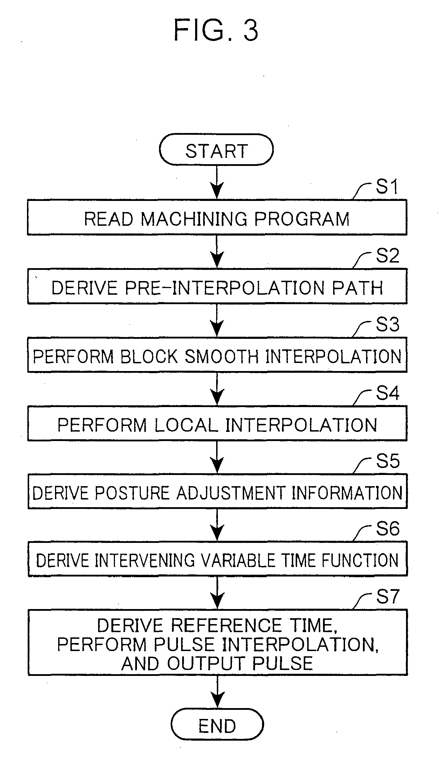

Next, a numerical control process by the numerical control device 2 according to the present embodiment will be described with reference to the flow charts shown in Figs. 3 to 7.

First, the path derivation unit 12 reads the machining program (NC program) stored in the storage unit 4 (step S1 in Fig. 3) and the pre-interpolation path derivation unit 13 obtains a pre-interpolation tip path and a pre-interpolation midair path from the machining program (step S2). In doing so, the pre-interpolation path derivation unit 13 reads a workpiece coordinate system tool path included in the machining program, transforms the workpiece coordinate system tool path into a reference coordinate system tool path based on workpiece placement information stored in the storage unit 4, and obtains a pre-interpolation tip path and a pre-interpolation midair path from the transformed reference coordinate system tool path. Moreover, at this point, the pre-interpolation path derivation unit 13 derives, as a pre-interpolation tip path, a function representing a position coordinate in the reference coordinate system of a tip point p(s) corresponding to an arbitrary intervening variable s, and derives, as a pre-interpolation midair path, a function representing a position coordinate in the reference coordinate system of a midair point P(s) corresponding to the midair point P(s) corresponding to the arbitrary intervening variable s. In other words, a pre-interpolation tip path and a pre-interpolation midair path are obtained so that a specific tip point on the pre-interpolation tip path and a specific midair point on the pre-interpolation midair path have a one-to-one correspondence with respect to a specific intervening variable.

Next, the smooth interpolation unit 14a of the path interpolation unit 14 respectively performs block smooth interpolation on the pre-interpolation tip path and the pre-interpolation midair path obtained by the pre-interpolation path derivation unit 13 (step S3).

The smooth interpolation unit 14a interpolates the pre-interpolation tip path so that a primary differential and a secondary differential continuously vary before and after a command point positioned on a boundary between adjacent command blocks among the pre-interpolation tip path and that a tip path after interpolation passes through the command point. In doing so, the smooth interpolation unit 14a performs block smooth interpolation on only a portion on which such interpolation is analytically possible among the pre-interpolation tip path and retains the locus of the original pre-interpolation tip path without performing interpolation for portions on which such interpolation is analytically impossible. Specifically, the smooth interpolation unit 14a retains the original locus without performing interpolation for a portion in which a bending angle of the pre-interpolation tip path at a command point is greater than a certain angle set in advance and a portion in which an error generated on the tip path after performing block smooth interpolation with respect to the pre-interpolation tip path is greater than an allowable error set in advance. The smooth interpolation unit 14a performs block smooth interpolation in a similar manner on the pre-interpolation midair path.

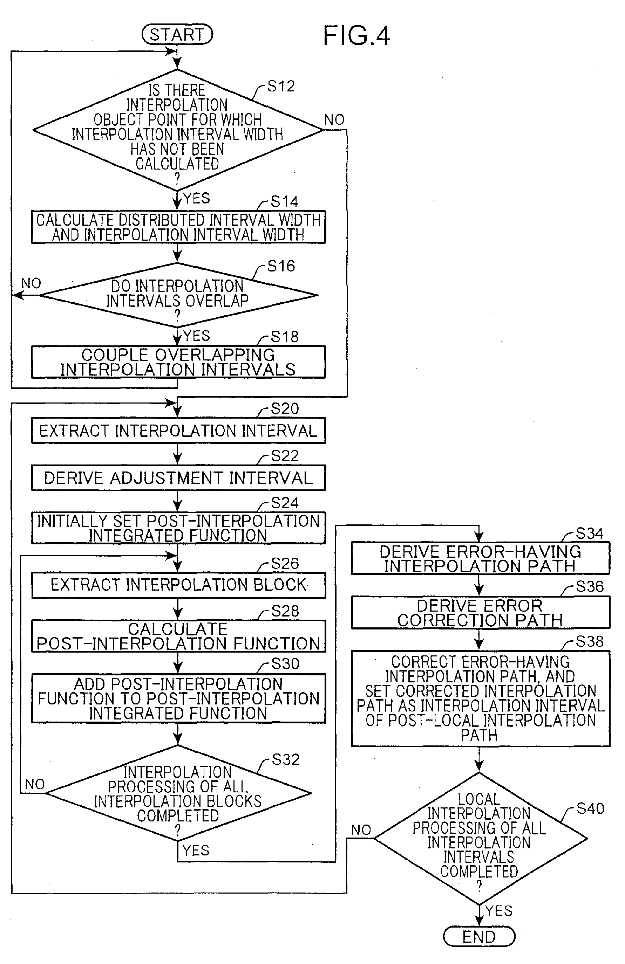

Next, the path local filter 14b locally interpolates the tip path after block smooth interpolation and the midair path (step S4). The path local filter 14b sets, as interpolation object points, a command point at which a variation in a primary differential value with respect to the intervening variable is continuous and a variation in a secondary differential value with respect to the intervening variable is discontinuous among the tip path after smooth interpolation and a command point at which a variation in a primary differential value with respect to the intervening variable is discontinuous among the tip path after smooth interpolation, and locally interpolates only an interpolation interval with a specific interval width before and after the interpolation object point among the tip path after smooth interpolation. Accordingly, a vicinity of a command point which has not been subjected to the block smooth interpolation among the tip path is locally interpolated so that a variation in a differential value that had been discontinuous at the command point becomes a continuous variation. A detailed process of the local interpolation which is performed by the path local filter 14b is shown in Fig. 4.

In the local interpolation, first, the local interpolation unit 14c of the path local filter 14b determines whether or not an interpolation object point for which an interpolation interval width that is an interval width of an interpolation interval has not been calculated exists on the tip path after smooth interpolation (step S12). When the local interpolation unit 14c determines that such an interpolation object point exists on the tip path after smooth interpolation, the local interpolation unit 14c calculates a distributed interval width and an interpolation interval width of the interpolation object point for which the interpolation interval width has not been calculated (step S 14). Moreover, a distributed interval width refers to an interval width in which a primary differential value of the path with respect to the intervening variable is distributed based on a distribution function.

In step S14, the local interpolation unit 14c first calculates a distributed interval width and then obtains an interpolation interval width as an interval width equal to or greater than the calculated distributed interval width. Moreover, in the present embodiment, the local interpolation unit 14c obtains an interval width that is equal in size to a distributed interval width as an interpolation interval width. When primary differential values of the tip path with respect to the intervening variable differ before and after an interpolation object point, with respect to a coordinate axis of a reference coordinate system with a maximum difference between the primary differential values before and after the interpolation object point, the local interpolation unit 14c obtains a distributed interval width so as to satisfy a condition that a positional error at the interpolation object point between the tip path before local interpolation and the tip path after local interpolation equals an allowable error on the coordinate axis. Specifically, for example, a distributed interval width is calculated as follows.

While a calculation formula for a distributed interval width differs depending on a distribution function used to perform distribution of a primary differential value of the path (to be described later), in this case, the calculation method of a distributed interval width is explained on the assumption that a linear distribution function is to be used to perform distribution of a primary differential value of the path to be described later.

Let us assume that, among the respective coordinate axes of the reference coordinate system, an x axis has a maximum difference between a value b1 immediately before an interpolation object point and a value b2 immediately after the interpolation object point of a primary differential value of the tip path with respect to the intervening variables. In this case, a primary differential function x'(s) with respect to the intervening variable s at a position coordinate x of the tip path on the x axis may be represented by Expression (1) below. Moreover, the primary differential function x'(s) is depicted by a bold line in Fig. 8.

$$x'(s) = dx/ds = \alpha s + b1 \ \dots \ (1)$$

Note that $\alpha$ is a prescribed coefficient. Here, a positional error at an interpolation object point of the tip path after local interpolation with respect to the tip path before local interpolation corresponds to an area of a hatched region in Fig. 8. If the positional error is denoted by E, then the positional error E is obtained by Expression (2) below.

$$E = A \times (b2 - b1)/8 \ \dots \ (2)$$

Now, if an allowable error on the x axis is denoted by $\tau$, then the distributed interval width A satisfying a condition that the error E is equal to the allowable error $\tau$ is obtained by Expression (3) below from Expression (2).

$$A = 8\tau/(b2 - b1) \ \dots \ (3)$$

Moreover, when the value of the distributed interval width obtained by Expression (3) exceeds an upper limit parameter set in advance, a value of the upper limit parameter is set as the distributed interval width A. In the present embodiment, an interval width equal to the distributed interval width A calculated as described above is set as an interpolation interval width.

Next, the local interpolation unit 14c determines whether or not an interpolation interval with respect to a currently-targeted interpolation object point overlaps with an interpolation interval of another interpolation object point (step S16). At this point, if the local interpolation unit 14c determines that the interpolation intervals do not overlap each other, the local interpolation unit 14c returns to step S12 and repetitively performs subsequent processes. On the other hand, when the local interpolation unit 14c determines that the interpolation intervals overlap each other, the local interpolation unit 14c couples the overlapping interpolation intervals with each other and creates a single interpolation interval (step S 18). Specifically, the local interpolation unit 14c assumes, as a single interpolation interval, an interval between a start point of an interpolation interval that is positioned closest to a start point of the tip path among the overlapping interpolation intervals and an end point of an interpolation interval that is positioned closest to an end point of the tip path among the overlapping interpolation intervals. Moreover, in this case, as the distributed interval width to be used when performing distribution (to be described later) with respect to the single coupled interpolation interval, a smallest distributed interval width among the distributed interval widths corresponding to the respective interpolation intervals is adopted. Subsequently, a return is made to step S12 and subsequent processes are repetitively performed.

When the local interpolation unit 14c determines in step S12 that there are no more interpolation object points on the tip path for which an interpolation interval width has not been calculated, the local interpolation unit 14c next extracts a single interpolation interval on which subsequent local interpolation processing is to be performed (step S20).

At this point, when there are a plurality of interpolation intervals on the tip path on which local interpolation processing has not been performed, the local interpolation unit 14c extracts an interpolation interval that is positioned closest to the start point of the tip path among the interpolation intervals. Moreover, the interpolation interval coupled in step S18 is treated as a single interpolation interval.

Subsequently, the local interpolation unit 14c obtains an adjustment interval with respect to the extracted interpolation interval (step S22). The adjustment interval (refer to Figs. 9 and 10) is an interval created by expanding an interpolation interval before and after respectively by an interval width a that is half of the distributed interval width A in both longitudinal directions and is used as a reference when determining an interpolation block that is a calculation object of a post-interpolation function (to be described later). Subsequently, the local interpolation unit 14c initially sets the post-interpolation integrated function stored in the memory 5 to 0 (step S24).

Next, the local interpolation unit 14c extracts an interpolation block that is a command block of the tip path for performing interpolation processing to obtain a post-interpolation function (to be described later) (step S26). Specifically, the local interpolation unit 14c selects a plurality of command blocks (command blocks p0(s) to p5(s) of tip path in Fig. 9, and command blocks p0(s) to p7(s) of tip path in Fig. 10) having at least a part of an interval included in the adjustment interval obtained in step S22, and extracts, as the interpolation block, a block on which interpolation processing for obtaining a post-interpolation function (to be described later) has not been completed and which is positioned closest to the start point of the tip path among the command blocks.

Next, the local interpolation unit 14c obtains a post-interpolation function of the extracted interpolation block (step S28). In the present embodiment, the local interpolation unit 14c obtains a post-interpolation function using a linear distribution function f(s). The linear distribution function f(s) is represented by Expression (4) below.

$$f(s) = 1/A \quad (-A/2 \leq s \leq A/2) \ldots (4)$$

Moreover, f(s) = 0 holds true outside of the distributed interval $-A/2 \leq s \leq A/2$.

When calculating a post-interpolation function, the local interpolation unit 14c first sets an integration interval [s - A/2, s + A/2] having, as a center, each first position s at which the intervening variable differs in the extracted interpolation block and having an interval width equal to the distributed interval width A. Subsequently, the local interpolation unit 14c obtains a primary differential pi'(S) of the tip path with respect to the intervening variable at each second position S at which the intervening variable in the set integration interval [s - A/2, s + A/2] differs, and integrates, over the integration interval [s - A/2, s + A/2], a post-distribution differential function pi'(S)·f(s - S) obtained when distributing the primary differential pi'(S) at each second position S based on the distribution function f(s) in a distributed interval having the second position S as a center and having the distributed interval width A to obtain a post-interpolation function qi'(s). In other words, the local interpolation unit 14c obtains the post-interpolation function qi'(s) of the interpolation block pi(s) according to Expression (5) below.

$$qi'(s) = \int_{S=s-A/2}^{S=s+A/2} (pi'(S) \cdot f(s-S)) dS \qquad \cdots (5)$$

The post-interpolation function qi'(s) obtained in this manner is expressed differently between a case where the interval width of the interpolation block pi(s) is greater than the interpolation interval width A and a case where the interval width of the interpolation block pi(s) is smaller than the interpolation interval width A. The post-interpolation function qi'(s) in each case is as follows.

When the interval width of the interpolation block pi(s) is greater than the interpolation interval width A (= 2a), if t[i] denotes a command point closer to the start point of the tip path among the two command points that define both ends of the interpolation block pi(s) and t[i + 1] denotes a command point closer to the end point of the tip path among the two command points and an interval width that is half of the interpolation interval width A is denoted by a, then an interval corresponding to the interpolation block pi(s) is expressed as t[i] < s < t[i +1] and a relationship expressed as t[i] - a < t[i] + a < t[i + 1] - a < t[i + 1] + a holds true (refer to Fig. 11). In this case, the primary differential pi'(s) of the interpolation block pi(s) with respect to the intervening variable s is depicted by a bold line in Fig. 11.

In this case, the post-interpolation function qi'(s) obtained by the interpolation processing is subdivided into a function qi11'(s) of an interval expressed as t[i] - a < s < t[i] + a, a function qi12'(s) of an interval expressed as t[i] + a < s < t[i + 1] - a, and a function qi13'(s) of an interval expressed as t[i + 1] - a < s < t[i + 1] + a.

The function qi11'(s) of the interval t[i] - a < s < t[i] + a is represented by Expression (6) below.

$$qi11'(s) = \int_{S=t[i]}^{S=s+a} (pi'(S) \cdot f(s-S))dS = (pi(s+a)-pi(t[i]))/2a \quad \cdots (6)$$

The function qi12'(s) of the interval t[i] + a < s < t[i + 1] - a is represented by Expression (7) below.

$$qi12'(s) = \int_{S=s-a}^{S=s+a} (pi'(S) \cdot f(s-S))dS = (pi(s+a)-pi(s-a))/2a \quad \cdots (7)$$

The function qi13'(s) of the interval t[i + 1] - a < s < t[i + 1] + a is represented by Expression (8) below.

$$qi13'(s) = \int_{S=s-a}^{S=t[i+1]} (pi'(S) \cdot f(s-S))dS = (pi(t[i+1])-pi(s-a))/2a \quad \cdots (8)$$

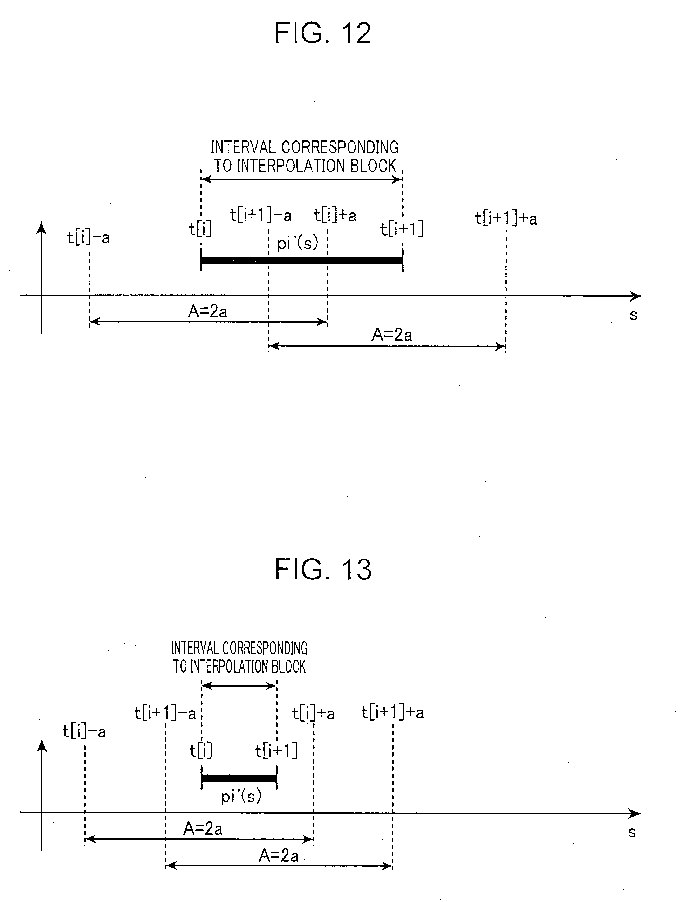

Next, when the interval width of the interpolation block pi(s) is smaller than the interpolation interval width A = 2a, if t[i] denotes a command point closer to the start point of the tip path among the two command points that define both ends of the interpolation block pi(s) and t[i + 1] denotes a command point closer to the end point of the tip path among the two command points and an interval width that is half of the interpolation interval width A is denoted by a, then an interval corresponding to the interpolation block pi(s) is expressed as t[i] < s < t[i +1] and a relationship expressed as t[i] - a < t[i + 1] - a < t[i] + a < t[i + 1] + a holds true (refer to Figs. 12 and 13). Moreover, Fig. 12 shows a case where the interval width of the interpolation block pi(s) is smaller than the interpolation interval width A and greater than an interval width a that is half of the interpolation interval width A, and Fig. 13 shows a case where the interval width of the interpolation block pi(s) is smaller than the interval width a that is half of the interpolation interval width A. A primary differential function pi'(s) of the interpolation block pi(s) with respect to the intervening variable s in these cases is depicted by bold lines in Figs. 12 and 13:

In these cases, the post-interpolation function qi'(s) obtained by the interpolation processing is subdivided into a function qi21'(s) of an interval expressed as t[i] - a < s < t[i + 1] - a, a function qi22' (s) of an interval expressed as t[i + 1] - a < s < t[i] + a, and a function qi23'(s) of an interval expressed as t[i] + a < s < t[i + 1] + a.

The function qi21'(s) of the interval t[i] - a < s < t[i + 1] - a is represented by Expression (9) below.

$$qi21'(s) = \int_{S=t[i]}^{S=s+a} (pi'(S) \cdot f(s-S))dS = (pi(s+a)-pi(t[i]))/2a \quad \cdots (9)$$

The function qi22'(s) of the interval t[i + 1] - a < s < t[i] + a is represented by Expression (10) below.

$$qi22'(s) = \int_{S=t[i]}^{S=t[i+1]} (pi'(S) \cdot f(s-S))dS = (pi(t[i+1])-pi(t[i]))/2a \quad \cdots (10)$$

The function qi23'(s) of the interval t[i] + a < s < t[i + 1] + a is represented by Expression (11) below.

$$qi23'(s) = \int_{S=s-a}^{S=t[i+1]} (pi'(S) \cdot f(s-S))dS = (pi(t[i+1])-pi(s-a))/2a \quad \cdots (11)$$

Next, the local interpolation unit 14c adds the obtained post-interpolation function to the post-interpolation integrated function stored in the memory 5 (step S30). In this case, since the obtained post-interpolation function is added to the post-interpolation integrated function that has been set to 0 in step S24, the post-interpolation integrated function after addition is equal to the post-interpolation function obtained in step S28.

Subsequently, the local interpolation unit 14c determines whether or not interpolation processing involving obtaining a post-interpolation function and adding the post-interpolation function to the post-interpolation integrated function has been performed for all interpolation blocks having at least a part of an interval included in the adjustment interval (step S32). At this point, when the local interpolation unit 14c determines that the interpolation processing of all interpolation blocks has not yet been completed, the local interpolation unit 14c returns to step S26 and extracts an interpolation block on which interpolation processing is next performed. The interpolation block extracted at this point is a command block adjacent on a side of the end point of the tip path to an interpolation block previously subjected to interpolation processing among command blocks having at least a part of an interval included in the adjustment interval. Subsequently, the local interpolation unit 14c performs the calculation of the post-interpolation function of step S28 with respect to the extracted interpolation block and adds the obtained post-interpolation function to the post-interpolation integrated function. The local interpolation unit 14c performs the processes of steps S26 to S30 until it is determined in step S32 that the interpolation processing (distribution, integration, and addition) of all interpolation blocks having at least a part thereof included in the adjustment interval has been completed.

In addition, when the local interpolation unit 14c determines in step S32 that the interpolation processing of all interpolation blocks having at least a part thereof included in the adjustment interval has been completed, the local interpolation unit 14c next obtains an error-having tip interpolation path (step S34). Specifically, the local interpolation unit 14c obtains an error-having tip interpolation path by extracting an interval corresponding to the interpolation interval extracted in step S20 from the post-interpolation integrated function obtained by adding the post-interpolation function.

Next, the error correction unit 14d of the path local filter 14b obtains a tip error correction path for correcting an error from the tip path at a point corresponding to a start point of the interpolation interval and a point corresponding to an end point of the interpolation interval among the error-having tip interpolation path (step S36). Specifically, the error correction unit 14d obtains a tip error correction path satisfying a condition that a value of the tip error correction path at the start point of the interpolation interval is equal to a value obtained by subtracting a value of the tip path at the start point from a value of the error-having tip interpolation path at the start point and a value of the tip error correction path at the end point of the interpolation interval is equal to a value obtained by subtracting a value of the tip path at the end point from a value of the error-having tip interpolation path at the end point. More specifically, if the tip error correction path is denoted by E(s), the error-having tip interpolation path is denoted by r(s), the tip path is denoted by p(s), the start point of the interpolation interval is denoted by Ss, and the end point of the interpolation interval is denoted by Se, then the error correction unit 14d obtains the tip error correction path E(s) satisfying Expressions (12) and (13) below. In the present embodiment, the error correction unit 14d obtains a tip error correction path which connects E(Ss) and E(Se) by a straight line as an example of the tip error correction path E(s) satisfying these conditions.

$$E(Ss) = r(Ss) - p(Ss) \ldots (12)$$

$$E(Se) = r(Se) - p(Se) \ldots (13)$$

Next, the error correction unit 14d corrects the tip error-having interpolation path with the tip error correction path obtained in step S36, replaces the interpolation interval of the tip path with the tip interpolation path after correction, and sets the tip interpolation path after correction as the tip path of the interpolation interval after local interpolation (step S38). Specifically, the error correction unit 14d corrects the error-having tip interpolation path by subtracting the tip error correction path from the error-having tip interpolation path, and eliminates, by the correction, an error of the error-having tip interpolation path with respect to the tip path at the start point of the interpolation interval and an error of the error-having tip interpolation path with respect to the tip path at the end point of the interpolation interval. Therefore, the tip interpolation path after the correction becomes a path which is continuously connected to the tip path at the start point of the interpolation interval and which is continuously connected to the tip path at the end point of the interpolation interval. According to the processes described above, an interpolation interval among the tip path is locally interpolated so that a variation in a differential value that is discontinuous at an interpolation object point in the interpolation interval becomes a continuous variation.

Subsequently, the local interpolation unit 14c determines whether or not local interpolation of all interpolation intervals of the tip path has been completed (step S40). At this point, if the local interpolation unit 14c determines that there are interpolation intervals on which local interpolation has not been completed, processes of step S20 and thereafter are repetitively performed. Specifically, the local interpolation unit 14c extracts an interpolation interval positioned closest to the start point of the tip path among the interpolation intervals on which local interpolation has not been completed, and calculation of a post-interpolation function, addition to a post-interpolation integrated function, derivation of an error-having tip interpolation path, derivation of a tip error correction path and correction of the error-having tip interpolation path, and the like are performed on the extracted interpolation interval.

On the other hand, when the local interpolation unit 14c determines that the local interpolation of all interpolation intervals of the tip path has been completed, the process of local interpolation of the tip path by the path local filter 14b is concluded. In this manner, the path local filter 14b derives a post-local interpolation tip path that is a tip path for which all interpolation intervals have been locally interpolated. In addition, the path local filter 14b performs local interpolation of a midair path in a similar manner to the local interpolation processing on the tip path described above and drives a post-local interpolation midair path that is a midair path for which all interpolation intervals have been locally interpolated.

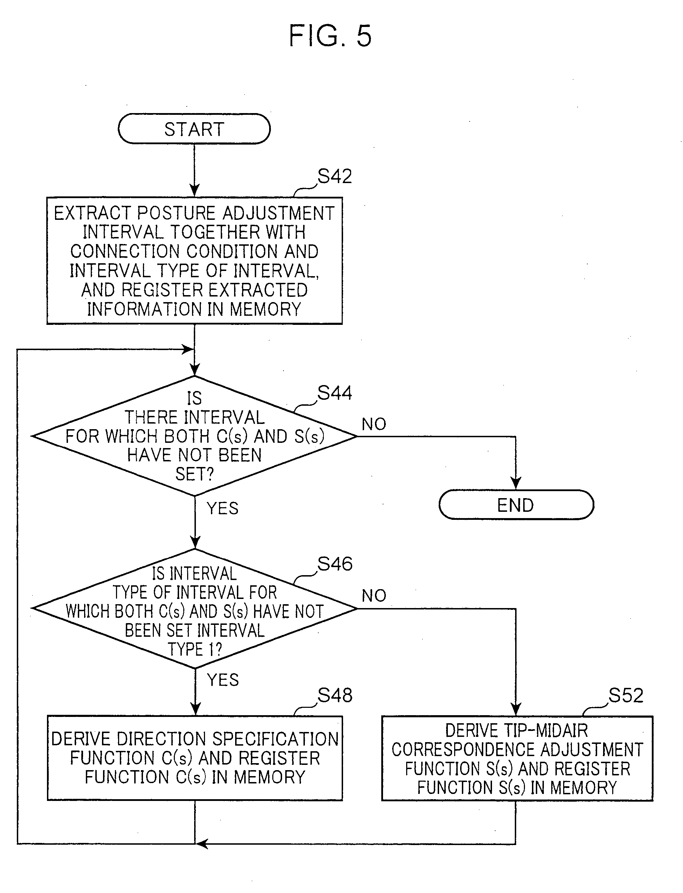

Next, the posture adjustment information derivation unit 16 derives posture adjustment information (step S5 in Fig. 3). A detailed process of the derivation of posture adjustment information by the posture adjustment information derivation unit 16 is shown in Fig. 5.

In the posture adjustment information derivation process, the posture adjustment information derivation unit 16 first checks intervals in which a primary differential with respect to the intervening variable s continuously varies among the post-local interpolation tip path to see whether there is a posture adjustment location where the posture of the tool 106 is to be adjusted so that a variation of the direction of the tool axis vector becomes gradual on the post-local interpolation tip path and the post-local interpolation midair path, and when there is a posture adjustment location, the posture adjustment information derivation unit 16 extracts a posture adjustment interval including the posture adjustment location together with a connection condition and an interval type of the posture adjustment interval and registers the information as posture adjustment information in the memory 5 (step S42).

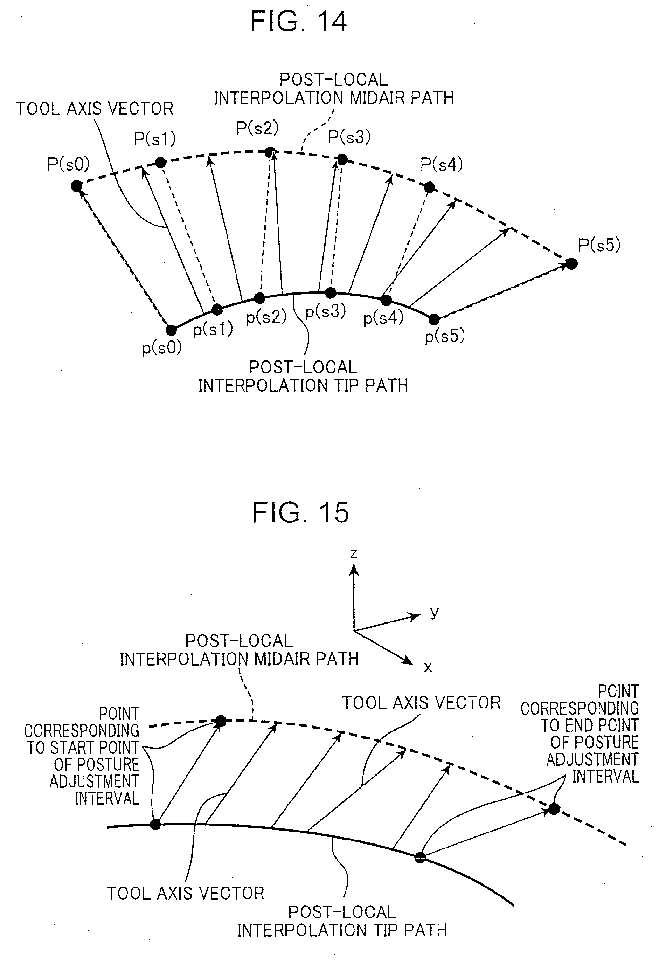

Specifically, when there is a location where an angle formed by the tool axis vector with respect to an advancing direction of the post-local interpolation tip path increases and decreases within a short travel distance (set as a parameter) among the post-local interpolation tip path and the post-local interpolation midair path as shown in Fig. 15, the posture adjustment information derivation unit 16 sets, as a posture adjustment interval, an interval (ss, se) of the intervening variable s obtained by adding an interval width corresponding to a given parameter before and after the location, registers information on the set posture adjustment interval (ss, se) in the memory 5, and registers information describing that an interval type of the posture adjustment interval (ss, se) is interval type 2 in the memory 5. In addition, the posture adjustment information derivation unit 16 registers both an angle Cs and an angle Ce as NULL in the memory 5, the angle Cs being formed between a control line, which is constituted by a straight line passing through a point on the projection tip path at a start point ss of the posture adjustment interval (ss, se) and a point on the projection midair path at the start point ss, and the reference direction (y axis direction) on the specific plane (the xy plane), the angle Ce being formed between a control line, which is constituted by a straight line passing through a point on the projection tip path at an end point se of the posture adjustment interval (ss, se) and a point on the projection midair path at the end point se, and the reference direction on the specific plane.

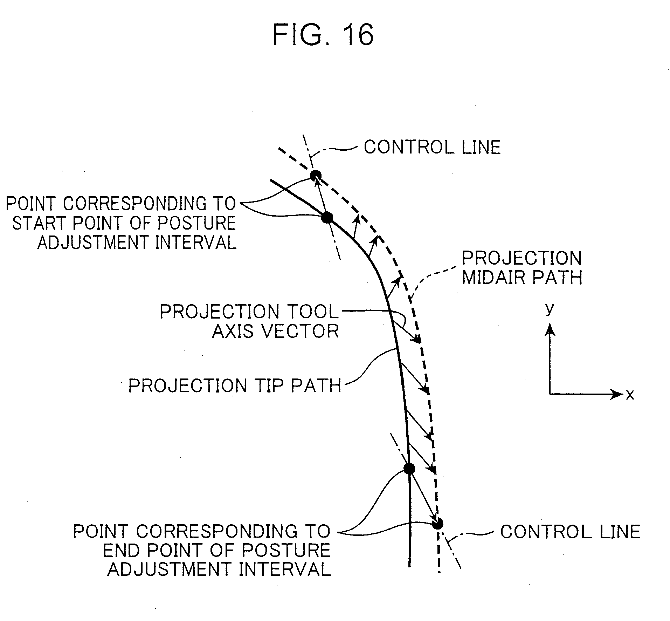

Furthermore, when there is a posture adjustment location where a locus traced by a projection tip path and a locus traced by a projection midair path on the specific plane are separated from one another and a variation rate of a projection tool axis vector, that is a projection on the specific plane of a tool axis vector extending from a tip point on a post-local interpolation tip path toward a midair point on a post-local interpolation midair path corresponding to the tip point, with respect to an increase in the intervening variable (a variation rate of an angle formed between the projection tool axis vector (a control line) and the reference direction with respect to an increase in the intervening variable) exceeds a constant variation rate set as a parameter (refer to Fig. 16), the posture adjustment information derivation unit 16 sets an interval (ss, se) before and after the location as a posture adjustment interval, registers information on the set posture adjustment interval (ss, se) in the memory 5, and registers information describing that an interval type of the posture adjustment interval (ss, se) is interval type 1 in the memory 5. In addition, the posture adjustment information derivation unit 16 obtains an angle Cs (hereinafter, referred to as an angle Cs of a control line at the start point of the posture adjustment interval) and an angle Ce (hereinafter, referred to as an angle Ce of a control line at the end point of the posture adjustment interval), the angle Cs being formed between a control line, that is a straight line passing through a point on the projection tip path corresponding to a start point ss of the posture adjustment interval (ss, se) and a point on the projection midair path corresponding to the point on the projection tip path (a point on the projection midair path corresponding to the start point ss), and the reference direction, the angle Ce being formed between a control line, that is a straight line passing through a point on the projection tip path corresponding to an end point se of the posture adjustment interval (ss, se) and a point on the projection midair path corresponding to the point on the projection tip path (a point on the projection midair path corresponding to the end point se), and the reference direction, and the posture adjustment information derivation unit 16 registers information on an angular range (Cs, Ce) of the control lines in the posture adjustment interval (ss, se) in the memory 5.

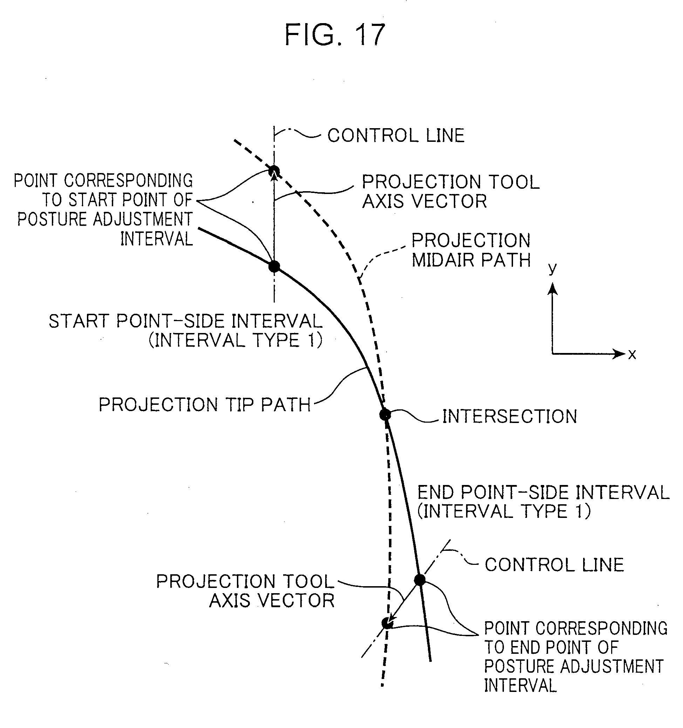

Furthermore, as shown in Figs. 17 to 20, when the projection tip path and the projection midair path intersect or are tangent to each other, the posture adjustment information derivation unit 16 matches an intervening variable Sm on the post-local interpolation midair path to an intervening variable sm on the post-local interpolation tip path corresponding to the intersection or the tangent point to make the intersection or the tangent point a singular point, sets, as a posture adjustment interval, an interval before and after the intervening variable of the singular point and having a specific interval width (set as a parameter), and registers information on the posture adjustment interval (ss, se) in the memory 5. In addition, in this case, the posture adjustment information derivation unit 16 obtains an angle between the control line and a tangential direction of the projection tip path at the start point ss and the end point se, determines whether or not the control line is close to parallel to the tangential direction of the projection tip path at the start point ss and the end point se based on the angle, divides the posture adjustment interval into a plurality of intervals according to the determination result as described below, obtains interval information, an angular range of the control line, and an interval type of each divided interval, and registers the interval information, the angular range, and the interval type in the memory 5. Moreover, when a smaller angle among the angles between the control line and the tangential direction of the projection tip path at the start point ss and the end point se of the posture adjustment interval is equal to or greater than a determination angle (for example, a specific angle between 10 to 30 degrees) as a parameter stored in the storage unit 4, the posture adjustment information derivation unit 16 determines that the control line is not close to parallel to the tangential direction of the projection tip path, and when the angle is smaller than the determination angle, the posture adjustment information derivation unit 16 determines that the control line is close to parallel to the tangential direction of the projection tip path.

In addition, when the projection tip path and the projection midair path intersect one another and the control line is not close to parallel to the tangential direction of the projection tip path at both the start point ss and the end point se of the posture adjustment interval (refer to Fig. 17), the posture adjustment information derivation unit 16 divides the posture adjustment interval into a start point-side interval from the start point of the posture adjustment interval to the intervening variable of the intersection of the projection tip path and the projection midair path and an end point-side interval from the intervening variable of the intersection to the end point of the posture adjustment interval, and determines that the start point-side interval and the end point-side interval both fall under interval type 1. Furthermore, the posture adjustment information derivation unit 16 obtains an angle Cs of the control line at the start point of the posture adjustment interval and an angle Ce of the control line at the end point of the posture adjustment interval and obtains an average angle of the obtained angles Cs and Ce as an angle Cm of the control line at the intersection. Moreover, from the information obtained as described above, the posture adjustment information derivation unit 16 registers, as posture adjustment information in the memory 5, a start point-side interval (ss, sm) with respect to the tip path, a start point-side interval (Ss, Sm) (where Ss = ss) with respect to the midair path, an angular range (Cs, Cm) of the control line in the start point-side interval, and information describing that the start point-side interval falls under interval type 1, and the posture adjustment information derivation unit 16 registers, as posture adjustment information in the memory 5, an end point-side interval (sm, se) with respect to the tip path, an end point-side interval (Sm, Se) (where Se = se) with respect to the midair path, an angular range (Cm, Ce) of the control line in the end point-side interval, and information describing that the end point-side interval falls under interval type 1.

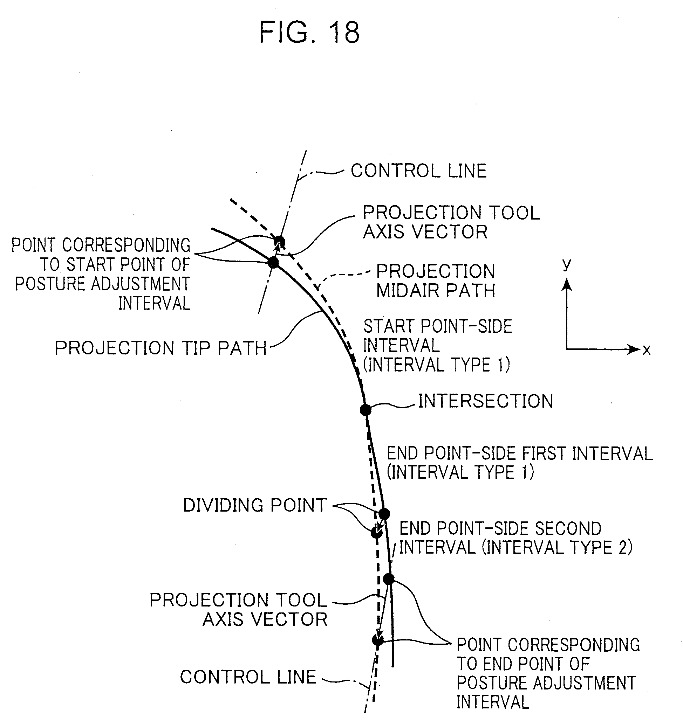

In addition, when the projection tip path and the projection midair path intersect one another, the control line is not close to parallel to the tangential direction of the projection tip path at the start point ss of the posture adjustment interval, and the control line is close to parallel to the tangential direction of the projection tip path at the end point se of the posture adjustment interval (refer to Fig. 18), the posture adjustment information derivation unit 16 divides the posture adjustment interval into a start point-side interval from the start point of the posture adjustment interval to the intervening variable of the intersection of the projection tip path and the projection midair path, an end point-side first interval from the intervening variable of the intersection to a dividing point between the intervening variable of the intersection and the end point of the posture adjustment interval, and an end point-side second interval from the dividing point to the end point of the posture adjustment interval, and determines that the start point-side interval falls under interval type 1, the end point-side first interval falls under interval type 1, and the end point-side second interval falls under interval type 2. Furthermore, the posture adjustment information derivation unit 16 obtains an intervening variable sm with respect to the projection tip path at the intersection of the projection tip path and the projection midair path and an intervening variable Sm with respect to the projection midair path at the intersection, and obtains a dividing point sk with respect to the projection tip path as sk = (sm + se)/2. Moreover, the posture adjustment information derivation unit 16 obtains an angle Cs of the control line at the start point of the posture adjustment interval and an angle Ce of the control line at the end point of the posture adjustment interval, and obtains an average angle of the obtained angles Cs and Ce as an angle Cm of the control line at the intersection of the projection tip path and the projection midair path. In addition, the posture adjustment information derivation unit 16 derives an angle equal to the angle Ce of the control line at the end point of the posture adjustment interval as an angle Ck of the control line at the dividing point. Furthermore, the posture adjustment information derivation unit 16 obtains, as a dividing point Sk of the projection midair path, an intervening variable position corresponding to an intersection of a straight line which passes a point on the projection tip path corresponding to the dividing point sk and which forms the angle Ck between the reference direction and the projection tip path. Moreover, from the information obtained as described above, the posture adjustment information derivation unit 16 registers, as posture adjustment information in the memory 5, a start point-side interval (ss, sm) with respect to the tip path, a start point-side interval (Ss, Sm) (where Ss = ss) with respect to the midair path, an angular range (Cs, Cm) of the control line in the start point-side interval, and information describing that the start point-side interval falls under interval type 1, the posture adjustment information derivation unit 16 registers, as posture adjustment information in the memory 5, an end point-side first interval (sm, sk) with respect to the tip path, an end point-side first interval (Sm, Sk) with respect to the midair path, an angular range (Cm, Ck) of the control line in the end point-side first interval, and information describing that the end point-side first interval falls under interval type 1, and the posture adjustment information derivation unit 16 registers, as posture adjustment information in the memory 5, an end point-side second interval (sk, se) with respect to the tip path, an end point-side second interval (Sk, Se) (where Se = se) with respect to the midair path, an angular range (Ck, Ce) of the control line in the end point-side second interval, and information describing that the end point-side second interval falls under interval type 2.

In addition, conversely to the case shown in Fig. 18, when the control line is close to parallel to the tangential direction of the projection tip path at the start point ss of the posture adjustment interval and the control line is not close to parallel to the tangential direction of the projection tip path at the end point se of the posture adjustment interval, the posture adjustment information derivation unit 16 divides the posture adjustment interval into a start point-side first interval from the start point of the posture adjustment interval to a dividing point between the start point and the intervening variable of the intersection of the projection tip path and the projection midair path, a start point-side second interval from the dividing point to the intervening variable of the intersection of the projection tip path and the projection midair path, and an end point-side interval from the intersection to the end point of the posture adjustment interval, and determines that the start point-side first interval falls under interval type 2, the start point-side second interval falls under interval type 1, and the end point-side interval falls under interval type 1. Furthermore, the posture adjustment information derivation unit 16 obtains an intervening variable sm with respect to the projection tip path and an intervening variable Sm with respect to the projection midair path at the intersection of the projection tip path and the projection midair path in a similar manner to that described above and obtains a dividing point sk as sk = (ss + sm)/2. Moreover, the posture adjustment information derivation unit 16 obtains an angle Cs of the control line at the start point of the posture adjustment interval, an angle Ce of the control line at the end point of the posture adjustment interval, and an angle Cm of the control line at the intersection of the projection tip path and the projection midair path in a similar manner to that described above, and derives an angle equal to the angle Cs of the control line at the start point of the posture adjustment interval as an angle Ck of the control line at the dividing point. In addition, the posture adjustment information derivation unit 16 obtains a dividing point Sk of the projection midair path in a similar manner to that described above. Subsequently, from the information obtained as described above, the posture adjustment information derivation unit 16 registers, as posture adjustment information in the memory 5, a start point-side first interval (ss, sk) with respect to the tip path, a start point-side first interval (Ss, Sk) (where Ss = ss) with respect to the midair path, an angular range (Cs, Ck) of the control line in the start point-side first interval, and information describing that the start point-side first interval falls under interval type 2, the posture adjustment information derivation unit 16 registers, as posture adjustment information in the memory 5, a start point-side second interval (sk, sm) with respect to the tip path, a start point-side second interval (Sk, Sm) with respect to the midair path, an angular range (Ck, Cm) of the control line in the start point-side second interval, and information describing that the start point-side second interval falls under interval type 1, and the posture adjustment information derivation unit 16 registers, as posture adjustment information in the memory 5, an end point-side interval (sm, se) with respect to the tip path, an end point-side interval (Sm, Se) (where Se = se) with respect to the midair path, an angular range (Cm, Ce) of the control line in the end point-side interval, and information describing that the end point-side interval falls under interval type 1.

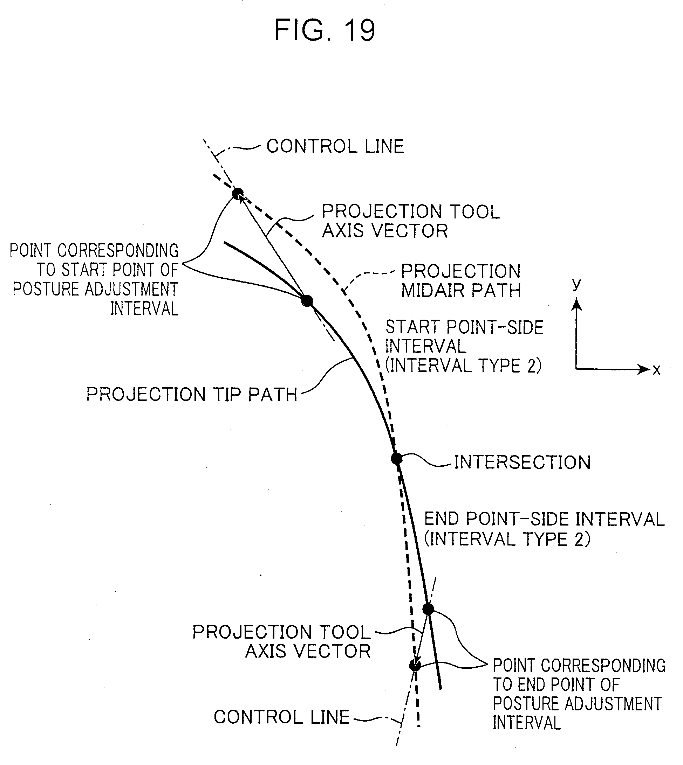

In addition, when the projection tip path and the projection midair path intersect one another and the control line is close to parallel to the tangential direction of the projection tip path at both the start point ss and the end point se of the posture adjustment interval (refer to Fig. 19), the posture adjustment information derivation unit 16 divides the posture adjustment interval into a start point-side interval from the start point of the posture adjustment interval to the intervening variable of the intersection of the projection tip path and the projection midair path and an end point-side interval from the intervening variable of the intersection to the end point of the posture adjustment interval, and determines that the start point-side interval and the end point-side interval both fall under interval type 2. Furthermore, the posture adjustment information derivation unit 16 obtains an intervening variable sm with respect to the projection tip path and an intervening variable Sm with respect to the projection midair path at the intersection of the projection tip path and the projection midair path, an angle Cs of the control line at the start point of the posture adjustment interval and an angle Ce of the control line at the end point of the posture adjustment interval, and an angle Cm of the control line at the intersection in a similar manner to that described above. Moreover, from the obtained information, the posture adjustment information derivation unit 16 registers, as posture adjustment information in the memory 5, a start point-side interval (ss, sm) with respect to the tip path, a start point-side interval (Ss, Sm) (where Ss = ss) with respect to the midair path, an angular range (Cs, Cm) of the control line in the start point-side interval, and information describing that the start point-side interval falls under interval type 2, and the posture adjustment information derivation unit 16 registers, as posture adjustment information in the memory 5, an end point-side interval (sm, se) with respect to the tip path, an end point-side interval (Sm, Se) (where Se = se) with respect to the midair path, an angular range (Cm, Ce) of the control line in the end point-side interval, and information describing that the end point-side interval falls under interval type 2.

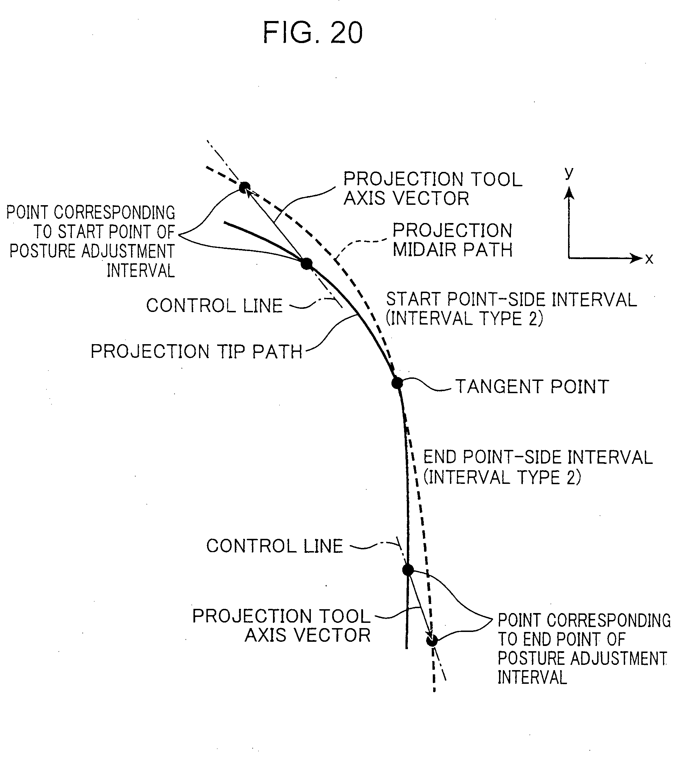

In addition, when the projection tip path and the projection midair path are tangential at one point and the control line is close to parallel to the tangential direction of the projection tip path at both the start point ss and the end point se of the posture adjustment interval (refer to Fig. 20), the posture adjustment information derivation unit 16 divides the posture adjustment interval into a start point-side interval from the start point of the posture adjustment interval to the intervening variable of the tangent point of the projection tip path and the projection midair path and an end point-side interval from the intervening variable of the tangent point to the end point of the posture adjustment interval, and determines that the start point-side interval and the end point-side interval both fall under interval type 2. Furthermore, the posture adjustment information derivation unit 16 obtains a start point Ss and an end point Se of the posture adjustment interval with respect to the midair path, an angle Cs of the control line at the start point of the posture adjustment interval, and an angle Ce of the control line at the end point of the posture adjustment interval in a similar manner to that described above, obtains an intervening variable sm with respect to the projection tip path and an intervening variable Sm with respect to the projection midair path at the tangent point in a similar manner to the intervening variables sm and Sm with respect to the intersection in the case shown in Fig. 19, and obtains an angle Cm of the control line at the tangent point in a similar manner to the angle Cm of the control line at the intersection in the case shown in Fig. 19. Moreover, from the obtained information, the posture adjustment information derivation unit 16 registers information with contents similar to that shown in Fig. 19 as posture adjustment interval with respect to the start point-side interval in the memory 5, and registers information with contents similar to that shown in Fig. 19 as posture adjustment interval with respect to the end point-side interval in the memory 5.

In addition, when an interval (hereinafter, referred to as a singular point continuous interval) in which singular points continue exists on the post-local interpolation tip path and the post-local interpolation midair path, the singular point being a point where a length of the projection tool axis vector becomes 0 (a point where the tool axis vector becomes perpendicular to the specific plane), the posture adjustment information derivation unit 16 sets an interval before and after the singular point continuous interval and having a specific interval width as a posture adjustment interval.

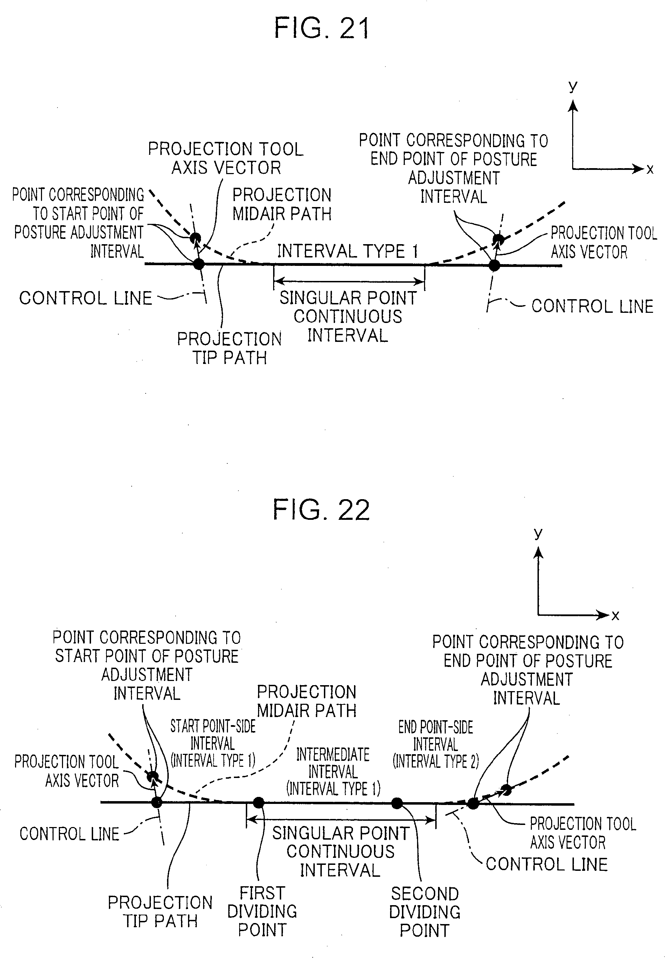

Furthermore, when the control line is not close to parallel to a tangential direction (an advancing direction) of the projection tip path at both the start point ss and the end point se of the posture adjustment interval including the singular point continuous interval (refer to Fig. 21), the posture adjustment information derivation unit 16 registers, as posture adjustment information in the memory 5, a posture adjustment interval (ss, se) with respect to the tip path, a posture adjustment interval (Ss, Se) (where Ss = ss and Se = se) with respect to the midair path, an angular range (Cs, Ce) of the control line in the posture adjustment interval, and information describing that the posture adjustment interval falls under interval type 1.

In addition, when the control line is not close to parallel to the tangential direction (the advancing direction) of the projection tip path at the start point ss of the posture adjustment interval including the singular point continuous interval and the control line is close to parallel to the tangential direction (the advancing direction) of the projection tip path at the end point se of the posture adjustment interval (refer to Fig. 22), the posture adjustment information derivation unit 16 divides the posture adjustment interval into a start point-side interval between the start point ss of the posture adjustment interval and a first dividing point sm positioned slightly towards the end point from a start point of the singular point continuous interval, an intermediate interval between the first dividing point sm and a second dividing point sn positioned slightly towards the start point from an end point of the singular point continuous interval, and an end point-side interval from the second dividing point sn to the end point se of the posture adjustment interval, and determines that the start point-side interval and the intermediate interval fall under interval type 1 and that the end point-side interval falls under interval type 2. Subsequently, the posture adjustment information derivation unit 16 obtains a first dividing point Sm with respect to the midair point as an intervening variable equivalent to the first dividing point sm and obtains a second dividing point Sn with respect to the midair point as an intervening variable equivalent to the second dividing point sm. Furthermore, the posture adjustment information derivation unit 16 obtains an angle Cs of the control line at the start point of the posture adjustment interval and an angle Ce of the control line at the end point of the posture adjustment interval, sets an angle Cm of the control line at the first dividing point as an angle equivalent to the angle Cs of the control line at the start point of the posture adjustment interval, and sets an angle Cn of the control line at the second dividing point as an angle equivalent to an angle formed between the advancing direction of the projection tip path at the second dividing point and the reference direction. Moreover, from the information obtained as described above, the posture adjustment information derivation unit 16 registers, as posture adjustment information in the memory 5, a start point-side interval (ss, sm) with respect to the tip path, a start point-side interval (Ss, Sm) (where Ss = ss) with respect to the midair path, an angular range (Cs, Cm) of the control line in the start point-side interval, and information describing that the start point-side interval falls under interval type 1, the posture adjustment information derivation unit 16 registers, as posture adjustment information in the memory 5, an intermediate interval (sm, sn) with respect to the tip path, an intermediate interval (Sm, Sn) with respect to the midair path, an angular range (Cm, Cn) of the control line in the intermediate interval, and information describing that the intermediate interval falls under interval type 1, and the posture adjustment information derivation unit 16 registers, as posture adjustment information in the memory 5, an end point-side interval (sn, se) with respect to the tip path, an end point-side interval (Sn, Se) (where Se = se) with respect to the midair path, an angular range (Cn, Ce) of the control line in the end point-side interval, and information describing that the end point-side interval falls under interval type 2.

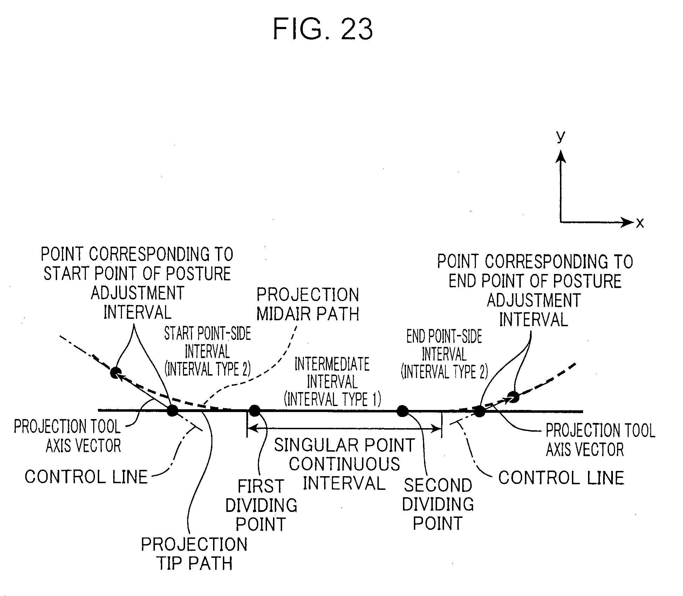

In addition, when the control line is close to parallel to the tangential direction (the advancing direction) of the projection tip path at both the start point ss and the end point se of the posture adjustment interval including the singular point continuous interval (refer to Fig. 23), the posture adjustment information derivation unit 16 divides the posture adjustment interval into a start point-side interval between the start point ss of the posture adjustment interval and a first dividing point sm positioned slightly towards the end point from a start point of the singular point continuous interval, an intermediate interval between the first dividing point sm and a second dividing point sn positioned slightly towards the start point from an end point of the singular point continuous interval, and an end point-side interval from the second dividing point sn to the end point se of the posture adjustment interval, and determines that the start point-side interval and the end point-side interval fall under interval type 2 and that the intermediate interval falls under interval type 1. Subsequently, in a similar manner to that shown in Fig. 22, the posture adjustment information derivation unit 16 obtains a first dividing point Sm on the midair path, a second dividing point Sn on the midair path, an angle Cs of the control line at the start point of the posture adjustment interval, and an angle Ce of the control line at the end point of the posture adjustment interval. Furthermore, the posture adjustment information derivation unit 16 sets an angle Cm of the control line at the first dividing point to an angle equivalent to an angle formed between an advancing direction of the projection tip path at the first dividing point and the reference direction, and sets an angle Cn of the control line at the second dividing point to an angle equivalent to an angle formed between an advancing direction of the projection tip path at the second dividing point and the reference direction. Moreover, from the information obtained as described above, the posture adjustment information derivation unit 16 registers, as posture adjustment information in the memory 5, a start point-side interval (ss, sm) with respect to the tip path, a start point-side interval (Ss, Sm) (where Ss = ss) with respect to the midair path, an angular range (Cs, Cm) of the control line in the start point-side interval, and information describing that the start point-side interval falls under interval type 2, the posture adjustment information derivation unit 16 registers, as posture adjustment information in the memory 5, an intermediate interval (sm, sn) with respect to the tip path, an intermediate interval (Sm, Sn) with respect to the midair path, an angular range (Cm, Cn) of the control line in the intermediate interval, and information describing that the intermediate interval falls under interval type 1, and the posture adjustment information derivation unit 16 registers, as posture adjustment information in the memory 5, an end point-side interval (sn, se) with respect to the tip path, an end point-side interval (Sn, Se) (where Se = se) with respect to the midair path, an angular range (Cn, Ce) of the control line in the end point-side interval, and information describing that the end point-side interval falls under interval type 2.

Next, the posture adjustment information derivation unit 16 determines whether or not an interval for which the direction specification function C(s) and the tip-midair correspondence adjustment function S(s) have not been set exists in each interval registered in the memory 5 (step S44). When the posture adjustment information derivation unit 16 determines that an interval for which both functions C(s) and S(s) have not been set does not exist in the intervals registered in the memory 5, the derivation process of posture adjustment interval is terminated. On the other hand, when the posture adjustment information derivation unit 16 determines that an interval for which both functions C(s) and S(s) have not been set exists in the intervals registered in the memory 5, the posture adjustment information derivation unit 16 next extracts a single interval from the intervals for which both functions C(s) and S(s) have not been set and determines whether or not an interval type of the extracted interval is interval type 1 (step S46). In doing so, the posture adjustment information derivation unit 16 determines the interval type of the extracted interval based on information on an interval type registered with respect to the interval in the memory 5. When the posture adjustment information derivation unit 16 determines that the interval type of the extracted interval is interval type 1, the posture adjustment information derivation unit 16 derives the direction specification function C(s) of the interval and additionally registers the derived function C(s) as posture adjustment information of the interval in the memory 5 (step S48).

Specifically, the posture adjustment information derivation unit 16 calculates the direction specification function C(s) according to Expression (14) below.

$$C(s) = Cs + (Ce - Cs) \times (s - ss)/(se - ss) \ldots (14),$$

where ss) $\leq$ s $\leq$ se.

In addition, the posture adjustment information derivation unit 16 associates the calculated direction specification function C(s) with information on a corresponding interval and additionally registers the associated direction specification function C(s) as posture adjustment information in the memory 5. After step S48, a return is made to step S44 and subsequent processes are repetitively performed.

On the other hand, in step S46, when the posture adjustment information derivation unit 16 determines that the interval type of the extracted interval is not interval type 1 or, in other words, that the interval type of the extracted interval is interval type 2, the posture adjustment information derivation unit 16 derives the tip-midair correspondence adjustment function S(s) with respect to the extracted interval and additionally registers the derived function S(s) as posture adjustment information of the interval in the memory 5 (step S52). In this case, when deriving the tip-midair correspondence adjustment function S(s), the posture adjustment information derivation unit 16 obtains a tip-midair correspondence adjustment function S(s) defining a correlation between an intervening variable with respect to the post-local interpolation tip path and an intervening variable with respect to the post-local interpolation midair path so that a travel distance along the post-local interpolation midair path from a point corresponding to a start point of the extracted interval among the post-local interpolation midair path to a point corresponding to each point where the intervening variable differs in the interval is maintained at a constant ratio with respect to a travel distance along the post-local interpolation tip path from a point corresponding to the start point of the extracted interval among the post-local interpolation tip path to a point corresponding to each point where the intervening variable differs.

Specifically, the posture adjustment information derivation unit 16 sets a plurality of intermediate points within the posture adjustment interval (ss, se), and respectively derives travel distances along the post-local interpolation tip path from a point corresponding to the start point ss of the posture adjustment interval among the post-local interpolation tip path to points corresponding to the respective intermediate points and a point corresponding to the end point se and travel distances along the post-local interpolation midair path from a point corresponding to the start point ss of the posture adjustment interval among the post-local interpolation midair path to points corresponding to the respective intermediate points and a point corresponding to the end point se. For example, as shown in Fig. 14, a start point s0 is set as a point equivalent to the start point ss of the posture adjustment interval, an end point s5 is set as a point equivalent to the end point se of the posture adjustment interval, and four intermediate points s1, s2, s3, and s4 are set between the start point s0 and the end point s5. In addition, the posture adjustment information derivation unit 16 calculates travel distances $len_i$ (i = 0, 1, 2, 3, 4, 5) along the post-local interpolation tip path from a point p(s0) on the post-local interpolation tip path corresponding to the start point s0 to respective points p(s1), p(s2), p(s3), p(s4), and p(s5) on the post-local interpolation tip path corresponding to the respective intermediate points s1, s2, s3, s4 and the end point s5. Furthermore, the posture adjustment information derivation unit 16 calculates travel distances $LEN_i$ (i = 0, 1, 2, 3, 4, 5) along the post-local interpolation midair path from a point P(s0) on the post-local interpolation midair path corresponding to the start point s0 to respective points P(s1), P(s2), P(s3), P(s4), and P(s5) on the post-local interpolation midair path corresponding to the respective intermediate points s1, s2, s3, s4 and the end point s5. Subsequently, the posture adjustment information derivation unit 16 derives an on-tip path distance calculation function len(s) representing a correlation between an arbitrary intervening variable in the posture adjustment interval and a travel distance along the post-local interpolation tip path corresponding to an interval from the start point of the posture adjustment interval to the arbitrary intervening variable. Specifically, the posture adjustment information derivation unit 16 derives a function representing a curve that sequentially connects points (s0, len0), (s1, len1), (s2, len2), (s3, len3), (s4, len4), and (s5, len5) as the on-tip path distance calculation function len(s) ($s0 \leq s \leq s5$). In addition, the posture adjustment information derivation unit 16 derives an on-midair path distance-intervening variable correspondence function SS(LEN) representing a correlation between an arbitrary travel distance along a post-local interpolation midair path from a point on the post-local interpolation midair path corresponding to the start point of the posture adjustment interval and an intervening variable at a point separated by the travel distance along the post-local interpolation midair path from the point on the post-local interpolation midair path corresponding to the start point of the posture adjustment interval. Specifically, the posture adjustment information derivation unit 16 derives a function representing a curve that sequentially connects points (LEN0, s0), (LEN1, s1), (LEN2, s2), (LEN3, s3), (LEN4, s4), and (LEN5, s5) as the on-midair path distance-intervening variable correspondence function SS(LEN) ($LEN0 \leq LEN \leq LEN5$). In addition, the posture adjustment information derivation unit 16 derives the tip-midair correspondence adjustment function S(s) based on the derived on-tip path distance calculation function len(s) and on-midair path distance-intervening variable correspondence function SS(LEN). Specifically, the posture adjustment information derivation unit 16 calculates the function S(s) according to Expression (15) below.

$$S(s) = SS(len(s) \times LEN5/len5) \dots (15)$$

The posture adjustment information derivation unit 16 additionally registers the tip-midair correspondence adjustment function S(s) derived as described above in the memory 5 as part of posture adjustment information. Subsequently, a return is made to step S44 and subsequent processing is repetitively performed.

After the derivation process of posture adjustment information described above has been performed, the intervening variable time function derivation unit 18 next derives an intervening variable time function representing a variation of the intervening variable with respect to the lapse of the reference time T (step S6 in Fig. 3).

Specifically, the intervening variable time function derivation unit 18 obtains an intervening variable time function (a velocity curve of the intervening variable) using the transfer axis coordinate calculation function based on the acceleration/deceleration conditions for each transfer axis stored in the storage unit 4, the post-local interpolation tip path and the post-local interpolation midair path, and posture adjustment information registered in the memory 5. More specifically, the intervening variable time function derivation unit 18 obtains the intervening variable time function as follows.

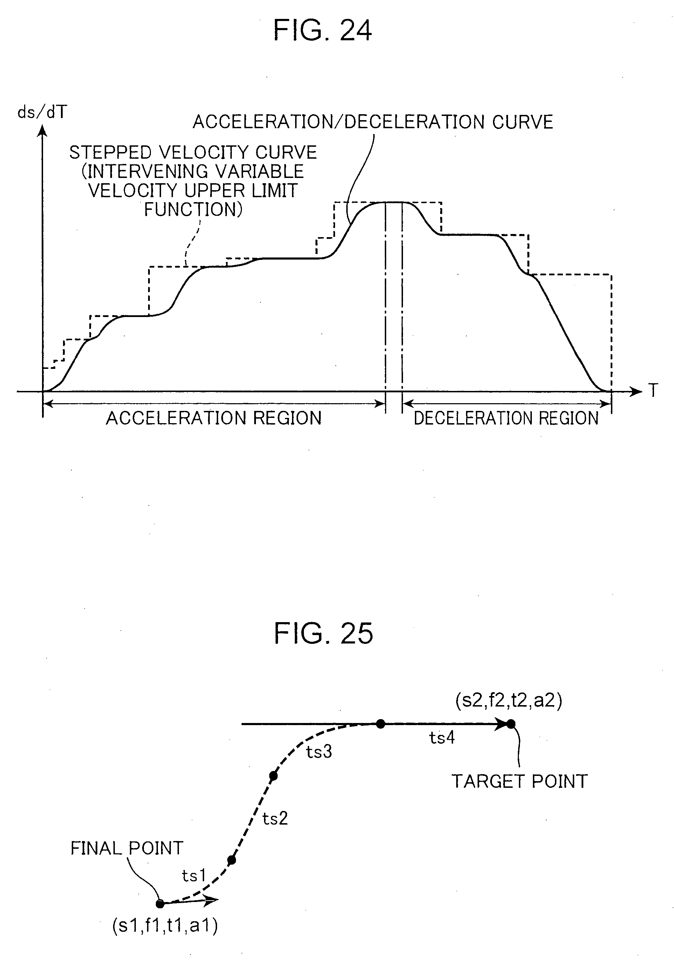

First, the intervening variable time function derivation unit 18 obtains an intervening variable velocity upper limit function that is represented by a stepped velocity curve shown in Fig. 24. The intervening variable velocity upper limit function is a function representing an upper limit value of a velocity $ds/dT$ of the intervening variable $s$ of each block between respective command points on each transfer axis path. Among the stepped velocity curve shown in Fig. 24, each horizontal portion represents a block and a velocity $ds/dT$ of the portion corresponds to an upper limit value of the velocity $ds/dT$ of the intervening variable $s$ of the block. Moreover, while each block is originally set so that increments of the intervening variable $s$ of the respective blocks are equal to one other, the time required to travel a distance corresponding to the increment of the intervening variable $s$ of each block varies. In Fig. 24, an increase in the intervening variable $s$ is converted into a passage of time $t$ and is plotted on a horizontal axis. In addition, the intervening variable time function derivation unit 18 obtains the intervening variable velocity upper limit function by obtaining an upper limit value of the velocity $ds/dT$ of the intervening variable $s$ of each block as follows.

When a block that is an object corresponds to an interval not registered as posture adjustment information in the memory 5, based on the post-local interpolation tip path and the post-local interpolation midair path, the intervening variable time function derivation unit 18 obtains position coordinates of respective tip points on the post-local interpolation tip path at a total of five points ($s_a$ - 2e, $s_a$ - e, $s_a$, $s_a$ + e, $s_a$ + 2e) in the block that is an object including a point of a prescribed intervening variable $s_a$ and two each of points in vicinities before and after the point of the prescribed intervening variable $s_a$ and respective tool axis vectors extending from the respective tip points toward corresponding midair points on the post-local interpolation midair path, and obtains respective transfer axis coordinates kp[i][] (i = 0, 1, 2, 3, 4) at the five points ($s_a$ - 2e, $s_a$ - e, $s_a$, $s_a$ + e, $s_a$ + 2e) using the transfer axis coordinate calculation function from the obtained position coordinates of the respective tip points and the respective tool axis vectors.

In addition, when a block that is an object corresponds to an interval registered as posture adjustment information in the memory 5 and the direction specification function C(s) is registered in the memory 5 with respect to the interval, the intervening variable time function derivation unit 18 obtains position coordinates of respective tip points on the post-local interpolation tip path at a total of five points ($s_a$ - 2e, $s_a$ - e, $s_a$, $s_a$ + e, $s_a$ + 2e) in the block that is an object including a point of a prescribed intervening variable $s_a$ and two each of points in vicinities before and after the point of the prescribed intervening variable $s_a$, obtains direction specifying angles corresponding to the five intervening variable positions using the direction specification function C(s) of the interval, and obtains a position coordinate of each midair point on the post-local interpolation midair path corresponding to each intersection where a straight line which passes through a projection tip point that is a projection of each obtained tip point on the specific plane and which has each obtained direction specifying angle with respect to a reference direction intersects with the projection midair path. Furthermore, tool axis vectors extending from respective tip points corresponding to the five intervening variable positions ($s_a$-2e, $s_a$ - e, $s_a$, $s_a$ + e, $s_a$ + 2e) toward corresponding points among the obtained midair points are respectively obtained. In addition, when a block that is an object corresponds to an interval registered as posture adjustment information in the memory 5 and the tip-midair correspondence adjustment function S(s) is registered in the memory 5 with respect to the interval, the intervening variable time function derivation unit 18 obtains position coordinates of respective tip points on the post-local interpolation tip path at a total of five points ($s_a$ - 2e, $s_a$ - e, $s_a$, $s_a$ + e, $s_a$ + 2e) in the block that is an object including a point of a prescribed intervening variable $s_a$ and two each of points in vicinities before and after the point of the prescribed intervening variable $s_a$, obtains five intervening variables with respect to the post-local interpolation midair path corresponding to the five intervening variables based on the tip-midair correspondence adjustment function S(s) with respect to the interval to which the block that is an object corresponds and obtains position coordinates of midair points on the post-local interpolation midair path corresponding to the five obtained intervening variables, and respectively obtains tool axis vectors extending from respective tip points corresponding to the five points ($s_a$ - 2e, $s_a$ - e, $s_a$, $s_a$ + e, $s_a$ + 2e) toward respective midair points on the post-local interpolation midair path corresponding to the five intervening variables. Furthermore, the intervening variable time function derivation unit 18 obtains respective transfer axis coordinates kp[i][] (i = 0, 1, 2, 3, 4) at the five points ($s_a$ - 2e, $s_a$ - e, $s_a$, $s_a$ + e, $s_a$ + 2e) using the transfer axis coordinate calculation function from the position coordinates of the respective tip points and the respective tool axis vectors obtained as described above.

Moreover, e denotes a parameter representing a minute distance in the intervening variable. In addition, i = 0 corresponds to the point ($s_a$ - 2e), i = 1 corresponds to the point ($s_a$-e), i = 2 corresponds to the point $s_a$, i = 3 corresponds to the point ($s_a$ + e), and i = 4 corresponds to the point ($s_a$ + 2e). Furthermore, [] indicates a value with respect to each transfer axis.

Subsequently, the intervening variable time function derivation unit 18 obtains an approximated value ds1[ax] of a primary differential value of the transfer axis path with respect to the intervening variable at the point $(s_a - e)$ according to Expression (16) below, obtains an approximated value ds2[ax] of a primary differential value of the transfer axis path with respect to the intervening variable at the point $(s_a + e)$ according to Expression (17) below, and obtains an approximated value ddss[ax] of a secondary differential value of the transfer axis path with respect to the intervening variable at a point corresponding to the intervening variable $s_a$ using the two obtained approximated values ds1[ax] and ds2[ax] and Expression (18) below. Moreover, ax is an index representing each transfer axis.

$$ds1[ax] = (kp[2][ax] - kp[0][ax])/2e \dots (16)$$

$$ds2[ax] = (kp[4][ax] - kp[2][ax])2e \dots (17)$$

$$ddss[ax] = (ds2[ax] - ds1[ax])/2e \dots (18)$$

Supposing that the point of the intervening variable $s_a$ is passed at a uniform velocity v, an acceleration a[] for each transfer axis can be approximated by $v^2 \times ddss[]$. Therefore, if an allowable acceleration for each transfer axis among the acceleration/deceleration conditions stored in the storage unit 4 is denoted by A[], then the intervening variable time function derivation unit 18 obtains a velocity upper limit value vm of a target block according to Expression (19) below.

$$vm = (A[ax]/ddss[ax])^{1/2} \dots (19)$$

In addition, the intervening variable time function derivation unit 18 sets a lowest value among the velocity upper limit value vm of a corresponding block for each transfer axis obtained as described above and a velocity corresponding to the block among velocity commands included in the machining program as an upper limit of the velocity ds/dT of the intervening variable s of the block. The intervening variable time function derivation unit 18 respectively obtains an upper limit value of the velocity ds/dT of the intervening variable s of all blocks according to the method described above and obtains an intervening variable velocity upper limit function by connecting the obtained upper limit values of the respective blocks.

Next, the intervening variable time function derivation unit 18 obtains an acceleration/deceleration curve ds(T)/dT which continuously varies so as not to exceed the stepped velocity curve represented by the intervening variable velocity upper limit function based on an allowable velocity, an allowable acceleration, and an allowable jerk of the intervening variable s included in the acceleration/deceleration conditions stored in the storage unit 4, and calculates an intervening variable time function s(T) by integrating the obtained acceleration/deceleration curve ds(T)/dT by the reference time T.

Specifically, first, the intervening variable time function derivation unit 18 sequentially obtains, and resisters in the memory 5, a velocity curve (velocity function) of an acceleration region among the acceleration/deceleration curve ds(T)/dT from a start point side to an end point side for each prescribed time interval together with a time interval width ts of the time interval. At this point, the intervening variable time function derivation unit 18 obtains a velocity curve for each time interval together with a time interval width ts of the interval, the velocity curve being a velocity curve in which, during a process of reaching an end point of a block set as a target point (s2, f2) from a final point (s1, f1, t1) of a velocity curve previously registered in the memory 5, a velocity f1 at the final point may increase to an upper limit value (velocity upper limit value f2) of the velocity ds/dT of the block. Moreover, a form of the velocity curve obtained at this time differs according to conditions such as a difference (s2 - s1) in intervening variables between the final point and the target point, the velocity f1 at the final point, the velocity upper limit value f2, an acceleration a1 at the final point, an allowable acceleration, and an allowable jerk. Methods of obtaining a velocity curve in according to the respective conditions are shown in Figs. 25 to 31.

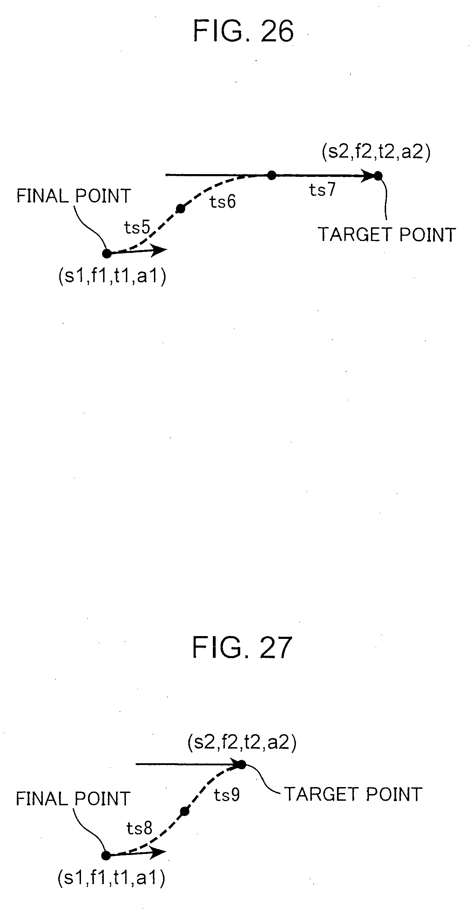

Figs. 25 and 26 show a case where the velocity reaches the velocity upper limit value f2 before reaching the target point (s2, f2) from the final point (s1, f1, t1). Moreover, t2 denotes a time upon reaching s2. Specifically, Fig. 25 shows a velocity curve with a shape in which the velocity is increased from f1 so that the acceleration increases from a1 to the allowable acceleration from the final point (s1, f1, t1) in accordance with the allowable jerk (time interval ts1), the velocity subsequently increases at an acceleration equal to the allowable acceleration (time interval ts2), the acceleration is subsequently decreased in accordance with the allowable jerk so that the velocity does not exceed the velocity upper limit value f2 and the velocity reaches the velocity upper limit value f2 (time interval ts3), and the target point (s2, f2) is subsequently reached at a velocity equal to the velocity upper limit value f2 (time interval ts4). The intervening variable time function derivation unit 18 calculates a velocity curve (velocity function) for each time interval together with a time interval width ts1 to ts4 of each interval according to such conditions and registers the calculated velocity curves together with the corresponding time intervals in the memory 5. In addition, Fig. 26 shows a velocity curve with a shape in which the velocity is increased from f1 so that the acceleration increases from a1 from the final point (s1, f1, t1) in accordance with the allowable jerk (time interval ts5), but since the velocity upper limit value f2 is close, the acceleration is decreased in accordance with the allowable jerk before the allowable acceleration is reached and the velocity reaches the velocity upper limit value f2 (time interval ts6), and the target point (s2, f2) is subsequently reached at a velocity equal to the velocity upper limit value f2 (time interval ts7). The intervening variable time function derivation unit 18 calculates a velocity curve (velocity function) for each time interval together with a time interval width ts5 to ts7 of each interval according to such conditions and registers the calculated velocity curves together with the corresponding time intervals in the memory 5.

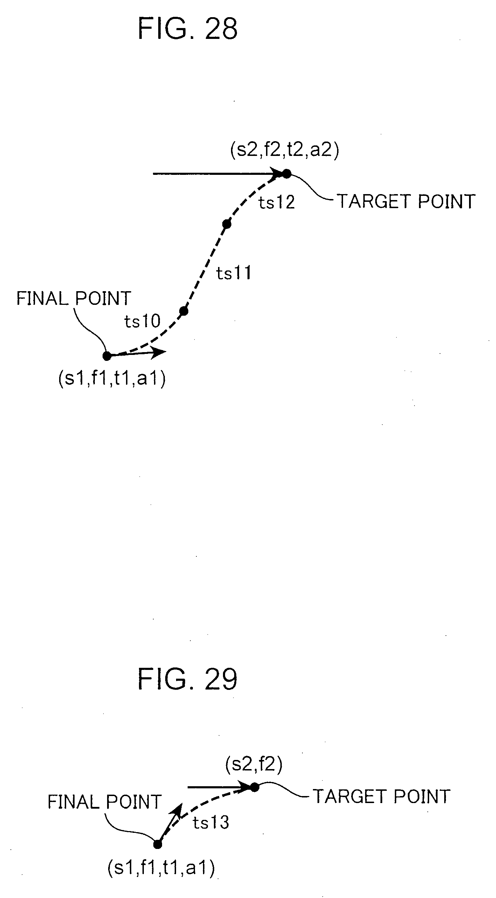

Moreover, Figs. 27 to 29 show cases where the target point (s2, f2) is reached while acceleration is decreasing in accordance with the allowable jerk. Specifically, Fig. 27 shows a velocity curve with a shape in which the velocity is increased from f1 so that the acceleration increases from a1 from the final point (s1, f1, t1) in accordance with the allowable jerk (time interval ts8), but since a distance (s2 - s1) from the final point to the target point (s2, f2) is short, the acceleration is decreased in accordance with the allowable jerk and the velocity reaches the velocity upper limit value f2 and the target point (s2, f2) is reached before the velocity reaches the allowable acceleration (time interval ts9). The intervening variable time function derivation unit 18 calculates a velocity curve (velocity function) for each time interval together with a time interval width ts8, ts9 of each interval according to such conditions and registers the calculated velocity curves together with the corresponding time intervals in the memory 5. In addition, Fig. 28 shows a velocity curve with a shape in which the velocity is increased from f1 so that the acceleration increases from a1 to the allowable acceleration from the final point (s1, f1, t1) in accordance with the allowable jerk (time interval ts10), the velocity subsequently increases at an acceleration equal to the allowable acceleration (time interval ts11), and the target point (s2, f2) is subsequently reached while the acceleration is being decreased in accordance with the allowable jerk so that the velocity does not exceed the velocity upper limit value f2 (time interval ts12). The intervening variable time function derivation unit 18 calculates a velocity curve (velocity function) for each time interval together with a time interval width ts 10 to ts12 of each interval according to such conditions and registers the calculated velocity curves together with the corresponding time intervals in the memory 5. Furthermore, Fig. 29 shows a velocity curve with a shape in which, since the final point (s1, f1, t1) and the target point (s2, f2) are extremely close to each other, the velocity f1 at the final point and the velocity upper limit value f2 are extremely close to each other, and the acceleration a1 at the final point is large, the velocity increases from f1 and reaches the velocity upper limit value f2 and the target point (s2, f2) is reached while the acceleration is being decreased from a1 in accordance with the allowable jerk from the final point (time interval ts13). The intervening variable time function derivation unit 18 calculates a velocity curve (velocity function) for the interval together with a time interval width ts13 according to such conditions and registers the calculated velocity curve together with the time interval ts 13 in the memory 5.

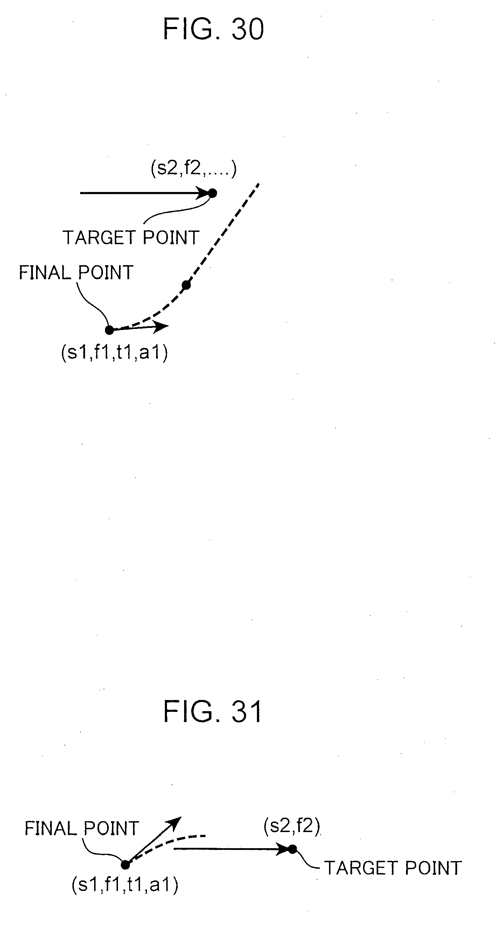

In addition, Fig. 30 shows a case where the velocity cannot be increased to velocity upper limit value f2 even when the intervening variable s reaches a value s2 that corresponds to the target point. When such a case applies upon calculation of a velocity curve by the intervening variable time function derivation unit 18, the intervening variable time function derivation unit 18 does not register the calculated velocity curve in the memory 5.

Furthermore, Fig. 31 shows a case where, since the velocity f1 at the final point (s1, f1, t1) and the velocity upper limit value f2 are extremely close to each other and the acceleration a1 at the final point is relatively large, the velocity exceeds the velocity upper limit value f2 even when the acceleration is decreased in accordance with the allowable jerk from the final point (s1, f1, t1). When such a case applies upon calculation of a velocity curve, the intervening variable time function derivation unit 18 erases data of the velocity curve last registered in the memory 5 and performs a recalculation for obtaining a velocity curve between a final point of a velocity curve registered second to last in the memory 5 and a present target point and in which the velocity may reach a velocity upper limit value corresponding to the present target point. Recalculation methods to be used in this case are similar to the methods in the respective cases described above.

In addition, the intervening variable time function derivation unit 18 sequentially performs calculation and registration of a velocity curve as described above. When registering an obtained velocity curve in the memory 5, the intervening variable time function derivation unit 18 also registers a time t2 and an acceleration a2 of the time of arrival at the target point in the memory 5, and when setting a next target point to calculate a velocity curve, the intervening variable time function derivation unit 18 calculates a next velocity curve by using the registered time t2 as time t1 at the final point and using the registered acceleration a2 as acceleration a1 at the final point. Due to a velocity curve obtained until a velocity upper limit value corresponding to a next target point becomes smaller with respect to a velocity of a final point, a velocity curve of an acceleration region among an acceleration/deceleration curve is obtained.

Next, the intervening variable time function derivation unit 18 sequentially performs calculation and registration of a velocity curve similar to those described above from an end point side toward a start point side of a path with respect to a deceleration region among an acceleration/deceleration curve, and thereby obtains a velocity curve of the deceleration region. In addition, the intervening variable time function derivation unit 18 obtains an acceleration/deceleration curve ds(T)/dT by connecting an end point of the obtained velocity curve of the acceleration region and a start point of the obtained velocity curve of the deceleration region. Furthermore, the intervening variable time function derivation unit 18 calculates an intervening variable time function s(T) by integrating the obtained acceleration/deceleration curve ds(T)/dT by reference time T.

Next, derivation of the reference time T and pulse interpolation by the transfer command derivation unit 20 and pulse output to the table transfer device 102 and the respective transfer units 110b, 112b, 114b, and 116b by the control unit 22 are performed (step S7 in Fig. 3).

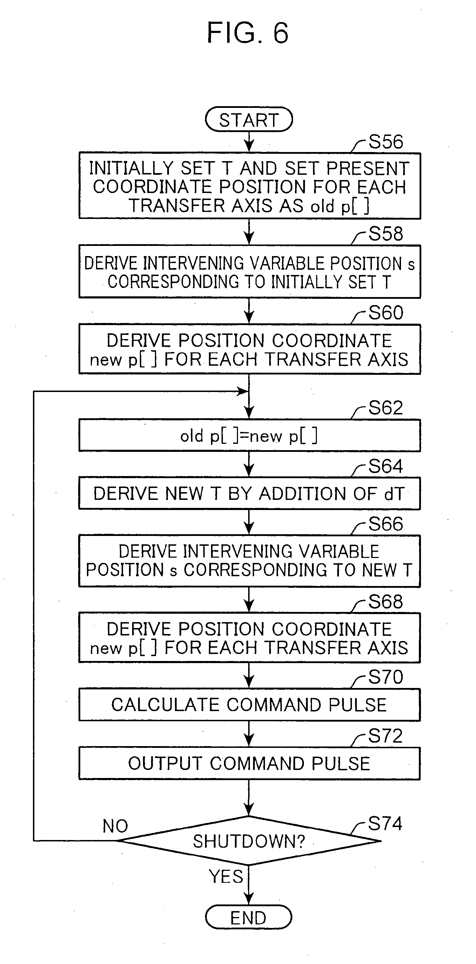

A detailed process of step S7 is shown in the flow chart of Fig. 6. In this process, first, the transfer command derivation unit 20 initially sets the reference time T so that the reference time T conforms to a time that is a start point of the intervening variable time function obtained in step S6 and sets a present position coordinate for each transfer axis to oldp[] (step S56 in Fig. 6).

Next, the transfer command derivation unit 20 obtains an intervening variable position s corresponding to the initially set reference time T (step S58). Specifically, the transfer command derivation unit 20 obtains an intervening variable position s corresponding to the initially set reference time T using the intervening variable time function s(T) obtained by the intervening variable time function derivation unit 18.

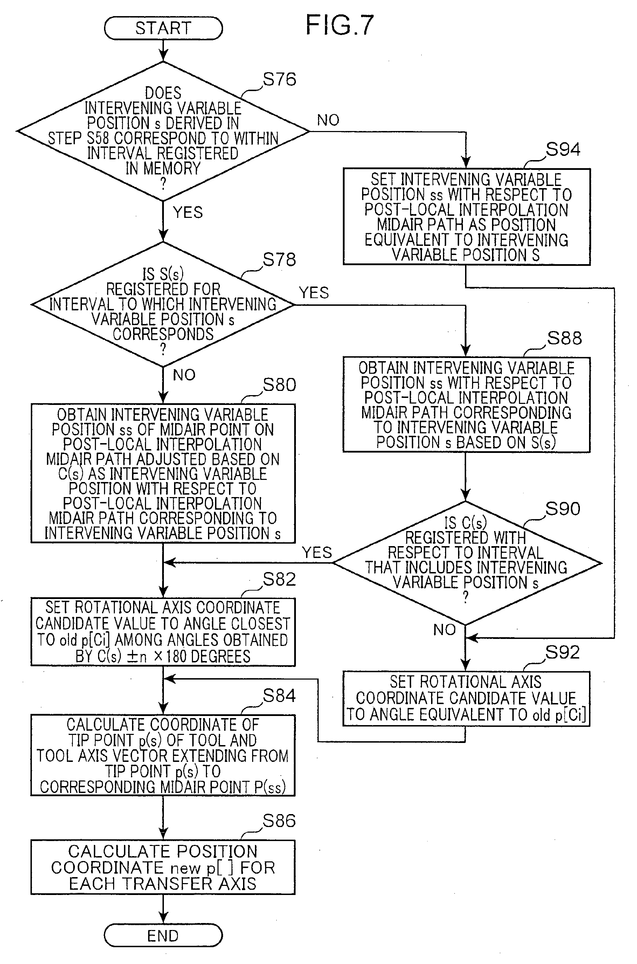

Next, the transfer command derivation unit 20 obtains each transfer axis coordinate newp[] corresponding to the obtained intervening variable position s using the transfer axis coordinate calculation function (step S60). A detailed process of this step is shown in the flow chart of Fig. 7.

Specifically, the transfer command derivation unit 20 determines whether or not the intervening variable position s derived in step S58 is an intervening variable within an interval of posture adjustment information registered in the memory 5 (step S76). At this point, if the transfer command derivation unit 20 determines that the intervening variable position s derived in step S58 is an intervening variable within an interval of posture adjustment information registered in the memory 5, the transfer command derivation unit 20 next determines whether or not the tip-midair correspondence adjustment function S(s) is registered in the memory 5 as posture adjustment information corresponding to the interval to which the intervening variable position s corresponds (step S78). At this point, if the transfer command derivation unit 20 determines that the tip-midair correspondence adjustment function S(s) is not registered in the memory 5 as posture adjustment information corresponding to the interval, the transfer command derivation unit 20 next obtains an intervening variable ss of a midair point on a post-local interpolation midair path adjusted based on the direction specification function C(s) corresponding to the interval as a intervening variable position with respect to the post-local interpolation midair path to be associated with the intervening variable position s derived in step S58 (step S80). Specifically, the transfer command derivation unit 20 obtains a direction specifying angle that is an angle formed between a control line corresponding to the intervening variable position s derived in step S58 and the reference direction using the direction specification function C(s) included in the posture adjustment information corresponding to the interval, and calculates an intervening variable ss with respect to a midair point on the post-local interpolation midair path corresponding to an intersection where a straight line which passes through a projection tip point that is a projection on the specific plane of a tip point on the post-local interpolation tip path corresponding to the intervening variable position s derived in step S58 and which forms the obtained direction specifying angle with respect to the reference direction intersects with the projection midair path.

Next, from respective angles calculated by direction specifying angle C(s) ± n × 180 degrees (n = 0, 1, 2, 3, ...), the transfer command derivation unit 20 sets an angle that is closest to a rotational transfer axis coordinate (C axis coordinate oldp[Ci]) among the transfer axis coordinates oldp[] set in step S56 as a rotational axis coordinate candidate value, the direction specifying angle C(s) being obtained in step S80 (step S82).

Next, the transfer command derivation unit 20 obtains a tool position constituted by a coordinate in the reference coordinate system of a tip point p(s) on the post-local interpolation tip path corresponding to the intervening variable position s derived in step S58 and a tool axis vector extending from the tip point p(s) toward a midair point P(ss) corresponding to the intervening variable ss obtained in step S80 (step S84).

In addition, the transfer command derivation unit 20 calculates a position coordinate newp[] for each transfer axis corresponding to the obtained tool position (step S86). Specifically, in order to have the tool 106 assume a position and a posture in which the tip point of the tool 106 is arranged at the position coordinate of the tip point p(s) obtained in step S84 and the tool axis vector (axis) of the tool 106 conform to the tool axis vector obtained in step S84, the transfer command derivation unit 20 calculates a position coordinate at which the table transfer device 102 arranges the table 101a, the swinging support transfer unit 110b arranges the swinging support 110a, the rotating support transfer unit 112b arranges the rotating support 112a, the ram transfer unit 114b arranges the ram 114a, and the saddle transfer unit 116b arranges the saddle 116a on respectively corresponding transfer axes. Moreover, when the tool position corresponds to a singular point, since a C axis coordinate becomes indeterminate, the transfer command derivation unit 20 sets the rotational axis coordinate candidate value obtained in step S82 as the C axis coordinate.

When the transfer command derivation unit 20 determines in step S78 that the tip-midair correspondence adjustment function S(s) is registered in the memory 5 as posture adjustment information corresponding to an interval that includes the intervening variable position s derived in step S58, the transfer command derivation unit 20 obtains an intervening variable ss (midair point specifying intervening variable) with respect to a post-local interpolation midair path to be associated with the intervening variable position s derived in step S58 based on the tip-midair correspondence adjustment function S(s) corresponding to the interval (step S88). In other words, the transfer command derivation unit 20 sets, as the intervening variable ss, a value obtained by substituting the intervening variable s derived in step S58 into the tip-midair correspondence adjustment function S(s).

Next, the transfer command derivation unit 20 determines whether or not the direction specification function C(s) is registered in the memory 5 as posture adjustment information corresponding to an interval that includes the intervening variable position s derived in step S58 (step S90). At this point, when the transfer command derivation unit 20 determines that the direction specification function C(s) is registered in the memory 5 as posture adjustment information corresponding to the interval, the transfer command derivation unit 20 performs processing of step S80 and thereafter. On the other hand, when the transfer command derivation unit 20 determines that the direction specification function C(s) is not registered in the memory 5 as posture adjustment information corresponding to the interval, the transfer command derivation unit 20 next sets the rotational axis coordinate candidate value to an angle equivalent to the rotational transfer axis coordinate (C axis coordinate oldp[Ci]) among the transfer axis coordinates oldp[] set in step S56 (step S92), and subsequently performs the processing of steps S84 and S86.

In addition, when the transfer command derivation unit 20 determines in step S76 that the intervening variable position s derived in step S58 is not an intervening variable within an interval registered in the memory 5, the transfer command derivation unit 20 sets a position (an intervening variable) equivalent to the intervening variable position s derived in step S58 as an intervening variable position ss with respect to a midair point on the post-local interpolation midair path corresponding to the intervening variable position s derived in step S58 (step S94) and subsequently performs the processing of step S92.

Next, the transfer command derivation unit 20 sets the position coordinate newp[] of each transfer axis obtained as described above as an old coordinate oldp[] (step S62 in Fig. 6).

Next, the transfer command derivation unit 20 adds a reference unit time dT to the reference time T initially set in step S56 to obtain a new reference time T (step S64).

Subsequently, the transfer command derivation unit 20 obtains an intervening variable position s corresponding to the new reference time T in a similar manner to step S58 (step S66), and obtains a position coordinate newp[] on each transfer axis corresponding to the obtained intervening variable position s (step S68). In step S68, the transfer command derivation unit 20 basically obtains the position coordinate newp[] on each transfer axis in a similar manner to step S60 or, in other words, according to the flow chart shown in Fig. 7. However, when a rotational axis coordinate candidate value is obtained in step S68 by a process corresponding to step S82, an angle that is closest to the C axis coordinate oldp[Ci] of the old coordinates oldp[] set in step S62 is set as a rotational axis coordinate candidate value, and when a rotational axis coordinate candidate value is obtained by a process corresponding to step S92, the rotational axis coordinate candidate value is set to an angle equivalent to the C axis coordinate oldp[Ci] of the old coordinates oldp[] set in step S62.

Next, the transfer command derivation unit 20 calculates a command pulse (step S70). Specifically, the transfer command derivation unit 20 subtracts a corresponding old coordinate oldp[] for each transfer axis set in step S62 from the position coordinate newp[] for each transfer axis obtained in step S68 to obtain a variation of the position coordinate on each transfer axis per reference unit time dT or, in other words, a transfer amount per reference unit time dT of the transfer object with respect to each transfer axis, and sets the obtained transfer amount as a command pulse per unit time (per specific period) of real time.

Subsequently, the control unit 22 outputs, to the servomotor of the table transfer device 102 and the respective transfer units 110b, 112b, 114b, and 116b, a command pulse indicating a transfer amount with respect to a corresponding transfer axis among the command pulses per specific period obtained by the transfer command derivation unit 20 (step S72). As a result, the table transfer device 102 transfers the table 101a, the swinging support transfer unit 110b transfers the swinging support 110a, the rotating support transfer unit 112b transfers the rotating support 112a, the ram transfer unit 114b transfers the ram 114a, and the saddle transfer unit 116b transfers the saddle 116a per the specific period by a transfer amount indicated by the command pulse from the control unit 22 along each corresponding transfer axis.

Next, the transfer command derivation unit 20 determines whether or not shutdown processing is to be performed (step S74). At this point, when the transfer command derivation unit 20 determines that shutdown processing is to be performed, the shutdown processing is performed and the numerical control process according to the present embodiment is concluded. On the other hand, when the transfer command derivation unit 20 determines that shutdown processing is not to be performed, processing of steps S62 and thereafter is repetitively performed. In step S62 performed once again, the transfer command derivation unit 20 sets the position coordinate newp[] of each transfer axis obtained in step S68 as an old coordinate oldp[].

The control process by the numerical control device 2 according to the present embodiment is performed as described above.

As described above, in the present embodiment, since the posture adjustment information derivation unit 16 obtains posture adjustment information for adjusting a posture of the tool 106 so that a variation of a direction of a projection tool axis vector becomes gradual in a posture adjustment interval before and after a posture adjustment location at which the variation of the direction of the projection tool axis vector with respect to an increase in an intervening variable exceeds a constant variation rate and the transfer command derivation unit 20 obtains a tool axis vector extending from a tip point on a post-local interpolation tip path corresponding to an intervening variable in the posture adjustment interval toward a midair point on a midair path on a post-local interpolation midair path for which a relative positional relationship with respect to the tip point has been adjusted based on the posture adjustment information so that the variation of the direction of the projection tool axis vector becomes gradual and derives a command pulse based on the obtained tool axis vector and the position coordinate of the tip point with respect to within the posture adjustment interval, a direction of the projection tool axis vector can be prevented from suddenly varying at the posture adjustment location. Since the direction of the projection tool axis vector corresponds to the A axis direction, according to the present embodiment, a sudden rotation of the swinging device 110, the main shaft head 108, and the tool 106 by the rotating device 112 with respect to the table 101a can be prevented. As a result, a decline in machining accuracy of a workpiece and an occurrence of a mechanical shock attributable to such a sudden rotation can be suppressed.

In addition, in the present embodiment, since the transfer command derivation unit 20 obtains a position coordinate of a tip point on a tip path, the position coordinate of a tip point corresponding to the intervening variable in the posture adjustment interval, obtains a tool axis vector extending from the tip point toward a midair point on a midair path for which a relative positional relationship with respect to the tip point has been adjusted based on the posture adjustment information so that the variation of the direction of the projection tool axis vector becomes gradual, and derives a command pulse based on the obtained the position coordinate of the tip point and the obtained tool axis vector, even after an adjustment is performed so that the variation of the direction of the projection tool axis vector becomes gradual, the posture of the tool 106 can be suppressed from deflecting in a direction perpendicular to a curved surface connecting respective tip points on the tip path and respective midair points on the midair path corresponding to the respective tip points. As a result, a decline in machining accuracy of a workpiece can be similarly suppressed.

Furthermore, in particular, the present embodiment enables the tool 106 to assume a posture at which the tip point and a midair point overlap each other as seen from a direction perpendicular to the specific plane or, in other words, a posture which makes the tool axis vector perpendicular to the specific plane when passing an intersection at which a locus traced by a post-local interpolation tip path and a locus traced by a post-local interpolation midair path intersect one another as seen from a direction perpendicular to the specific plane, and effectively prevents the tool 106 and the swinging device 110 from suddenly rotating relative to the table 101a when passing the intersection. Specifically, by having the tool 106 assume a posture that makes the tool axis vector perpendicular to the specific plane at the intersection as in the case of the present embodiment, an operation in which a tip point and a midair point approach each other as the points approach the intersection and separate from each other after the points pass the intersection as seen from a direction perpendicular to the specific plane can be realized by having the swinging device 110 swing the tool 106 so that an inclination of the tool 106 in the A axis direction varies in a reverse direction when passing the intersection. As a result, the tool 106 and the swinging device 110 can be prevented from suddenly rotating in the C axis direction when passing the intersection.

In addition, in the present embodiment, with respect an interval corresponding to interval type 1, an angle formed between a control line corresponding to each intervening variable and the reference direction is obtained so that the angle formed between the control line and the reference direction varies at an equal rate, and a tool axis vector is obtained for which a positional relationship of the midair point with respect to the tip point has been adjusted based on the angle. Furthermore, since a command pulse is obtained based on the tool axis vector and transfer of the transfer object is performed in accordance with the command pulse, variations of rotational angles of the tool 106 and the swinging device 110 which are relatively rotated with respect to the table 101a by the rotating device 112 can be directly adjusted to become gradual variations. Therefore, with respect to the interval, variations of rotational angles of the tool 106 and the swinging device 110 can reliably be made gradual.

In addition, in the present embodiment, with respect to a singular point at which the tool axis vector becomes perpendicular to the specific plane, since a direction specifying angle obtained from the direction specification function C(s) is used as a C axis coordinate at the singular point, the C axis coordinate is uniquely determined at the singular point and therefore an indeterminate state can be resolved. Furthermore, since the direction specifying angle of the singular point is obtained from a direction specification function which causes an angle formed between the control line and the reference direction to vary at an equal rate in an interval that is an object, a condition of gradually varying a direction of the projection tool axis vector in the object interval is satisfied. Therefore, in the present embodiment, with respect an interval corresponding to interval type 1, directions of the tool 106 and the rotating device 112 can be gradually varied while resolving an indeterminate state of a position coordinate in the rotational transfer axis direction at the singular point.

In addition, in the present embodiment, with respect an interval corresponding to interval type 2, the tip point of the tool 106 and the midair point can be moved in a state where a travel distance of the midair point along the post-local interpolation tip path from a start point of the interval and a travel distance of the midair point along the post-local interpolation midair path from a start point of the interval are maintained at a constant ratio. Therefore, an occurrence of a posture variation of the tool 106 in which a midair point that had lagged behind a tip point suddenly overtakes the tip point or a posture variation of the tool 106 causing an opposite action can be prevented, and the rotating device 112 can be prevented from significantly and suddenly rotating the tool 106 and the swinging device 110 relative to the table 101a to realize such a posture variation of the tool 106.

Furthermore, in the present embodiment, due to local interpolation of a pre-interpolation tip path and a pre-interpolation midair path by the local interpolation unit 14c of the path local filter 14b of the path interpolation unit 14, a point at which velocity is discontinuous due to a discontinuous primary differential value with respect to an intervening variable on the pre-interpolation tip path and the pre-interpolation midair path can be interpolated so that the velocity becomes continuous, and a point at which acceleration is discontinuous due to a discontinuous secondary differential value with respect to an intervening variable on the pre-interpolation tip path and the pre-interpolation midair path can be interpolated so that the acceleration becomes continuous. Therefore, with respect to a location on the pre-interpolation tip path and the pre-interpolation midair path at which a differential value with respect to an intervening variable is discontinuous due to abnormal data or the like and, consequently, a sudden velocity variation or a sudden acceleration variation occurs, the sudden velocity variation or the sudden acceleration variation can be suppressed and an occurrence of a mechanical shock at the location can be suppressed. Moreover, in the present embodiment, a location at which a differential value is discontinuous among the pre-interpolation tip path and the pre-interpolation midair path can be interpolated and a factor of mechanical shock can be removed from the paths before the transfer command derivation unit 20 derives a command pulse for each transfer axis. Therefore, it is no longer necessary to perform acceleration/deceleration processing after the transfer command derivation unit 20 derives a command pulse in order to interpolate a location which may be a factor of mechanical shock among the command pulse.

In addition, in the present embodiment, since the pre-interpolation path derivation unit 13 reads a workpiece coordinate system tool path included in the machining program, transforms the read workpiece coordinate system tool path into a path in the reference coordinate system based on workpiece placement information to derive a reference coordinate system tool path, and derives a pre-interpolation tip path and a pre-interpolation midair path based on the derived reference coordinate system tool path, even if the workpiece 100 is placed on the table 101a in a posture at which the workpiece coordinate system is inclined with respect to the reference coordinate system, a position of a posture adjustment location in accordance with the posture of the workpiece 100 can be accurately specified and a sudden rotation of the tool 106 and the swinging device 110 with respect to the table 101a in an operation in a vicinity of the posture adjustment location can be prevented.

The embodiment disclosed herein should be considered in all respects illustrative and not restrictive. It is intended that the scope of the present invention be defined not by the description of the embodiment given above but rather by the claims appended hereto, and that the scope of the invention include equivalents thereof and all modifications made therein.

For example, the numerical control device according to the present invention can also be applied to various types of machine tools that differ from the machine tool described in the embodiment above. For example, the numerical control device according to the present invention can also be applied to a five-axis machine tool with a rotating machine table.

In addition, the numerical control device need not necessarily include a path interpolation unit and may perform derivation of posture adjustment information, derivation of an intervening variable time function, and derivation of a command pulse based on an uninterpolated tip path and an uninterpolated midair path obtained from a tool path of the machining program.

Furthermore, while primary differentials of a tip path and a midair path with respect to an intervening variable are distributed to distributed intervals using a linear distribution function in the embodiment described above, this distribution method is not restrictive. In addition, various distribution functions other than a linear distribution function may be used for the distribution of primary differentials of a tip path and a midair path with respect to an intervening variable.

Moreover, the distribution function used for the distribution is desirably a function in which an integration in an interval expressed as [-A/2, A/2] is 1 and which has a left-right symmetrical shape with respect to a center of the interval. Examples of such a distribution function include a bell-like distribution function f(s) represented by the expression below.

$$f(s) = \begin{cases} (4/A \times s + 2)/A & (-A/2 \leqq s \leqq 0) \\ (-4/A \times s + 2)/A & (0 \leqq s \leqq A/2) \end{cases}$$

Moreover, f(s) = 0 holds true outside of the distributed interval -A/2 ≤ s ≤ A/2.

Using such a bell-like distribution function enables an interpolation interval to be interpolated into a smoother curve as compared to using the linear distribution function. In addition, by distributing a primary differential with respect to an intervening variable using a linear distribution function for a portion in which the primary differential is continuous and a secondary differential with respect to an intervening variable is discontinuous among a path and distributing a primary differential with respect to an intervening variable using a bell-like distribution function for a portion in which the primary differential varies discontinuously among a path, continuity of a variation in the secondary differential of a path after local interpolation with respect to an intervening variable can be guaranteed.

Furthermore, while the direction specification function C(s) is calculated as a linear function in the embodiment described above, favorably, a primary differential and a secondary differential with respect to intervening variables of angles of control lines at a start point and an end point of a posture adjustment interval is approximately calculated and, based on the calculated differentials, a direction specification function which enables direction specification functions before and after the start point of the posture adjustment interval to be smoothly connected at the start point and which enables direction specification functions before and after the end point of the posture adjustment interval to be smoothly connected at the end point.

In addition, when a posture adjustment location at which a locus traced by a projection tip path and a locus traced by a projection midair path are separated from one another and a variation rate of an angle formed between the projection tool axis vector and a reference direction on the specific plane with respect to an increase in an intervening variable exceeds a constant variation rate exists on a tip path and a midair path (a case such as that shown in Fig. 16), the posture adjustment information derivation unit may determine that a posture adjustment interval before and after the posture adjustment location falls under interval type 2 and derive the tip-midair correspondence adjustment function S(s) with respect to the posture adjustment interval, and the transfer command derivation unit may obtain a tool axis vector adjusted so that a direction of the projection tool axis vector in the posture adjustment interval becomes gradual based on the tip-midair correspondence adjustment function S(s).

Furthermore, a method of deriving a distributed interval width and an interpolation interval width is not limited to the method described above and a distributed interval width and an interpolation interval width may be obtained by various derivation methods other than that described above. In addition, while the interpolation interval width is set to an interval width that is equal in size to the distributed interval width in the embodiment, the interpolation interval width is not limited to this interval width. In other words, the interpolation interval width may be an interval width greater than the distributed interval width.

Furthermore, local interpolation of a path need not necessarily be performed so that a secondary differential value with respect to an intervening variable becomes continuous at an interpolation object point in an interpolation interval. For example, an interpolation interval of a path may be locally interpolated in a state where a primary differential value with respect to an intervening variable is continuous but a secondary differential value with respect to an intervening variable remains discontinuous at an interpolation object point in the interpolation interval.

In addition, when intervals in which the secondary differential value with respect to the intervening variable exceeds an upper limit value exist consecutively for a certain interval in a path after smooth interpolation, an interval obtained by expanding a distributed interval by the certain interval may be adopted as an interpolation interval.

Furthermore, when the posture adjustment information derivation unit derives the direction specification function C(s) and registers the direction specification function C(s) in the memory, in order to reduce a computational load on the intervening variable time function derivation unit during derivation of an intervening variable time function and to reduce a computational load on the transfer command derivation unit during derivation of a command pulse (during pulse interpolation), the posture adjustment information derivation unit may derive the tip-midair correspondence adjustment function S(s) of the interval in which the direction specification function C(s) has been derived based on the direction specification function C(s), the projection tip path, and the projection midair path, register the derived function S(s) in the memory.

Specifically, in the flow chart shown in Fig. 5, after derivation of the direction specification function C(s) and registration of the function C(s) in the memory by the posture adjustment information derivation unit in step S48, a step may be added in which the posture adjustment information derivation unit derives the tip-midair correspondence adjustment function S(s) for an interval in which the direction specification function C(s) has been derived and additionally registers the derived function S(s) in the memory 5 as posture adjustment information on the interval. Specifically, the posture adjustment information derivation unit respectively obtains angles of control lines for a plurality of points with different intervening variables s in the interval based on the direction specification function C(s) calculated in step S48, and respectively calculates an intervening variable S at intersections where a straight line intersects with a projection midair path, the straight line passing through points on a projection tip path corresponding to the respective points at which the intervening variable s differs and forming the obtained angle of the control line with respect to the reference direction. In addition, the posture adjustment information derivation unit derives, as the tip-midair correspondence adjustment function S(s), a function that associates each calculated intervening variable S and each corresponding intervening variable s with one another, and registers the function S(s) in association with information on a corresponding interval in the memory 5. As described above, when the posture adjustment information derivation unit derives the tip-midair correspondence adjustment function S(s), the intervening variable time function derivation unit always derives an intervening variable time function based on the tip-midair correspondence adjustment function S(s) and the transfer command derivation unit always derives a command pulse based on the tip-midair correspondence adjustment function S(s).

[Summary of Embodiment]

The embodiment may be summarized as follows.

A numerical control device according to the embodiment described above is a numerical control device provided in a machine tool including a plurality of transfer devices which move a transfer object which is a workpiece or a tool for machining the workpiece along a plurality of transfer axes in order to machine the workpiece and a table which supports the workpiece, the plurality of transfer devices including a swinging device which swings the tool in a direction of a swinging transfer axis which is centered on a first axis extending in a specific direction and a rotating device which relatively rotates the swinging device and the tool with respect to the table in a direction of a rotational transfer axis centered on a second axis extending in a direction which is perpendicular to the first axis, the numerical control device comprising: a storage unit which stores a machining program which instructs machining of the workpiece; a path derivation unit which reads the machining program stored in the storage unit and obtains a tip path and a midair path based on the machining program which has been read, the tip path representing a movement of a tip point of the tool during machining of the workpiece by a position coordinate of the tip point in a reference coordinate system and an intervening variable, the reference coordinate system being fixed on the table and including a specific plane perpendicular to the second axis, the intervening variable being an integrated length of a locus of a movement of the tool, the midair path representing a movement of a midair point by a position coordinate of the midair point in the reference coordinate system and the intervening variable, the midair point being a point which is separated from the tip point by a certain distance toward a base end side of the tool along an axis of the tool; a posture adjustment information derivation unit which performs obtaining, across all intervals of the tip path and the midair path, a projection tool axis vector that is a projection on the specific plane of a tool axis vector extending from the tip point on the tip path obtained by the path derivation unit toward the midair point on the midair path which corresponds to the tip point, specifying a posture adjustment location which is a location where a variation rate of a direction of the projection tool axis vector with respect to an increase of the intervening variable exceeds a certain variation rate among the tip path and the midair path, setting specific intervals before and after the specified posture adjustment location as a posture adjustment interval, and obtaining posture adjustment information for adjusting a posture of the tool in the posture adjustment interval so that a variation of the direction of the projection tool axis vector in the set posture adjustment interval becomes more gradual; an intervening variable time function derivation unit which obtains an intervening variable time function based on acceleration/deceleration conditions including an allowable acceleration of transfer of the transfer object for each transfer axis when moving the transfer object, the tip path and the midair path derived by the path derivation unit, and the posture adjustment information obtained by the posture adjustment information derivation unit, the intervening variable time function representing a variation in the intervening variable with respect to a lapse of a reference time; a transfer command derivation unit which performs obtaining a position coordinate of the tip point and the tool axis vector at each time point at every unit time of the reference time based on the tip path and the midair path derived by the path derivation unit, the intervening variable time function obtained by the intervening variable time function derivation unit, and the posture adjustment information obtained by the posture adjustment information derivation unit, obtaining a transfer amount per unit time of the transfer object in each transfer axis direction for moving the transfer object so that the tip point of the tool passes the obtained position coordinate of the tip point at each time point and that the tool axis vector of the tool matches the obtained tool axis vector at each time point, and setting the obtained transfer amount per unit time in each transfer axis direction as a transfer command in each transfer axis direction; and a control unit which outputs, to each transfer device, the transfer command in each transfer axis direction which corresponds to each transfer device among the transfer commands in the respective transfer axis directions obtained by the transfer command derivation unit to cause each transfer device to transfer the transfer object in accordance with the transfer command outputted to the transfer device, wherein: the transfer command derivation unit obtains the intervening variable corresponding to each time point based on the intervening variable time function obtained by the intervening variable time function derivation unit; with respect to an intervening variable within the posture adjustment interval among the obtained intervening variables of the respective time points, the transfer command derivation unit obtains a position coordinate of the tip point on the tip path corresponding to the intervening variable and a position coordinate of the midair point on the midair path corresponding to the intervening variable, adjusts the obtained position coordinate of the midair point based on the posture adjustment information so that a variation in the direction of the projection tool axis vector becomes more gradual, and obtains a tool axis vector extending from the obtained tip point to the adjusted midair point; while with respect to an intervening variable outside of the posture adjustment interval among the obtained intervening variables of the respective time points, the transfer command derivation unit obtains a position coordinate of the tip point on the tip path corresponding to the intervening variable and a tool axis vector extending from the tip point toward the midair point on the midair path corresponding to the intervening variable, and sets the obtained position coordinate of the tip point and the obtained tool axis vector as the position coordinate of the tip point and the tool axis vector at each time point.

With this numerical control device, since the posture adjustment information derivation unit obtains posture adjustment information for adjusting a posture of the tool so that a variation of a direction of a projection tool axis vector becomes gradual in a posture adjustment interval before and after a posture adjustment location at which the variation of the direction of the projection tool axis vector with respect to an increase in an intervening variable exceeds a constant variation rate, and the transfer command derivation unit adjusts a position coordinate of a midair point corresponding to the intervening variable in the posture adjustment interval based on posture adjustment information so that the variation of the direction of the projection tool axis vector becomes gradual, obtains a tool axis vector extending from a tip point corresponding to the intervening variable in the posture adjustment interval toward the adjusted midair point, and derives a transfer command based on the obtained tool axis vector with respect to within the posture adjustment interval, a direction of the projection tool axis vector can be prevented from suddenly varying at the posture adjustment location. In addition, since the direction of the projection tool axis vector corresponds to the direction of a swinging transfer axis, according to the numerical control device, the rotating device can be prevented from suddenly rotating the tool and the swinging device relative to the table in the rotational transfer axis direction and, as a result, a decline in machining accuracy of a workpiece and an occurrence of a mechanical shock attributable to such a sudden rotation can be suppressed. Furthermore, with the numerical control device, since the transfer command derivation unit obtains a position coordinate of a tip point corresponding to the intervening variable in the posture adjustment interval on a tip path, adjusts a position coordinate of a midair point corresponding to the intervening variable in the posture adjustment interval based on posture adjustment information so that the variation of the direction of the projection tool axis vector becomes gradual, obtains a tool axis vector extending from the obtained tip point toward the adjusted midair point, and derives a transfer command based on the obtained tool axis vector with respect to within the posture adjustment interval, even after an adjustment is performed so that the variation of the direction of the projection tool axis vector in the posture adjustment interval becomes gradual, the posture of the tool can be suppressed from deflecting in a direction perpendicular to a curved surface connecting respective tip points on the tip path and respective midair points on the midair path corresponding to the respective tip points. As a result, a decline in machining accuracy of a workpiece can be similarly suppressed.

In the numerical control device, when the posture adjustment location includes an intersection at which a locus traced by the tip path and a locus traced by the midair path intersect one another as seen from a direction perpendicular to the specific plane, the posture adjustment information derivation unit favorably obtains the posture adjustment information satisfying a condition that the tip point of the tool is positioned at a point on the tip path corresponding to the intersection and the midair point of the tool is positioned at a point on the midair path corresponding to the intersection at the intervening variable corresponding to the intersection.

According to this configuration, in particular, the tool can be caused to assume a posture at which the tip point of the tool and a midair point overlap each other as seen from a direction perpendicular to the specific plane or, in other words, a posture which makes the tool axis vector perpendicular to the specific plane when passing an intersection at which a locus traced by a tip path and a locus traced by a midair path intersect one another as seen from a direction perpendicular to the specific plane, and effectively prevents the tool and the swinging device from suddenly rotating relative to the table when passing the intersection. Specifically, if the midair point is at a position deviated from a point corresponding to the intersection on the midair path when the tip point is positioned at a point corresponding to the intersection on the tip path, since a projection tool axis vector that is a projection of the tool axis vector on the specific plane always has a direction before and after the intersection, the tool and the swinging device are rotated in the rotational transfer axis direction in accordance with a variation of the direction. Therefore, when an operation in which the tip point of the tool and the midair point approach each other as the points approach the intersection and separate from each other after the points pass the intersection as seen from a direction perpendicular to the specific plane, a sudden rotation of the tool and the swinging device occurs. On the other hand, by having the tool assume a posture that makes the tool axis vector perpendicular to the specific plane at the intersection as in the case of the present configuration, an operation in which a tip point and a midair point approach each other as the points approach the intersection and separate from each other after the points pass the intersection as seen from a direction perpendicular to the specific plane can be realized by varying an inclination of the tool in a swinging transfer axis direction in a reverse direction when passing the intersection and, as a result, a sudden rotation of the tool and the swinging device in the rotational transfer axis direction when passing the intersection can be prevented.

In the numerical control device, the posture adjustment information derivation unit may obtain a projection tip path and a projection midair path, the projection tip path being a projection, on the specific plane, of the tip path obtained by the path derivation unit, the projection midair path being a projection, on the specific plane, of the midair path obtained by the path derivation unit; and the posture adjustment information derivation unit may derive, as the posture adjustment information, a direction specification function defining a relationship between a direction specifying angle and the intervening variable in the posture adjustment interval so that the direction specifying angle varies at an equal rate from a start point to an end point of the posture adjustment interval, the direction specifying angle being an angle formed between a control line and a reference direction on the specific plane, the control line being a straight line passing through a point on the projection tip path and a point on the projection midair path corresponding to the point on the projection tip path; and the transfer command derivation unit may obtain the direction specifying angle corresponding to the intervening variable in the posture adjustment interval based on the direction specification function derived by the posture adjustment information derivation unit; the transfer command derivation unit may specify an intersection between a straight line and the projection midair path, the straight line passing a point on the projection tip path corresponding to the intervening variable and being configured that an angle between the straight line and the reference direction is consistent with the obtained direction specifying angle; and the transfer command derivation unit may derive a position coordinate of a point on the midair path corresponding to the specified intersection as a position coordinate of the adjusted midair point.

According to this configuration, since a direction specifying angle corresponding to each intervening variable within the posture adjustment interval is obtained so that the direction specifying angle varies at an equal rate in the posture adjustment interval and a tool axis vector is obtained for which a positional relationship of a midair point with respect to a tip point has been adjusted based on the direction specifying angle, a transfer command is obtained based on the tool axis vector, and by having each transfer device transfer the transfer object in accordance with the transfer command, a variation of rotational angles of the table, and the tool and the swinging device which are relatively rotated by the rotating device can be directly adjusted to a gradual variation. Therefore, compared to a case of indirectly adjusting a variation in rotational angles of the tool and the swinging device with respect to the table to a gradual variation by adjusting a position coordinate of a midair point with respect to a tip point without obtaining a direction specifying angle, the variation in rotational angles of the tool and the swinging device can be made gradual in a reliable manner.

In this case, when a singular point at which the tool axis vector becomes perpendicular to the specific plane is included in the posture adjustment location, favorably, the transfer command derivation unit obtains, based on the direction specification function, the direction specifying angle corresponding to the intervening variable of the singular point, and the transfer command derivation unit obtains a transfer amount of the transfer object per unit time in the rotational transfer axis direction using the obtained direction specifying angle as a position coordinate in the rotational transfer axis direction corresponding to the intervening variable of the singular point.

According to this configuration, a direction of the projection tool axis vector in the posture adjustment interval can be gradually varied while resolving an indeterminate state of a coordinate in the rotational transfer axis direction at the singular point. Specifically, at a singular point at which the tool axis vector becomes perpendicular to the specific plane, an indeterminate state is created in which a position coordinate is not uniquely determined with respect to a rotational transfer axis direction around an axis perpendicular to the specific plane. In comparison, in the present configuration, since a direction specifying angle obtained from the direction specification function with respect to an intervening variable of the singular point is used as a position coordinate in the rotational transfer axis direction at the singular point, the position coordinate in the rotational transfer axis direction is uniquely determined at the singular point and an indeterminate state can be resolved. Furthermore, since the direction specifying angle of the singular point is obtained from a direction specification function which causes the direction specifying angle to vary at an equal rate in a posture adjustment interval, a condition of gradually varying a direction of the projection tool axis vector in the posture adjustment interval is satisfied. Therefore, in the present configuration, a direction of the tool axis vector in the posture adjustment interval can be gradually varied while resolving an indeterminate state of a position coordinate in the rotational transfer axis direction at the singular point.

In the numerical control device, the posture adjustment information derivation unit may derive, as the posture adjustment information, a tip-midair correspondence relationship which defines a correlation between an arbitrary intervening variable and a midair point specifying intervening variable so as to satisfy a condition that a travel distance along the tip path from a point corresponding to a start point of the posture adjustment interval among the tip path to the arbitrary point corresponding to the arbitrary intervening variable in the posture adjustment interval and a travel distance along the midair path from a point corresponding to the start point of the posture adjustment interval among the midair path to a prescribed point on the midair path to be associated with the arbitrary point on the tip path are maintained at a constant ratio, the midair point specifying intervening variable being an intervening variable for specifying the prescribed point on the midair path; and the transfer command derivation unit may obtain the midair point specifying intervening variable satisfying the tip-midair correspondence relationship with respect to a specific intervening variable in the posture adjustment interval with respect to the tip path, the tip-midair correspondence relationship being derived by the posture adjustment information derivation unit; and the transfer command derivation unit derives, as a position coordinate of the adjusted midair point, a position coordinate of a point on the midair path corresponding to the obtained midair point specifying intervening variable.

According to this configuration, in a posture adjustment interval, the tip point of the tool and the midair point can be moved in a state where a travel distance of the tip point along the tip path from a start point of the posture adjustment interval and a travel distance of the midair point along the midair path from a start point of the posture adjustment interval are maintained at a constant ratio. Therefore, an occurrence of a posture variation of the tool in which a midair point that had lagged behind a tip point suddenly overtakes the tip point or a posture variation of the tool causing an opposite action can be prevented, and the rotating device can be prevented from significantly and suddenly rotating the tool and the swinging device relative to the table to realize such a posture variation of the tool.

In the numerical control device, favorably, the path derivation unit includes: a pre-interpolation path derivation unit which reads the machining program stored in the storage unit and which obtains a pre-interpolation tip path and a pre-interpolation midair path, the pre-interpolation tip path representing a movement of the tip point specified by the read machining program by a function of a position coordinate of the tip point in the reference coordinate system and the intervening variable, the pre-interpolation midair path representing a movement of the midair point specified by the read machining program by a function of a position coordinate of the midair point in the reference coordinate system and the intervening variable; and a path interpolation unit which obtains the tip path by locally interpolating the pre-interpolation tip path obtained by the pre-interpolation path derivation unit and which obtains the midair path by locally interpolating the pre-interpolation midair path obtained by the pre-interpolation path derivation unit, and wherein the path interpolation unit sets, as a tip path interpolation object point, at least one point of a point at which a variation of a primary differential value with respect to the intervening variable is continuous and a variation of a secondary differential value with respect to the intervening variable is discontinuous and a point at which a variation of a primary differential value with respect to the intervening variable is discontinuous on the pre-interpolation tip path obtained by the pre-interpolation path derivation unit; the path interpolation unit locally interpolates only a tip path interpolation interval so that a variation of the differential value which is discontinuous at the tip path interpolation object point becomes a continuous variation, the tip path interpolation interval being a specific interval before and after the tip path interpolation object point among the pre-interpolation tip path; the path interpolation unit sets, as a midair path interpolation object point, at least one point of a point at which a variation of a primary differential value with respect to the intervening variable is continuous and a variation of a secondary differential value with respect to the intervening variable is discontinuous and a point at which a variation of a primary differential value with respect to the intervening variable is discontinuous on the pre-interpolation midair path obtained by the pre-interpolation path derivation unit; and the path interpolation unit locally interpolates only a midair path interpolation interval so that a variation of the differential value which is discontinuous at the midair path interpolation object point becomes a continuous variation, the midair path interpolation interval being a specific interval before and after the midair path interpolation object point among the pre-interpolation midair path.

According to this configuration, a point at which velocity is discontinuous due to a discontinuous primary differential value with respect to an intervening variable on the pre-interpolation tip path and the pre-interpolation midair path can be interpolated so that the velocity becomes continuous, and a point at which acceleration is discontinuous due to a discontinuous secondary differential value with respect to an intervening variable on the pre-interpolation tip path and the pre-interpolation midair path can be interpolated so that the acceleration becomes continuous. Therefore, with respect to a location on the pre-interpolation tip path and the pre-interpolation midair path at which a differential value with respect to an intervening variable is discontinuous due to abnormal data or the like and, consequently, a sudden velocity variation or a sudden acceleration variation occurs, the sudden velocity variation or the sudden acceleration variation can be suppressed and an occurrence of a mechanical shock at the location can be suppressed. Moreover, with this configuration, a location at which a differential value is discontinuous among the pre-interpolation tip path and the pre-interpolation midair path can be interpolated and a factor of mechanical shock can be removed from the paths before the transfer command derivation unit derives a transfer command for each transfer axis. Therefore, it is no longer necessary to perform acceleration/deceleration processing after the transfer command derivation unit derives a transfer command in order to interpolate a location which may be a factor of mechanical shock among the transfer command.

In the numerical control device, favorably, the storage unit stores workpiece placement information which describes a relative position and a relative inclination of a workpiece coordinate system with respect to the reference coordinate system, the workpiece coordinate system being fixed to a workpiece placed on the table, the machining program stored in the storage unit includes a workpiece coordinate system tool path which represents a movement of the tool in the workpiece coordinate system during machining of the workpiece, and the path derivation unit reads the workpiece coordinate system tool path included in the machining program, derives a reference coordinate system tool path by transforming the read workpiece coordinate system tool path into a path on the reference coordinate system based on the workpiece placement information, and derives the tip path and the midair path based on the derived reference coordinate system tool path.

According to this configuration, even if the workpiece is placed on the table in a posture at which the workpiece coordinate system is inclined with respect to the reference coordinate system, a workpiece coordinate system tool path can be transformed into a reference coordinate system tool path and the tip path and the midair path can be obtained from the reference coordinate system tool path. Therefore, by performing specification of the posture adjustment interval, derivation of the posture adjustment information, derivation of the intervening variable time function, and derivation of the transfer command based on the obtained tip path and midair path and having the transfer devices move the transfer object in accordance with the derived transfer command, a position of the posture adjustment location in accordance with the posture of the workpiece can be accurately specified even if the workpiece is inclined on the table and a relative sudden rotation of the tool and the table in an operation in a vicinity of the posture adjustment location can be prevented.

As shown, according to the embodiment described above, a relative sudden rotation of a tool and a table can be prevented and a decline in machining accuracy of a workpiece and an occurrence of a mechanical shock can be suppressed even when a machining program includes a portion instructing a movement of a transfer object that causes a sudden variation in a direction of a projection tool axis vector.

## Claims

1. A numerical control device provided in a machine tool including a plurality of transfer devices which move a transfer object which is a workpiece or a tool for machining the workpiece along a plurality of transfer axes in order to machine the workpiece and a table which supports the workpiece, the plurality of transfer devices including a swinging device which swings the tool in a direction of a swinging transfer axis which is centered on a first axis extending in a specific direction and a rotating device which relatively rotates the swinging device and the tool with respect to the table in a direction of a rotational transfer axis centered on a second axis extending in a direction which is perpendicular to the first axis, the numerical control device comprising:

   a storage unit which stores a machining program which instructs machining of the workpiece;
   a path derivation unit which reads the machining program stored in the storage unit and obtains a tip path and a midair path based on the machining program which has been read, the tip path representing a movement of a tip point of the tool during machining of the workpiece by a position coordinate of the tip point in a reference coordinate system and an intervening variable, the reference coordinate system being fixed on the table and including a specific plane perpendicular to the second axis, the intervening variable being an integrated length of a locus of a movement of the tool, the midair path representing a movement of a midair point by a position coordinate of the midair point in the reference coordinate system and the intervening variable, the midair point being a point which is separated from the tip point by a certain distance toward a base end side of the tool along an axis of the tool;
   a posture adjustment information derivation unit which performs obtaining, across all intervals of the tip path and the midair path, a projection tool axis vector that is a projection on the specific plane of a tool axis vector extending from the tip point on the tip path obtained by the path derivation unit toward the midair point on the midair path which corresponds to the tip point, specifying a posture adjustment location which is a location where a variation rate of a direction of the projection tool axis vector with respect to an increase of the intervening variable exceeds a certain variation rate among the tip path and the midair path, setting specific intervals before and after the specified posture adjustment location as a posture adjustment interval, and obtaining posture adjustment information for adjusting a posture of the tool in the posture adjustment interval so that a variation of the direction of the projection tool axis vector in the set posture adjustment interval becomes more gradual;
   an intervening variable time function derivation unit which obtains an intervening variable time function based on acceleration/deceleration conditions including an allowable acceleration of transfer of the transfer object for each transfer axis when moving the transfer object, the tip path and the midair path derived by the path derivation unit, and the posture adjustment information obtained by the posture adjustment information derivation unit, the intervening variable time function representing a variation in the intervening variable with respect to a lapse of a reference time;
   a transfer command derivation unit which performs obtaining a position coordinate of the tip point and the tool axis vector at each time point at every unit time of the reference time based on the tip path and the midair path derived by the path derivation unit, the intervening variable time function obtained by the intervening variable time function derivation unit, and the posture adjustment information obtained by the posture adjustment information derivation unit, obtaining a transfer amount per unit time of the transfer object in each transfer axis direction for moving the transfer object so that the tip point of the tool passes the obtained position coordinate of the tip point at each time point and that the tool axis vector of the tool matches the obtained tool axis vector at each time point, and setting the obtained transfer amount per unit time in each transfer axis direction as a transfer command in each transfer axis direction; and

a control unit which outputs, to each transfer device, the transfer command in each transfer axis direction which corresponds to each transfer device among the transfer commands in the respective transfer axis directions obtained by the transfer command derivation unit to cause each transfer device to transfer the transfer object in accordance with the transfer command outputted to the transfer device, wherein:

the transfer command derivation unit obtains the intervening variable corresponding to each time point based on the intervening variable time function obtained by the intervening variable time function derivation unit; with respect to an intervening variable within the posture adjustment interval among the obtained intervening variables of the respective time points, the transfer command derivation unit obtains a position coordinate of the tip point on the tip path corresponding to the intervening variable and a position coordinate of the midair point on the midair path corresponding to the intervening variable, adjusts the obtained position coordinate of the midair point based on the posture adjustment information so that a variation in the direction of the projection tool axis vector becomes more gradual, and obtains a tool axis vector extending from the obtained tip point to the adjusted midair point; while with respect to an intervening variable outside of the posture adjustment interval among the obtained intervening variables of the respective time points, the transfer command derivation unit obtains a position coordinate of the tip point on the tip path corresponding to the intervening variable and a tool axis vector extending from the tip point toward the midair point on the midair path corresponding to the intervening variable, and sets the obtained position coordinate of the tip point and the obtained tool axis vector as the position coordinate of the tip point and the tool axis vector at each time point.

2. The numerical control device according to claim 1, wherein
   when the posture adjustment location includes an intersection at which a locus traced by the tip path and a locus traced by the midair path intersect one another as seen from a direction perpendicular to the specific plane, the posture adjustment information derivation unit obtains the posture adjustment information satisfying a condition that the tip point of the tool is positioned at a point on the tip path corresponding to the intersection and the midair point of the tool is positioned at a point on the midair path corresponding to the intersection at the intervening variable corresponding to the intersection.

3. The numerical control device according to claim 1 or 2, wherein
   the posture adjustment information derivation unit obtains a projection tip path and a projection midair path, the projection tip path being a projection, on the specific plane, of the tip path obtained by the path derivation unit, the projection midair path being a projection, on the specific plane, of the midair path obtained by the path derivation unit; and the posture adjustment information derivation unit derives, as the posture adjustment information, a direction specification function defining a relationship between a direction specifying angle and the intervening variable in the posture adjustment interval so that the direction specifying angle varies at an equal rate from a start point to an end point of the posture adjustment interval, the direction specifying angle being an angle formed between a control line and a reference direction on the specific plane, the control line being a straight line passing through a point on the projection tip path and a point on the projection midair path corresponding to the point on the projection tip path; and the transfer command derivation unit obtains the direction specifying angle corresponding to the intervening variable in the posture adjustment interval based on the direction specification function derived by the posture adjustment information derivation unit; the transfer command derivation unit specifies an intersection between a straight line and the projection midair path, the straight line passing a point on the projection tip path corresponding to the intervening variable and being configured that an angle between the straight line and the reference direction is consistent with the obtained direction specifying angle; and the transfer command derivation unit derives a position coordinate of a point on the midair path corresponding to the specified intersection as a position coordinate of the adjusted midair point.

4. The numerical control device according to claim 3, wherein
   when a singular point at which the tool axis vector becomes perpendicular to the specific plane is included in the posture adjustment location, the transfer command derivation unit obtains, based on the direction specification function, the direction specifying angle corresponding to the intervening variable of the singular point, and the transfer command derivation unit obtains a transfer amount of the transfer object per unit time in the rotational transfer axis direction using the obtained direction specifying angle as a position coordinate in the rotational transfer axis direction corresponding to the intervening variable of the singular point.

5. The numerical control device according to claim 1 or 2, wherein
the posture adjustment information derivation unit derives, as the posture adjustment information, a tip-midair correspondence relationship which defines a correlation between an arbitrary intervening variable and a midair point specifying intervening variable so as to satisfy a condition that a travel distance along the tip path from a point corresponding to a start point of the posture adjustment interval among the tip path to the arbitrary point corresponding to the arbitrary intervening variable in the posture adjustment interval and a travel distance along the midair path from a point corresponding to the start point of the posture adjustment interval among the midair path to a prescribed point on the midair path to be associated with the arbitrary point on the tip path are maintained at a constant ratio, the midair point specifying intervening variable being an intervening variable for specifying the prescribed point on the midair path; and
the transfer command derivation unit obtains the midair point specifying intervening variable satisfying the tip-midair correspondence relationship with respect to a specific intervening variable in the posture adjustment interval with respect to the tip path, the tip-midair correspondence relationship being derived by the posture adjustment information derivation unit; and the transfer command derivation unit derives, as a position coordinate of the adjusted midair point, a position coordinate of a point on the midair path corresponding to the obtained midair point specifying intervening variable.

6. The numerical control device according to any one of claims 1 to 5, wherein
the path derivation unit includes: a pre-interpolation path derivation unit which reads the machining program stored in the storage unit and which obtains a pre-interpolation tip path and a pre-interpolation midair path, the pre-interpolation tip path representing a movement of the tip point specified by the read machining program by a function of a position coordinate of the tip point in the reference coordinate system and the intervening variable, the pre-interpolation midair path representing a movement of the midair point specified by the read machining program by a function of a position coordinate of the midair point in the reference coordinate system and the intervening variable; and a path interpolation unit which obtains the tip path by locally interpolating the pre-interpolation tip path obtained by the pre-interpolation path derivation unit and which obtains the midair path by locally interpolating the pre-interpolation midair path obtained by the pre-interpolation path derivation unit, and wherein
the path interpolation unit sets, as a tip path interpolation object point, at least one point of a point at which a variation of a primary differential value with respect to the intervening variable is continuous and a variation of a secondary differential value with respect to the intervening variable is discontinuous and a point at which a variation of a primary differential value with respect to the intervening variable is discontinuous on the pre-interpolation tip path obtained by the pre-interpolation path derivation unit; the path interpolation unit locally interpolates only a tip path interpolation interval so that a variation of the differential value which is discontinuous at the tip path interpolation object point becomes a continuous variation, the tip path interpolation interval being a specific interval before and after the tip path interpolation object point among the pre-interpolation tip path; the path interpolation unit sets, as a midair path interpolation object point, at least one point of a point at which a variation of a primary differential value with respect to the intervening variable is continuous and a variation of a secondary differential value with respect to the intervening variable is discontinuous and a point at which a variation of a primary differential value with respect to the intervening variable is discontinuous on the pre-interpolation midair path obtained by the pre-interpolation path derivation unit; and the path interpolation unit locally interpolates only a midair path interpolation interval so that a variation of the differential value which is discontinuous at the midair path interpolation object point becomes a continuous variation, the midair path interpolation interval being a specific interval before and after the midair path interpolation object point among the pre-interpolation midair path.

7. The numerical control device according to any one of claims 1 to 6, wherein
the storage unit stores workpiece placement information which describes a relative position and a relative inclination of a workpiece coordinate system with respect to the reference coordinate system, the workpiece coordinate system being fixed to a workpiece placed on the table,
the machining program stored in the storage unit includes a workpiece coordinate system tool path which represents a movement of the tool in the workpiece coordinate system during machining of the workpiece, and
the path derivation unit reads the workpiece coordinate system tool path included in the machining program, derives a reference coordinate system tool path by transforming the read workpiece coordinate system tool path into a path on the reference coordinate system based on the workpiece placement information, and derives the tip path and the midair path based on the derived reference coordinate system tool path.

# FIG. 1

# FIG.2

NUMERICAL CONTROL DEVICE — 2

STORAGE UNIT — 4

OPERATION PROCESSING UNIT — 6

PATH DERIVATION UNIT — 12

PRE-INTERPOLATION PATH DERIVATION UNIT — 13

PATH INTERPOLATION UNIT — 14

14a — SMOOTH INTERPOLATION UNIT

14b — PATH LOCAL FILTER

14c — LOCAL INTERPOLATION UNIT

14d — ERROR CORRECTION UNIT

16 — POSTURE ADJUSTMENT INFORMATION DERIVATION UNIT

18 — INTERVENING VARIABLE TIME FUNCTION DERIVATION UNIT

20 — TRANSFER COMMAND DERIVATION UNIT

22 — CONTROL UNIT

MEMORY — 5

102 — TABLE TRANSFER DEVICE

110b — SWINGING SUPPORT TRANSFER UNIT

112b — ROTATING SUPPORT TRANSFER UNIT

114b — RAM TRANSFER UNIT

116b — SADDLE TRANSFER UNIT

# FIG. 3

```
        ┌─────────────┐
        │    START    │
        └─────────────┘
               │
               ▼                            S1
┌───────────────────────────────────────┐
│        READ MACHINING PROGRAM          │
└───────────────────────────────────────┘
               │
               ▼                            S2
┌───────────────────────────────────────┐
│       DERIVE PRE-INTERPOLATION PATH    │
└───────────────────────────────────────┘
               │
               ▼                            S3
┌───────────────────────────────────────┐
│    PERFORM BLOCK SMOOTH INTERPOLATION  │
└───────────────────────────────────────┘
               │
               ▼                            S4
┌───────────────────────────────────────┐
│       PERFORM LOCAL INTERPOLATION      │
└───────────────────────────────────────┘
               │
               ▼                            S5
┌───────────────────────────────────────┐
│  DERIVE POSTURE ADJUSTMENT INFORMATION │
└───────────────────────────────────────┘
               │
               ▼                            S6
┌───────────────────────────────────────┐
│ DERIVE INTERVENING VARIABLE TIME FUNCTION │
└───────────────────────────────────────┘
               │
               ▼                            S7
┌───────────────────────────────────────┐
│         DERIVE REFERENCE TIME,         │
│     PERFORM PULSE INTERPOLATION,       │
│         AND OUTPUT PULSE               │
└───────────────────────────────────────┘
               │
               ▼
        ┌─────────────┐
        │     END     │
        └─────────────┘
```

FIG.4

START

S12
IS THERE INTERPOLATION OBJECT POINT FOR WHICH INTERPOLATION INTERVAL WIDTH HAS NOT BEEN CALCULATED ? — NO

YES

S14
CALCULATE DISTRIBUTED INTERVAL WIDTH AND INTERPOLATION INTERVAL WIDTH

S16
DO INTERPOLATION INTERVALS OVERLAP ? — NO

YES

S18
COUPLE OVERLAPPING INTERPOLATION INTERVALS

S20
EXTRACT INTERPOLATION INTERVAL

S22
DERIVE ADJUSTMENT INTERVAL

S24
INITIALLY SET POST-INTERPOLATION INTEGRATED FUNCTION

S26
EXTRACT INTERPOLATION BLOCK

S28
CALCULATE POST-INTERPOLATION FUNCTION

S30
ADD POST-INTERPOLATION FUNCTION TO POST-INTERPOLATION INTEGRATED FUNCTION

S32
INTERPOLATION PROCESSING OF ALL INTERPOLATION BLOCKS COMPLETED ? — NO

YES

S34
DERIVE ERROR-HAVING INTERPOLATION PATH

S36
DERIVE ERROR CORRECTION PATH

S38
CORRECT ERROR-HAVING INTERPOLATION PATH, AND SET CORRECTED INTERPOLATION PATH AS INTERPOLATION INTERVAL OF POST-LOCAL INTERPOLATION PATH

S40
LOCAL INTERPOLATION PROCESSING OF ALL INTERPOLATION INTERVALS COMPLETED ? — NO

YES

END

40

# FIG. 5

```
                    START

                      │
                      ▼                         S42
        ┌──────────────────────────────┐
        │  EXTRACT POSTURE ADJUSTMENT   │
        │   INTERVAL TOGETHER WITH      │
        │   CONNECTION CONDITION AND    │
        │   INTERVAL TYPE OF INTERVAL,  │
        │   AND REGISTER EXTRACTED      │
        │    INFORMATION IN MEMORY      │
        └──────────────────────────────┘
                      │
                      ▼
```

$S44$ — IS THERE INTERVAL FOR WHICH BOTH $C(s)$ AND $S(s)$ HAVE NOT BEEN SET? — NO → END

YES

$S46$ — IS INTERVAL TYPE OF INTERVAL FOR WHICH BOTH $C(s)$ AND $S(s)$ HAVE NOT BEEN SET INTERVAL TYPE 1? — NO → 

YES

S48
DERIVE DIRECTION SPECIFICATION FUNCTION $C(s)$ AND REGISTER FUNCTION $C(s)$ IN MEMORY

S52
DERIVE TIP-MIDAIR CORRESPONDENCE ADJUSTMENT FUNCTION $S(s)$ AND REGISTER FUNCTION $S(s)$ IN MEMORY

# FIG. 6

```
                    ( START )
                        │
                        ▼               ┌─ S56
        ┌──────────────────────────────────────┐
        │ INITIALLY SET T AND SET PRESENT        │
        │ COORDINATE POSITION FOR EACH           │
        │ TRANSFER AXIS AS old p[ ]               │
        └──────────────────────────────────────┘
                        │               ┌─ S58
                        ▼
        ┌──────────────────────────────────────┐
        │ DERIVE INTERVENING VARIABLE POSITION s │
        │ CORRESPONDING TO INITIALLY SET T       │
        └──────────────────────────────────────┘
                        │               ┌─ S60
                        ▼
        ┌──────────────────────────────────────┐
        │ DERIVE POSITION COORDINATE             │
        │ new p[ ] FOR EACH TRANSFER AXIS        │
        └──────────────────────────────────────┘
                        │               ┌─ S62
                        ▼
        ┌──────────────────────────────────────┐
        │           old p[ ]=new p[ ]            │
        └──────────────────────────────────────┘
                        │               ┌─ S64
                        ▼
        ┌──────────────────────────────────────┐
        │     DERIVE NEW T BY ADDITION OF dT     │
        └──────────────────────────────────────┘
                        │               ┌─ S66
                        ▼
        ┌──────────────────────────────────────┐
        │ DERIVE INTERVENING VARIABLE            │
        │ POSITION s CORRESPONDING TO NEW T      │
        └──────────────────────────────────────┘
                        │               ┌─ S68
                        ▼
        ┌──────────────────────────────────────┐
        │ DERIVE POSITION COORDINATE             │
        │ new p[ ] FOR EACH TRANSFER AXIS        │
        └──────────────────────────────────────┘
                        │               ┌─ S70
                        ▼
        ┌──────────────────────────────────────┐
        │        CALCULATE COMMAND PULSE         │
        └──────────────────────────────────────┘
                        │               ┌─ S72
                        ▼
        ┌──────────────────────────────────────┐
        │         OUTPUT COMMAND PULSE           │
        └──────────────────────────────────────┘
                        │
                        ▼
     NO         ◇ SHUTDOWN? ◇  ┌─ S74
                        │
                      YES
                        ▼
                    (  END  )
```

# FIG.7

START

**S76** DOES INTERVENING VARIABLE POSITION s DERIVED IN STEP S58 CORRESPOND TO WITHIN INTERVAL REGISTERED IN MEMORY ?

NO → 

**S94** SET INTERVENING VARIABLE POSITION ss WITH RESPECT TO POST-LOCAL INTERPOLATION MIDAIR PATH AS POSITION EQUIVALENT TO INTERVENING VARIABLE POSITION s

YES

**S78** IS S(s) REGISTERED FOR INTERVAL TO WHICH INTERVENING VARIABLE POSITION s CORRESPONDS ?

YES →

**S88** OBTAIN INTERVENING VARIABLE POSITION ss WITH RESPECT TO POST-LOCAL INTERPOLATION MIDAIR PATH CORRESPONDING TO INTERVENING VARIABLE POSITION s BASED ON S(s)

NO

**S80** OBTAIN INTERVENING VARIABLE POSITION ss OF MIDAIR POINT ON POST-LOCAL INTERPOLATION MIDAIR PATH ADJUSTED BASED ON C(s) AS INTERVENING VARIABLE POSITION WITH RESPECT TO POST-LOCAL INTERPOLATION MIDAIR PATH CORRESPONDING TO INTERVENING VARIABLE POSITION s

**S90** IS C(s) REGISTERED WITH RESPECT TO INTERVAL THAT INCLUDES INTERVENING VARIABLE POSITION s ?

YES →

NO

**S82** SET ROTATIONAL AXIS COORDINATE CANDIDATE VALUE TO ANGLE CLOSEST TO old p[Ci] AMONG ANGLES OBTAINED BY C(s) ±n × 180 DEGREES

**S92** SET ROTATIONAL AXIS COORDINATE CANDIDATE VALUE TO ANGLE EQUIVALENT TO old p[Ci]

**S84** CALCULATE COORDINATE OF TIP POINT p(s) OF TOOL AND TOOL AXIS VECTOR EXTENDING FROM TIP POINT p(s) TO CORRESPONDING MIDAIR POINT P(ss)

**S86** CALCULATE POSITION COORDINATE new p[ ] FOR EACH TRANSFER AXIS

END

# FIG. 8

# FIG. 9

# FIG. 10

ADJUSTMENT INTERVAL

SINGLE COUPLED
INTERPOLATION INTERVAL

a                                                                    a

t[3]

t[5]

t[1] t[2]                    p3(s)        p5(s)   t[7]    t[8]

t[0]                                                   t[6]

p0(s)   p1(s)    p2(s)              p4(s)   p6(s)   p7(s)

t[4]

INTERPOLATION
INTERVAL OF t[2]

INTERPOLATION
INTERVAL OF t[3]

INTERPOLATION
INTERVAL OF t[4]

INTERPOLATION
INTERVAL OF t[5]

INTERPOLATION
INTERVAL OF t[6]

# FIG. 11

INTERVAL CORRESPONDING
TO INTERPOLATION BLOCK

t[i]-a    t[i]    t[i]+a        t[i+1]-a    t[i+1]    t[i+1]+a

pi'(s)

A=2a                      A=2a                s

## FIG. 12

INTERVAL CORRESPONDING
TO INTERPOLATION BLOCK

t[i]−a      t[i]    t[i+1]−a    t[i]+a     t[i+1]      t[i+1]+a

pi'(s)

s

A=2a

A=2a

## FIG. 13

INTERVAL CORRESPONDING
TO INTERPOLATION BLOCK

t[i]−a      t[i+1]−a     t[i]+a     t[i+1]+a

t[i]     t[i+1]

pi'(s)

s

A=2a

A=2a

## FIG. 14

TOOL AXIS VECTOR

POST-LOCAL
INTERPOLATION MIDAIR PATH

P(s0) P(s1) P(s2) P(s3) P(s4) P(s5)

p(s0) p(s1) p(s2) p(s3) p(s4) p(s5)

POST-LOCAL
INTERPOLATION TIP PATH

## FIG. 15

POST-LOCAL
INTERPOLATION MIDAIR PATH

z

y

x

POINT
CORRESPONDING
TO START POINT
OF POSTURE
ADJUSTMENT
INTERVAL

TOOL AXIS VECTOR

POINT
CORRESPONDING
TO END POINT
OF POSTURE
ADJUSTMENT
INTERVAL

TOOL AXIS VECTOR

POST-LOCAL
INTERPOLATION TIP PATH

# FIG. 16

CONTROL LINE

POINT CORRESPONDING TO
START POINT OF POSTURE
ADJUSTMENT INTERVAL

PROJECTION
MIDAIR PATH

PROJECTION TOOL
AXIS VECTOR

y

PROJECTION TIP PATH

x

POINT CORRESPONDING TO
END POINT OF POSTURE
ADJUSTMENT INTERVAL

CONTROL LINE

# FIG. 17

# FIG. 18

CONTROL LINE

PROJECTION TOOL
AXIS VECTOR

POINT CORRESPONDING
TO START POINT OF
POSTURE ADJUSTMENT
INTERVAL

PROJECTION
MIDAIR PATH

y

PROJECTION TIP PATH

START POINT-SIDE
INTERVAL
(INTERVAL TYPE 1)

x

INTERSECTION

END POINT-SIDE FIRST INTERVAL
(INTERVAL TYPE 1)

DIVIDING POINT

END POINT-SIDE SECOND
INTERVAL (INTERVAL TYPE 2)

PROJECTION TOOL
AXIS VECTOR

CONTROL LINE

POINT CORRESPONDING
TO END POINT OF
POSTURE ADJUSTMENT
INTERVAL

# FIG. 19

# FIG. 20

# FIG. 21

POINT CORRESPONDING TO
END POINT OF POSTURE
ADJUSTMENT
INTERVAL

PROJECTION TOOL
AXIS VECTOR

POINT CORRESPONDING
TO START POINT OF
POSTURE ADJUSTMENT
INTERVAL

PROJECTION
MIDAIR PATH

INTERVAL TYPE 1

PROJECTION TOOL
AXIS VECTOR

CONTROL LINE

SINGULAR POINT
CONTINUOUS
INTERVAL

CONTROL LINE

PROJECTION
TIP PATH

# FIG. 22

POINT CORRESPONDING TO
START POINT OF POSTURE
ADJUSTMENT
INTERVAL

PROJECTION
MIDAIR PATH

POINT CORRESPONDING TO
END POINT OF POSTURE
ADJUSTMENT
INTERVAL

START POINT-SIDE
INTERVAL
(INTERVAL TYPE 1)

END POINT-SIDE
INTERVAL
(INTERVAL TYPE 2)

PROJECTION TOOL
AXIS VECTOR

INTERMEDIATE
INTERVAL
(INTERVAL TYPE 1)

CONTROL LINE

SINGULAR POINT
CONTINUOUS
INTERVAL

PROJECTION TOOL
AXIS VECTOR

CONTROL LINE

PROJECTION
TIP PATH

FIRST
DIVIDING
POINT

SECOND
DIVIDING
POINT

# FIG. 23

# FIG. 24

# FIG. 25

# FIG. 26

(s2,f2,t2,a2)

FINAL POINT

ts6

ts7

TARGET POINT

ts5

(s1,f1,t1,a1)

# FIG. 27

(s2,f2,t2,a2)

FINAL POINT

ts9

TARGET POINT

ts8

(s1,f1,t1,a1)

## FIG. 28

(s2,f2,t2,a2)

ts12

TARGET POINT

ts11

FINAL POINT

ts10

(s1,f1,t1,a1)

## FIG. 29

(s2,f2)

FINAL POINT

TARGET POINT

ts13

(s1,f1,t1,a1)

# FIG. 30

(s2,f2,.....)

TARGET POINT

FINAL POINT

(s1,f1,t1,a1)

# FIG. 31

FINAL POINT

(s2,f2)

TARGET POINT

(s1,f1,t1,a1)

## INTERNATIONAL SEARCH REPORT

International application No.

PCT/JP2012/004802

### A. CLASSIFICATION OF SUBJECT MATTER
*G05B19/4103*(2006.01)i

According to International Patent Classification (IPC) or to both national classification and IPC

### B. FIELDS SEARCHED

Minimum documentation searched (classification system followed by classification symbols)
G05B19/18-19/46, B23Q15/00-15/28

Documentation searched other than minimum documentation to the extent that such documents are included in the fields searched

| | | |
|---|---|---|
| Jitsuyo Shinan Koho | 1922-1996 | Jitsuyo Shinan Toroku Koho  1996-2012 |
| Kokai Jitsuyo Shinan Koho | 1971-2012 | Toroku Jitsuyo Shinan Koho  1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-146176 A  (Fanuc Ltd.),<br>01 July 2010 (01.07.2010),<br>entire text; all drawings<br>(Family: none) | 1-7 |
| A | WO 2010/032284 A1  (Shin Nippon Koki Co., Ltd.),<br>25 March 2010 (25.03.2010),<br>entire text; all drawings<br>& EP 2336839 A1 | 1-7 |
| A | JP 2008-225825 A  (Shin Nippon Koki Co., Ltd.),<br>25 September 2008 (25.09.2008),<br>entire text; all drawings<br>(Family: none) | 1-7 |

[X] Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 16 October, 2012 (16.10.12) | 30 October, 2012 (30.10.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/004802

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-182157 A  (Shin Nippon Koki Co., Ltd.), 19 August 2010 (19.08.2010), entire text; all drawings (Family: none) | 1-7 |
| A | JP 2010-140312 A  (Fanuc Ltd.), 24 June 2010 (24.06.2010), entire text; all drawings (Family: none) | 1-7 |
| A | JP 2011-003176 A  (Fanuc Ltd.), 06 January 2011 (06.01.2011), entire text; all drawings (Family: none) | 1-7 |
| A | JP 2010-003018 A  (Fujitsu Ltd., Aisan Industry Co., Ltd.), 07 January 2010 (07.01.2010), entire text; all drawings (Family: none) | 1-7 |

Form PCT/ISA/210 (continuation of second sheet) (July 2009)

**EP 2 738 634 A1**

**Patent documents cited in the description**

- JP 2010146176 A